(19) Europäisches Patentamt
European Patent Office
Office européen des brevets

(11) EP 4 269 100 A1

(12) EUROPEAN PATENT APPLICATION
published in accordance with Art. 153(4) EPC

(43) Date of publication:
**01.11.2023 Bulletin 2023/44**

(21) Application number: **21915249.3**

(22) Date of filing: **24.12.2021**

(51) International Patent Classification (IPC):
***B32B 27/20*** *(2006.01)*

(52) Cooperative Patent Classification (CPC):
**B32B 27/20**

(86) International application number:
**PCT/JP2021/048325**

(87) International publication number:
**WO 2022/145389 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2020 JP 2020219263**

(71) Applicant: **Oji Holdings Corporation**
**Chuo-ku**
**Tokyo 104-0061 (JP)**

(72) Inventor: **FUSHIMI Hayato**
**Tokyo 104-0061 (JP)**

(74) Representative: **Godemeyer Blum Lenze Patentanwälte**
**Partnerschaft mbB - werkpatent**
**An den Gärten 7**
**51491 Overath (DE)**

# (54) LAMINATE AND METHOD OF MANUFACTURING LAMINATE

(57) It is an object of the present invention to provide a laminate having both a high elastic modulus and a low linear thermal expansion coefficient, and also having excellent design and durability. The present invention relates to a laminate having a fiber layer comprising cellulose fibers with a fiber width of 1000 nm or less, an adhesive layer, and a resin layer in this order, wherein the resin layer comprises an amorphous resin, and the adhesive layer comprises a polymer, and the glass transition temperature of the polymer is lower than 170°C.

[Figure 1]

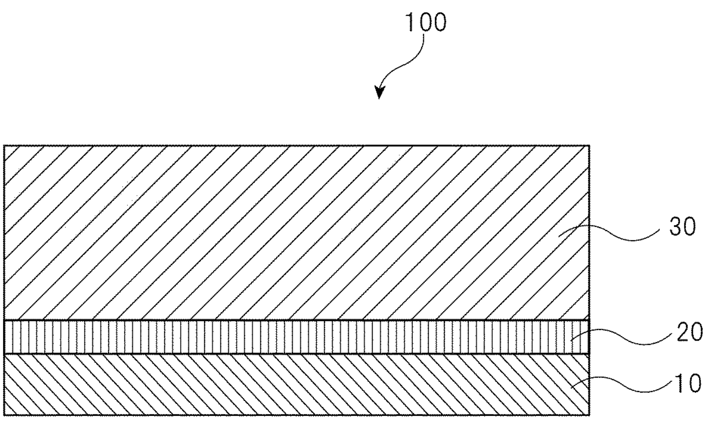


EP 4 269 100 A1

## Description

### Technical Field

The present invention relates to a laminate and a method for producing a laminate.

### Background Art

In recent years, because of enhanced awareness of alternatives to petroleum resources and environmental consciousness, there has been a focus on materials utilizing reproducible natural fibers. Among natural fibers, cellulose fibers having a fiber diameter of 10 μm or more and 50 μm or less, in particular, wood-derived cellulose fibers (pulp) have been widely used mainly as paper products so far.

Ultrafine cellulose fibers, which have a fiber diameter of 1 μm or less, have also been known as cellulose fibers. In addition, a sheet composed of such ultrafine cellulose fibers, and a composite sheet comprising an ultrafine cellulose fiber-containing sheet and a resin, have been developed. Since the contacts of fibers are increased in a sheet comprising ultrafine cellulose fibers or in a composite sheet, it has been known that strength and the like are significantly improved in the obtained sheet or composite sheet.

For example, Patent Documents 1 to 3 disclose a composite sheet in which an ultrafine cellulose fiber-containing layer and a resin layer are laminated on each other. Patent Document 1 discloses a laminate formed by laminating three layers on one another, namely, a surface plasma-treated base material, a layer consisting of ultrafine cellulose having a carboxy group that is allowed to come into contact with the treated surface, and a heat-sealable thermoplastic resin layer. Patent Documents 2 and 3 disclose a laminate comprising a polycarbonate resin layer and a cellulose fiber layer. Besides, these documents do not disclose specific conditions for a method of laminating an ultrafine cellulose fiber-containing layer and a resin layer on each other by hot pressing.

### Prior Art Documents

### Patent Documents

Patent Document 1: Japanese Patent Publication No. 2012-116043 A
Patent Document 2: Japanese Patent Publication No. 2010-023275 A
Patent Document 3: International Publication No. WO2017/126432

### Summary of Invention

### Object to be Solved by the Invention

With regard to a composite sheet comprising an ultrafine cellulose fiber-containing sheet and a resin layer, it is desired to laminate an ultrafine cellulose fiber-containing sheet and a resin layer on each other, so as to obtain a laminate exhibiting a high elastic modulus and a low linear thermal expansion coefficient. In addition, such a laminate is also required to have excellent design and durability in some cases.

Thus, the present inventors have conducted studies for the purpose of providing a laminate having both a high elastic modulus and a low linear thermal expansion coefficient, and also having excellent design and durability.

### Means for Solving the Object

As a result of intensive studies directed towards achieving the aforementioned object, the present inventors have found that, in a laminate having a fiber layer comprising ultrafine cellulose fibers and a resin layer comprising an amorphous resin, an adhesive layer is established between the fiber layer and the resin layer, and the glass transition temperature of a polymer constituting the adhesive layer is set to be lower than 170°C, so that a laminate having both a high elastic modulus and a low linear thermal expansion coefficient, and also being excellent in terms of design and durability, can be obtained.

[1] A laminate having a fiber layer comprising cellulose fibers with a fiber width of 1000 nm or less, an adhesive layer, and a resin layer in this order, wherein

the resin layer comprises an amorphous resin, and
the adhesive layer comprises a polymer, and the glass transition temperature of the polymer is lower than 170°C.

[2] The laminate according to [1], wherein the amorphous resin is a polycarbonate.
[3] The laminate according to [1] or [2], which has a thickness of 200 μm or more.
[4] The laminate according to any one of [1] to [3], wherein the polymer is a polycarbonate.
[5] The laminate according to any one of [1] to [4], which has a total light transmittance of 80% or more.
[6] The laminate according to any one of [1] to [5], which has a haze of 5% or less.
[7] The laminate according to any one of [1] to [6], which has a YI value of 15 or less.
[8] The laminate according to any one of [1] to [7], which has a bending elastic modulus of 2.3 GPa or more.
[9] The laminate according to any one of [1] to [8], which has a linear thermal expansion coefficient of 70 ppm/K or less.
[10] The laminate according to any one of [1] to [9], which further has an adhesive layer and a resin layer on the other surface of the fiber layer.
[11] The laminate according to [10], wherein the cellulose fibers are unevenly distributed in a region near the surface layer in the thickness direction of the laminate.
[12] The laminate according to [10], wherein the cellulose fibers are unevenly distributed in the central region in the thickness direction of the laminate.
[13] The laminate according to any one of [10] to [12], wherein the fiber layer is not exposed.
[14] A method for producing a laminate, comprising

laminating a fiber layer comprising cellulose fibers with a fiber width of 1000 nm or less, an adhesive layer, and a resin layer in this order, and then hot-pressing the laminated layers, wherein
the resin layer comprises an amorphous resin, and
the adhesive layer comprises a polymer, and the glass transition temperature of the polymer is lower than 170°C.

Advantageous Effects of Invention

According to the present invention, there can be provided a laminate having both a high elastic modulus and a low linear thermal expansion coefficient, and also having excellent design and durability.

Brief Description of Drawings

Figure 1 is a cross-sectional view illustrating one example of the configuration of a laminate.
Figure 2 is a cross-sectional view illustrating one example of the configuration of a laminate.
Figure 3 is a cross-sectional view illustrating one example of the configuration of a laminate.
Figure 4 is a cross-sectional view illustrating one example of the configuration of a laminate.
Figure 5 is a graph showing the relationship between the amount of NaOH added dropwise to a slurry containing cellulose fibers having phosphorus oxoacid groups and a pH value.
Figure 6 is a graph showing the relationship between the amount of NaOH added dropwise to a slurry containing cellulose fibers having carboxy groups and a pH value.
Figure 7 is a cross-sectional view illustrating one example of the configuration of a laminate.
Figure 8 is a cross-sectional view illustrating one example of the configuration of a laminate.

Embodiments of Carrying out the Invention

The present invention will be described in detail below. The constitutive elements of the present invention given below may be described based on some typical embodiments or specific examples. However, the present invention should not be limited to such embodiments.

(Laminate)

The present invention relates to a laminate having a fiber layer comprising cellulose fibers with a fiber width of 1000 nm or less, an adhesive layer, and a resin layer in this order. Herein, the resin layer comprises an amorphous resin, the adhesive layer comprises a polymer, and the glass transition temperature of the polymer is lower than 170°C.
Besides, in the present description, cellulose fibers having a fiber with of 1000 nm or less may be referred to as "ultrafine cellulose fibers" or "CNF" at times.

Since the laminate of the present invention has the above-described configuration, the present laminate has both a high elastic modulus (bending elastic modulus) and a low linear thermal expansion coefficient. Moreover, since the laminate of the present invention has the above-described configuration, the present laminate also has excellent design and durability.

The bending elastic modulus of the laminate of the present invention is preferably 2.3 GPa or more, more preferably 2.5 GPa or more, further preferably 3.0 GPa or more, still further preferably 3.5 GPa or more, and particularly preferably 4.0 GPa or more. Besides, the upper limit value of the bending elastic modulus of the present laminate is not particularly limited, and for example, it may be 50.0 GPa or less. Herein, the bending elastic modulus of the laminate is a value measured in accordance with JIS K 7171: 2016, under conditions of a distance between fulcrums of 64 mm and a deflection rate of 2 mm/min. Upon the measurement, a test piece of 80 mm long × 10 mm wide is used, and the test temperature is set to be 23°C. The bending elastic modulus is calculated from the inclination of a stress-strain curve with a strain between 0.0005 and 0.0025. A universal material testing machine can be used to measure the bending elastic modulus, and for example, Tensilon RTC-1250A manufactured by A & D Company, Limited can be obtained.

The linear thermal expansion coefficient of the laminate obtained by the production method of the present invention is preferably 70 ppm/K or less, more preferably 65 ppm/K or less, further preferably 60 ppm/K or less, still further preferably 55 ppm/K or less, and particularly preferably 50 ppm/K or less. Besides, the lower limit value of the linear thermal expansion coefficient of the present laminate is not particularly limited, and for example, it may be 5 ppm/K or more. Herein, the linear thermal expansion coefficient of the laminate is a value calculated by measuring the length change of a test piece of 50 mm long × 10 mm wide under conditions of the temperature range of 23 C to 90°C and a temperature increase rate of 5°C/min, and then dividing the length change in the temperature range of 30°C to 80°C by the temperature change. A thermomechanical analyzer can be used to measure the length change, and for example, TMA/SS6100 manufactured by Seiko Instruments, Inc. can be obtained.

The design of the laminate of the present invention can be evaluated to be favorable, when changes in appearance, such as coloration, foaming or deformation, are not generated. In addition, the durability of the laminate can be determined to be favorable, when no changes occur in the laminate even after the laminate is immersed in water for a long period of time or is placed under high temperature conditions for a long period of time. Specifically, when coloration such as whitening, deformation such as warpage, or foaming occurs in the laminate after the laminate is immersed in water for a long period of time or is placed under high temperature conditions for a long period of time, the durability of the laminate can be determined to be poor. On the other hand, when all of these changes do not occur, the durability of the laminate can be determined to be favorable.

The laminate of the present embodiment is also excellent in terms of transparency, and the yellowness thereof is suppressed to be low. Specifically, the haze of the laminate is preferably 5% or less, more preferably 4% or less, further preferably 3% or less, still further preferably 2% or less, and particularly preferably 1.5% or less. Besides, the haze of the laminate may also be 0%. Moreover, the yellowness index (YI value) of the laminate is preferably 40 or less, more preferably 30 or less, further preferably 20 or less, still further preferably 15 or less, and particularly preferably 10 or less. Besides, the yellowness index (YI value) of the laminate may also be 0. Besides, the haze of the laminate is a value measured in accordance with JIS K 7136: 2000, using a haze meter. The yellowness index (YI value) of the laminate is a value measured in accordance with JIS K 7373: 2006, using a color meter.

Moreover, the total light transmittance of the laminate is preferably 80% or more, and more preferably 85% or more. Besides, the upper limit value of the total light transmittance of the laminate is not particularly limited, and for example, it may be 100%. Herein, the total light transmittance of the laminate is a value measured, for example, in accordance with JIS K 7361-1: 1997, using a haze meter (manufactured by MURAKAMI COLOR RESEARCH LABORATORY Co., Ltd.; HM-150).

Figure 1 is a cross-sectional view illustrating one embodiment of the configuration of a laminate. As shown in Figure 1, a laminate 100 has a fiber layer 10, an adhesive layer 20, and a resin layer 30 in this order. Herein, the fiber layer 10, the adhesive layer 20, and the resin layer 30 are laminated on one another in this order, and individual layers are laminated, so that the layers are directly contacted with each other, successively. That is to say, the adhesive layer 20 is established between the fiber layer 10 and the resin layer 30, and is established, and the adhesive layer 20 is directly contacted with both of the fiber layer 10 and the resin layer 30.

The laminate of the present invention may further have an adhesive layer and a resin layer on the other surface of the fiber layer. Specifically, the laminate of the present invention may be a laminate having a resin layer, an adhesive layer, a fiber layer, an adhesive layer, and a resin layer in this order. In this case, a plurality of the resin layers may be resin layers of the same type, or may also be resin layers of different types. Moreover, a plurality of the adhesive layers may be adhesive layers of the same type, or may also be adhesive layers of different types.

Figure 2 is a cross-sectional view illustrating the configuration of the aforementioned laminate. In a laminate 100 shown in Figure 2, a resin layer 30, an adhesive layer 20, a fiber layer 10, an adhesive layer 20, and a resin layer 30 are laminated on one another in this order. That is to say, the adhesive layers 20 are established on both surfaces of the fiber layer 10, and the resin layers 30 are further laminated on these adhesive layers 20, so that the laminate 100

has a 5-layer configuration. Thus, the laminate 100 preferably has a configuration in which the adhesive layer 20 and the resin layer 30 are laminated on both surface of the fiber layer 10.

Figure 3 is a cross-sectional view illustrating another embodiment of the laminate. A laminate 100 shown in Figure 3 is in a state in which a fiber layer 10 is encapsulated in a resin component. Herein, the state in which the fiber layer 10 is encapsulated in a resin component means that any portion of the fiber layer 10 is not exposed on the surface and the circumference thereof is covered with the resin component. Besides, at least a portion of the resin component that encapsulates the fiber layer 10 is an amorphous resin that constitutes a resin layer 30. In the laminate 100, the fiber layer 10 is preferably in a state in which it is encapsulated in the amorphous resin or an adhesive layer. In this case, as shown in Figure 3, the entire surface of the fiber layer 10 may be covered with the amorphous resin or the adhesive layer. Otherwise, the fiber layer 10 may be partially covered with another resin material. Such a resin material may be a cover material that has previously been laminated on the fiber layer 10, and the cover material may be, for example, a resin film. Besides, such a cover material may be used to cover the exposed portion of the fiber layer 10, after formation of the laminate 100.

In Figure 3, the resin layer 30 is present such that it surrounds the circumference of the fiber layer 10, and constitutes a series of resin region. In the central region of the laminate 100, the layer configuration consists of a resin layer 30/an adhesive layer 20/a fiber layer 10/an adhesive layer 20/a resin layer 30. Hence, in the present description, the layer configuration of the laminate 100 shown in Figure 3 is set to be a resin layer 30/an adhesive layer 20/a fiber layer 10/an adhesive layer 20/a resin layer 30.

As shown in Figure 2 and Figure 3, in the laminate 100, the fiber layer 10 may be present in the central region in the thickness direction of the laminate 100. That is, in the laminate, cellulose fibers may be unevenly distributed in the central region in the thickness direction of the laminate. In such a laminate, the occurrence of warpage is suppressed, and the water resistance of the laminate can be more effectively enhanced.

Moreover, as shown in Figure 4, a fiber layer 10 may be present in a region near the surface layer in the thickness direction of a laminate 100. That is, in the laminate, cellulose fibers may be unevenly distributed in a region near the surface layer in the thickness direction of the laminate. It is to be noted that the region near the surface layer in the thickness direction of the laminate means a region that is present up to 30% of the entire thickness of the laminate from the surface thereof and excludes the exposed outermost surface. By unevenly distributing cellulose fibers in a non-exposed region near the surface layer in the thickness direction of the laminate, the bending elastic modulus of the laminate can be more effectively enhanced. Further, as shown in Figure 4, two or more of the fiber layers 10 may be present in the laminate 100. For example, two fiber layers 10 may be each present in regions near surface layers on the surface and back sides. Hence, by allowing ultrafine cellulose fibers to evenly exist on one surface and the other surface sides of the laminate, a variation in the strength of the laminate can be suppressed, and the occurrence of warpage on the laminate can be suppressed.

Besides, as shown in Figure 4, when the fiber layer 10 is present in a region near the surface layer in the thickness direction of the laminate 100, the resin layer 30 as an outermost layer may be a layer formed from a resin film. That is to say, the resin layer 30 as an outermost layer may be a layer formed by laminating a resin film on an adhesive layer 20 established on the fiber layer 10. Besides, after a resin film has been laminated on the adhesive layer 20, a hot-pressing step may be established, as necessary. Thus, by forming the resin layer 30 as an outermost layer from a resin film, the durability or impact resistance of the laminate can be more effectively enhanced.

Moreover, the laminate may have an optional layer, as mentioned later. In the laminate, regarding each type of layer, only one layer may be established, or two or more layers may also be established.

The entire thickness of the laminate is preferably 200 μm or more, more preferably 500 μm or more, further preferably 1.0 mm or more, still further preferably 2.0 mm or more, and particularly preferably 3.0 mm or more. The upper limit value of the entire thickness of the laminate is not particularly limited, and for example, it may be 20 mm or less. Conventionally, when the thickness of a laminate has been intended to increase, the thickness of a fiber layer has also been needed to increase for the expression of physical properties to be required. However, in such a case, if heat or external force has been added to the laminate, due to a different response (elasticity) between the fiber layer and the resin layer, a strain has been generated at the interface, resulting in the occurrence of peeling. Since this strain increases as the thickness of the fiber layer increases, it has not been easy to obtain a laminate with a large thickness. On the other hand, in the present invention, by setting the glass transition temperature of a polymer that constitutes an adhesive layer to be within a predetermined range, it has become possible to obtain a laminate having a large thickness and being excellent in terms of durability and impact resistance.

The laminate of the present invention is preferably a hot press molded product. Specifically, when a resin layer is formed in the laminate, the resin layer is preferably formed by hot press molding. In the case of a hot press molded product, the thickness of the entire laminate can be increased, and thus, a laminate having excellent interlayer adhesiveness can be easily obtained. In addition, a high elastic modulus (bending elastic modulus) and a low linear thermal expansion coefficient can be easily achieved in the laminate, and further, the laminate can also possess excellent design and durability. Besides, by forming a laminate according to hot press molding, it also becomes possible to suppress the

cost of equipment installation.

(Fiber layer)

The ultrafine cellulose fiber-containing layer (fiber layer) comprises cellulose fibers having a fiber width of 1000 nm or less (ultrafine cellulose fibers). The fiber width of the cellulose fibers is preferably 100 nm or less, more preferably 50 nm or less, further preferably 10 nm or less, and particularly preferably 8 nm or less. Thereby, the transparency of the fiber layer is enhanced, and when a laminate is formed, the strength of the laminate is enhanced.

The fiber width of the cellulose fibers can be measured, for example, by electron microscopic observation. The number average fiber width of the cellulose fibers is 1000 nm or less. The number average fiber width of the cellulose fibers is preferably 1 nm or more and 1000 nm or less, more preferably 1 nm or more and 100 nm or less, further preferably 1 nm or more and 50 nm or less, and particularly preferably 1 nm or more and 10 nm or less. By setting the number average fiber width of the cellulose fibers to be within the above-described range, the transparency of the fiber layer is enhanced, and when a laminate is formed, the strength of the laminate is enhanced. It is to be noted that the cellulose fibers are, for example, monofibrous cellulose.

The number average fiber width of the cellulose fibers is measured as follows, for example, using an electron microscope. First, an aqueous suspension of the cellulose fibers having a concentration of 0.05% by mass or more and 0.1% by mass or less is prepared, and this suspension is casted onto a hydrophilized carbon film-coated grid as a sample for TEM observation. If the sample contains wide fibers, SEM images of the surface of the suspension casted onto glass may be observed. Subsequently, the sample is observed using electron microscope images taken at a magnification of 1000x, 5000x, 10000x, or 50000x, depending on the widths of fibers used as observation targets. However, the sample, the observation conditions, and the magnification are adjusted so as to satisfy the following conditions:

(1) A single straight line X is drawn in any given portion in an observation image, and 20 or more fibers intersecting with the straight line X are selected.

(2) A straight line Y, which intersects perpendicularly with the aforementioned straight line in the same image as described above, is drawn, and 20 or more fibers intersecting with the straight line Y are selected.

The widths of the fibers intersecting the straight line X and the straight line Y in the observation image meeting the above-described conditions are visually read. Three or more sets of observation images of surface portions, which are at least not overlapped, are obtained. Thereafter, the widths of the fibers intersecting the straight line X and the straight line Y are read in each image. Thereby, at least 120 fiber widths (20 fibers $\times$ 2 $\times$ 3 = 120) are thus read. The average value of the read fiber widths is defined to be the number average fiber width of the cellulose fibers.

The fiber length of the cellulose fibers is not particularly limited, and for example, it is preferably 0.1 $\mu$m or more and 1000 $\mu$m or less, more preferably 0.1 $\mu$m or more and 800 $\mu$m or less, and further preferably 0.1 $\mu$m or more and 600 $\mu$m or less. By setting the fiber length within the above-described range, destruction of the crystalline region of the cellulose fibers can be suppressed. In addition, the viscosity of a slurry of the cellulose fibers can also be set within an appropriate range. It is to be noted that the fiber length of the cellulose fibers can be obtained by an image analysis using TEM, SEM or AFM.

The cellulose fibers preferably have a type I crystal structure. Herein, the fact that the cellulose fibers have a type I crystal structure may be identified by a diffraction profile obtained from a wide angle X-ray diffraction photograph using CuKa ($\lambda$ = 1.5418 Å) monochromatized with graphite. Specifically, it may be identified based on the fact that there are typical peaks at two positions near 2θ = 14° or more and 17° or less, and near 2θ = 22° or more and 23° or less. The percentage of the type I crystal structure occupied in the ultrafine cellulose fibers is, for example, preferably 30% or more, more preferably 40% or more, and further preferably 50% or more. Thereby, more excellent performance can be expected, in terms of heat resistance and the expression of low linear thermal expansion. The crystallinity can be obtained by measuring an X-ray diffraction profile and obtaining it based on the pattern according to a common method (Seagal et al., Textile Research Journal, Vol. 29, p. 786, 1959).

The aspect ratio (fiber length/fiber width) of the cellulose fibers is not particularly limited, and for example, it is preferably 20 or more and 10000 or less, and more preferably 50 or more and 1000 or less. By setting the aspect ratio to be the above-described lower limit value or more, a sheet comprising ultrafine cellulose fibers is easily formed. In addition, when a solvent dispersion thereof is produced, sufficient thickening properties are easily obtained. By setting the aspect ratio to be the above-described upper limit or less, when the cellulose fibers are treated, for example, in the form of a dispersed solution, operations such as dilution are preferably easily handled.

The cellulose fibers in the present embodiment have, for example, both a crystalline region and an amorphous region. In particular, ultrafine cellulose fibers, which have both a crystalline region and an amorphous region and also have a high aspect ratio, are realized by the after-mentioned method for producing ultrafine cellulose fibers.

The cellulose fibers may have at least one type of ionic substituents and nonionic substituents. In order to

improve the dispersibility of the cellulose fibers in a dispersion medium and in order to enhance defibration efficiency in a defibration treatment, ionic substituents may be introduced into the cellulose fibers. The ionic substituents may include, for example, either one of or both of anionic groups and cationic groups. In addition, examples of the nonionic substituents may include an alkyl group and an acyl group. When substituents are introduced into the cellulose fibers, anionic groups are preferably introduced as ionic substituents. In this case, the ionic substituent is preferably a group that is introduced into the cellulose fibers via an ester bond or an ether bond, and is more preferably a group that is introduced into the cellulose fibers via an ester bond. The ester bond is preferably formed by dehydration-condensation of hydroxyl groups of the cellulose fibers with compounds serving as ionic substituents. On the other hand, ionic substituents may not be introduced into the cellulose fibers, and as described later, a step of introducing ionic substituents into the cellulose fibers, then performing a defibration treatment, and then removing the ionic substituents, may be established.

Examples of the anionic groups serving as ionic substituents may include a phosphorus oxoacid group or a substituent derived from the phosphorus oxoacid group (hereinafter simply referred to as a "phosphorus oxoacid group" at times), a carboxy group or a substituent derived from the carboxy group (hereinafter simply referred to as a "carboxy group" at times), a sulfur oxoacid group or a substituent derived from the sulfur oxoacid group (hereinafter simply referred to as a "sulfur oxoacid group" at times), a xanthate group or a substituent derived from the xanthate group (hereinafter simply referred to as a "xanthate group" at times), a phosphone group or a substituent derived from the phosphone group, a phosphine group or a substituent derived from the phosphine group, a sulfone group or a substituent derived from the sulfone group, and a carboxyalkyl group. Among these groups, the anionic group is preferably at least one type selected from the group consisting of a phosphorus oxoacid group, a substituent derived from the phosphorus oxoacid group, a carboxy group, a substituent derived from the carboxy group, a sulfur oxoacid group, a substituent derived from the sulfur oxoacid group, a carboxymethyl group, a carboxyethyl group, and a sulfone group; is more preferably at least one type selected from the group consisting of a phosphorus oxoacid group, a carboxy group, and a sulfur oxoacid group; and is particularly preferably a phosphorus oxoacid group. By introducing, as an anionic group, a phosphorus oxoacid group such as a phosphoric acid group or a phosphorus acid group, for example, even under alkaline conditions or acidic conditions, the dispersibility of the cellulose fibers can be further enhanced, the strength of the fiber layer can be enhanced, and as a result, the strength of the laminate can be enhanced. Moreover, by introducing a phosphorus oxoacid group such as a phosphoric acid group or a phosphorus acid group, the transparency of a laminate to be obtained can be more effectively enhanced, and also, yellowing can be suppressed.

Examples of the cationic group serving as an ionic group may include an ammonium group, a phosphonium group, and a sulfonium group. Among these groups, the cationic group is preferably an ammonium group.

The phosphorus oxoacid group or the substituent derived from the phosphorus oxoacid group is, for example, a substituent represented by the following formula (1). Into each cellulose fiber, a plurality of substituents represented by the following formula (1) may be introduced. In this case, the plurality of introduced substituents represented by the following formula (1) may be either identical to or different from one another.

[Formula 1]

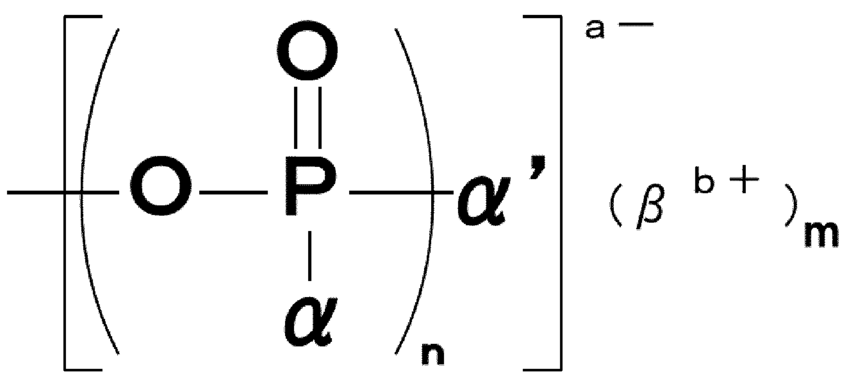

(1)

In the above Formula (1), a, b, and n each represent a natural number, and m represents any given number (provided that a = b × m); at least one of an "n" number of α and α' is $O^-$, and the rest is either R or OR. Besides, all of such α and α' may also be $O^-$. An "n" number of α may be all identical to one another, or may be different from one another. $\beta^{b+}$ is a mono- or more-valent cation consisting of an organic or inorganic matter.

R each represents a hydrogen atom, a saturated straight chain hydrocarbon group, a saturated branched chain hydrocarbon group, a saturated cyclic hydrocarbon group, an unsaturated straight chain hydrocarbon group, an unsaturated branched chain hydrocarbon group, an unsaturated cyclic hydrocarbon group, an aromatic group, or a derivative

group thereof. In addition, in the formula (1), n is preferably 1.

Examples of the saturated straight chain hydrocarbon group may include a methyl group, an ethyl group, an n-propyl group, and an n-butyl group, but are not particularly limited thereto. Examples of the saturated branched chain hydrocarbon group may include an i-propyl group and a t-butyl group, but are not particularly limited thereto. Examples of the saturated cyclic hydrocarbon group may include a cyclopentyl group and a cyclohexyl group, but are not particularly limited thereto. Examples of the unsaturated straight chain hydrocarbon group may include a vinyl group and an allyl group, but are not particularly limited thereto. Examples of the unsaturated branched chain hydrocarbon group may include an i-propenyl group and a 3-butenyl group, but are not particularly limited thereto. Examples of the unsaturated cyclic hydrocarbon group may include a cyclopentenyl group and a cyclohexenyl group, but are not particularly limited thereto. Examples of the aromatic group may include a phenyl group and a naphthyl group, but are not particularly limited thereto.

Moreover, examples of the derivative group of the R may include functional groups such as a carboxy group, a carboxylate group ($-COO^-$), a hydroxy group, an amino group and an ammonium group, in which at least one type selected from the aforementioned functional groups is added to or substituted with the main chain or side chain of the above-described various types of hydrocarbon groups, but are not particularly limited thereto. Furthermore, the number of carbon atoms constituting the main chain of the above-described R is not particularly limited, and it is preferably 20 or less, and more preferably 10 or less. By setting the number of carbon atoms constituting the main chain of the R within the above-described range, the molecular weight of phosphorus oxoacid groups can be adjusted in a suitable range, permeation thereof into a fiber raw material can be facilitated, and the yield of the cellulose fibers can also be enhanced. Besides, when a plurality of R are present in the formula (1) or when multiple types of substituents represented by the formula (1) are introduced into the cellulose fibers, the plurality of R may be either identical to or different from one another.

$\beta^{b+}$ is a mono- or more-valent cation consisting of an organic or inorganic matter. Examples of the mono- or more-valent cation consisting of an organic matter may include organic onium ions. Examples of the organic onium ions may include organic ammonium ions and organic phosphonium ions. Examples of the organic ammonium ions may include aliphatic ammonium ions and aromatic ammonium ions. Examples of the organic phosphonium ions may include aliphatic phosphonium ions and aromatic phosphonium ions. Examples of the mono- or more-valent cation consisting of an inorganic matter may include alkali metal ions such as sodium, potassium or lithium, divalent metal ions such as calcium or magnesium, hydrogen ions, and ammonium ions. Besides, when a plurality of $\beta^{b+}$ are present in the formula (1), or when multiple types of substituents represented by the formula (1) are introduced into the cellulose fibers, the plurality of $\beta^{b+}$ may be either identical to or different from one another. As such mono- or more-valent cations consisting of an organic or inorganic matter, sodium or potassium ions, which hardly cause the yellowing of a fiber raw material containing $\beta^{b+}$ upon heating and are industrially easily applicable, are preferable, but are not particularly limited thereto.

Specific examples of the phosphorus oxoacid group or the substituent derived from the phosphorus oxoacid group may include a phosphoric acid group ($-PO_3H_2$), a salt of the phosphoric acid group, a phosphorus acid group (phosphonic acid group) ($-PO_2H_2$), and a salt of the phosphorus acid group (phosphonic acid group). Moreover, the phosphorus oxoacid group or the substituent derived from the phosphorus oxoacid group may also be a condensed phosphoric acid group (for example, a pyrophosphoric acid group), a condensed phosphonic acid group (for example, a polyphosphonic acid group), a phosphoric acid ester group (for example, a monomethyl phosphoric acid group, or a polyoxyethylene alkyl phosphoric acid group), an alkyl phosphonic acid group (for example, a methyl phosphonic acid group), or the like.

Moreover, the sulfur oxoacid group (the sulfur oxoacid group or the substituent derived from the sulfur oxoacid group) is, for example, a substituent represented by the following formula (2). Into each cellulose fiber, a plurality of substituents represented by the following formula (2) may be introduced. In this case, the plurality of introduced substituents represented by the following formula (2) may be either identical to or different from one another.

[Formula 2]

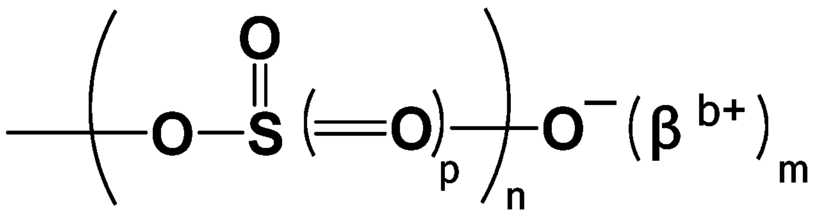

(2)

In the above structural formula, b and n each represent a natural number, p represents 0 or 1, and m represents any given number (provided that $1 = b \times m$). When n is 2 or greater, a plurality of p may be identical numbers or may

also be different numbers. In the above structural formula, $\beta^{b+}$ is a mono- or more-valent cation consisting of an organic or inorganic matter. Examples of the mono- or more-valent cation consisting of an organic matter may include organic onium ions. Examples of the organic onium ions may include organic ammonium ions and organic phosphonium ions. Examples of the organic ammonium ions may include aliphatic ammonium ions and aromatic ammonium ions. Examples of the organic phosphonium ions may include aliphatic phosphonium ions and aromatic phosphonium ions. Examples of the mono- or more-valent cation consisting of an inorganic matter may include alkali metal ions such as sodium, potassium or lithium, divalent metal ions such as calcium or magnesium, hydrogen ions, and ammonium ions. Besides, when multiple types of substituents represented by the above formula (2) are introduced into cellulose fibers, a plurality of $\beta^{b+}$ may be either identical to or different from one another. As mono- or more-valent cations consisting of an organic or inorganic matter, sodium or potassium ions, which hardly cause the yellowing of a fiber raw material containing $\beta^{b+}$ upon heating and are industrially easily applicable, are preferable, but are not particularly limited thereto.

The amount of ionic substituents introduced into the cellulose fibers may be, per 1 g (mass) of the cellulose fibers, 0.00 mmol/g, and is preferably 0.05 mmol/g or more. On the other hand, the amount of ionic substituents introduced into the cellulose fibers is, per 1 g (mass) of the ultrafine cellulose fibers, preferably 5.20 mmol/g or less, more preferably 3.65 mmol/g or less, further preferably 3.50 mmol/g or less, and particularly preferably 3.00 mmol/g or less. By setting the amount of ionic substituents introduced to be within the above-described range, it may become easy to perform fibrillation on the fiber raw material, and the stability of the cellulose fibers can be enhanced. In addition, by setting the amount of ionic substituents introduced to be within the above-described range, favorable properties can be exhibited for various intended uses of the cellulose fibers, such as the use as a thickener. Herein, the denominator in the unit mmol/g indicates the mass of cellulose fibers, when the counterions of ionic substituents are hydrogen ions ($H^+$).

Moreover, the amount of ionic substituents introduced into the cellulose fibers may be, per 1 g (mass) of the cellulose fibers, less than 0.50 mmol/g, 0.40 mmol/g or less, 0.30 mmol/g or less, 0.25 mmol/g or less, or 0.15 mmol/g or less. Such cellulose fibers having a small amount of substituents and having a fiber width of 100 nm or less may be obtained, for example, by performing a treatment of removing substituents on ultrafine cellulose fibers. By forming a fiber layer using such cellulose fibers, a laminate having a lower haze and a lower yellowness index can be easily obtained.

The amount of ionic substituents introduced into the cellulose fibers can be measured, for example, by a neutralization titration method. According to the measurement by the neutralization titration method, while an alkali such as a sodium hydroxide aqueous solution is added to a slurry containing the obtained cellulose fibers, a change in the pH is obtained, so that the introduced amount is measured.

Figure 5 is a graph showing the relationship between the amount of NaOH added dropwise to a slurry containing cellulose fibers having phosphorus oxoacid group and a pH value. The amount of phosphorus oxoacid group introduced into the cellulose fibers is measured, for example, as follows.

First, a slurry containing the cellulose fibers is treated with a strongly acidic ion exchange resin. Before the treatment with the strongly acidic ion exchange resin, the same defibration treatment as the after-mentioned defibration treatment step may be performed on the cellulose fibers, as necessary.

Subsequently, while adding a sodium hydroxide aqueous solution, a change in the pH value is observed, and a titration curve as shown in the upper portion of Figure 5 is obtained. In the titration curve shown in the upper portion of Figure 5, a pH value measured with respect to the amount of alkali added is plotted. On the other hand, in the titration curve shown in the lower portion of Figure 5, an increment (a derivative) (1/mmol) of the pH value with respect to the amount of alkali added is plotted. According to this neutralization titration, in a curve formed by plotting pH values measured with respect to the amount of alkali added, two points are confirmed, in which an increment (a derivative of pH with respect to the amount of alkali added dropwise) becomes maximum. Regarding these two points, a maximum point of an increment firstly obtained after addition of alkali is referred to as a first end point, whereas a maximum point of an increment subsequently obtained after addition of alkali is referred to as a second end point. The amount of alkali required from initiation of the titration until the first end point becomes equal to the first amount of dissociated acid in the cellulose fibers comprised in the slurry used in the titration. The amount of alkali required from the first end point until the second end point becomes equal to the second amount of dissociated acid in the cellulose fibers comprised in the slurry used in the titration. Furthermore, the amount of alkali required from initiation of the titration until the second end point becomes equal to the total amount of dissociated acid in the slurry used in the titration. Further, the value obtained by dividing the amount of alkali required from initiation of the titration until the first end point by a solid content (g) in the slurry to be titrated becomes the amount of phosphorus oxoacid groups introduced (mmol/g). Besides, the simple term "the amount of the phosphorus oxoacid groups introduced (or the amount of the phosphorus oxoacid groups)" refers to the first amount of dissociated acid.

In Figure 5, the region ranging from initiation of the titration until the first end point is referred to as a first region, and the region ranging from the first end point until the second end point is referred to as a second region. For example, when the phosphorus oxoacid groups are phosphoric acid groups causing condensation, the amount of weakly acidic groups in the phosphorus oxoacid groups (which is also referred to as a "second amount of dissociated acid" in the present description) is apparently reduced, so that the amount of the alkali required for the second region is decreased

as compared with the amount of the alkali required for the first region. Meanwhile, the amount of strongly acidic groups in the phosphorus oxoacid groups (which is also referred to as a "first amount of dissociated acid" in the present description) corresponds to the amount of phosphorus atoms, regardless of the presence or absence of condensation. On the other hand, when the phosphorus oxoacid groups are phosphorous acid groups, since weakly acidic groups are not present in the phosphorus oxoacid groups, the amount of the alkali required for the second region may be decreased, or the amount of the alkali required for the second region may become zero in some cases. In such a case, in the titration curve, there is only one point in which an increment of the pH value becomes maximum.

With regard to the aforementioned amount (mmol/g) of phosphorus oxoacid group introduced, the denominator indicates the mass of acid-type cellulose fibers. Thus, the amount (mmol/g) of phosphorus oxoacid group introduced indicates the amount of phosphorus oxoacid group possessed by the acid-type cellulose fibers (hereinafter referred to as "the amount of phosphorus oxoacid groups (acid type)"). On the other hand, when the counterions of phosphorus oxoacid groups are substituted with any given cations C to achieve charge equivalent, the denominator is converted to the mass of cellulose fibers in which the cations C are counterions, so that the amount of phosphorus oxoacid groups possessed by the cellulose fibers in which the cations C are counterions (hereinafter referred to as "the amount of phosphorus oxoacid groups (C type)") can be obtained.

Specifically, the amount of phosphorus oxoacid groups (C type) is calculated according to the following equation:

$$\text{Amount of phosphorus oxoacid groups (C type)} = \text{amount of phosphorus oxoacid groups (acid type)} / \{1 + (W-1) \times A / 1000\}.$$

In the above equation,

A [mmol/g] indicates the total anion amount derived from phosphorus oxoacid groups possessed by cellulose fibers (total dissociated acid amount of phosphorus oxoacid groups), and
W indicates formula weight per valence of the cations C (for example, Na: 23; and Al: 9).

In the measurement of the amount of phosphorus oxoacid groups according to the titration method, when the amount of a single droplet of a sodium hydroxide aqueous solution added dropwise is too large, or when the titration interval is too short, the amount of phosphorus oxoacid groups may be measured to be lower than the actual value and thus, a precise value may not be obtained in some cases. With regard to an appropriate amount of a sodium hydroxide aqueous solution added dropwise and a titration interval, it is desired that, for example, a 0.1 N sodium hydroxide aqueous solution is titrated in each amount of 10 to 50 μL for 5 to 30 seconds. Moreover, in order to eliminate the influence of carbon dioxide dissolved in a cellulose fiber-containing slurry, it is desired that, for example, the measurement is carried out, while inert gas such as nitrogen gas is blown into the slurry from 15 minutes before initiation of the titration until termination of the titration.

Figure 6 is a graph showing the relationship between the amount of NaOH added dropwise to a slurry containing cellulose fibers having carboxy groups and a pH value. The amount of carboxy groups introduced into the cellulose fibers is measured, for example, as follows.

First, a slurry containing the cellulose fibers is treated with a strongly acidic ion exchange resin. Before the treatment with the strongly acidic ion exchange resin, the same defibration treatment as the after-mentioned defibration treatment step may be performed on the measurement target, as necessary.

Subsequently, while adding a sodium hydroxide aqueous solution, a change in the pH value is observed, and a titration curve as shown in the upper portion of Figure 6 is obtained. In the titration curve shown in the upper portion of Figure 6, a pH value measured with respect to the amount of alkali added is plotted. On the other hand, in the titration curve shown in the lower portion of Figure 6, an increment (a derivative) (1/mmol) of the pH value with respect to the amount of alkali added is plotted. According to this neutralization titration, in a curve formed by plotting pH values measured with respect to the amount of alkali added, one point is confirmed, in which an increment (a derivative of pH with respect to the amount of alkali added dropwise) becomes maximum, and this maximum point is referred to as a first end point. Herein, a region ranging from initiation of the titration to the first end point shown in Figure 6 is referred to as a first region. The amount of alkali required in the first region becomes equal to the amount of carboxy groups in the slurry used in the titration. By dividing the amount of alkali (mmol) required in the first region in the titration curve by the solid content (g) in the slurry containing cellulose fibers as a titration target, the amount (mmol/g) of the carboxy groups introduced is calculated.

It is to be noted that the aforementioned amount (mmol/g) of carboxyl groups introduced is the amount of substituents per 1 g (mass) of cellulose fibers when the counterions of the carboxyl groups are hydrogen ions ($H^+$) (hereinafter referred to as "the amount of carboxyl group (acid type)").

Regarding the aforementioned amount (mmol/g) of carboxy groups introduced, since the denominator indicates

the mass of acid-type cellulose fibers, the amount (mmol/g) of carboxy groups introduced indicates the amount of carboxy groups possessed by the acid-type cellulose fibers (hereinafter referred to as "the amount of carboxy group (acid type)"). On the other hand, when the counterions of carboxy groups are substituted with any given cations C to achieve charge equivalent, the denominator is converted to the mass of cellulose fibers in which the cations C are counterions, so that the amount of carboxy groups possessed by the cellulose fibers in which the cations C are counterions (hereinafter referred to as "the amount of carboxy groups (C type)") can be obtained.

Specifically, the amount of carboxy groups is calculated according to the following equation:

$$\text{Amount of carboxy groups (C type)} = \text{amount of carboxy groups (acid type)} / \{1 + (W-1) \times (\text{amount of carboxy groups (acid type)}) / 1000\}.$$

In the above equation, W indicates formula weight per valence of cations C (for example, Na: 23; and Al: 9).

In the measurement of the amount of anionic groups according to the titration method, when the amount of a single droplet of a sodium hydroxide aqueous solution added dropwise is too large, or when the titration interval is too short, the amount of anionic groups may be measured to be lower than the actual value and thus, a precise value may not be obtained in some cases. With regard to an appropriate amount of a sodium hydroxide aqueous solution added dropwise and a titration interval, it is desired that, for example, a 0.1 N sodium hydroxide aqueous solution is titrated in each amount of 10 to 50 μL for 5 to 30 seconds. Moreover, in order to eliminate the influence of carbon dioxide dissolved in a cellulose fibers-containing slurry, it is desired that, for example, the measurement is carried out, while inert gas such as nitrogen gas is blown into the slurry from 15 minutes before initiation of the titration until termination of the titration.

The amount of sulfur oxoacid groups or sulfone groups introduced into the cellulose fibers can be calculated by subjecting the cellulose fibers to wet ashing using perchloric acid and concentrated nitric acid, then appropriately diluting the resulting cellulose fibers, and then measuring the amount of sulfur according to ICP-OES. The value obtained by dividing the amount of sulfur by the absolute dry mass of the tested cellulose fibers is the amount of sulfur oxoacid groups or sulfone groups (unit: mmol/g).

The amount of xanthate groups introduced into cellulose fibers can be measured by the following method according to Bredee method. First, 40 mL of a saturated ammonium chloride solution is added to 1.5 parts by mass (absolute dry mass) of cellulose fibers, and they are fully mixed with each other, while crushing the sample with a glass rod. Thereafter, the sample is left for about 15 minutes, and is then filtrated with a GFP filter (GS-25 manufactured by ADVANTEC), and the resultant is fully washed with a saturated ammonium chloride solution. Subsequently, the sample, together with the GFP filter, is placed in a 500-mL tall beaker, and 50 mL of a 0.5 M sodium hydroxide solution (5°C) is added thereto, followed by stirring. The obtained mixture is left for 15 minutes. Thereafter, a phenolphthalein solution is added to the reaction mixture until the solution becomes pink, and 1.5 M acetic acid is then added thereto. The time point at which the pink solution is converted to a colorless solution is defined to be a neutralization point. After neutralization, 250 mL of distilled water is added to the solution, and the mixture is then fully stirred. Thereafter, 10 mL of 1.5 M acetic acid and 10 mL of a 0.05 mol/L iodine solution are added to the reaction mixture, using a Volumetric pipette. After that, the thus obtained solution is titrated with a 0.05 mol/L sodium thiosulfate solution, and then, using the amount of sodium thiosulfate titrated and the absolute dry mass of cellulose fibers, the amount of xanthate groups is calculated according to the following equation:

$$\text{Amount (mmol/g) of xanthate groups} = (0.05 \times 10 \times 2 - 0.05 \times \text{amount (mL) of sodium thiosulfate titrated}) / 1000 / \text{absolute dry mass (g) of cellulose fibers}.$$

With regard to the amount of cationic groups to the cellulose fibers, trace nitrogen analysis is carried out, and a value calculated according to the following equation is defined to be the amount (mmol) of cationic groups in ultrafine cellulose fibers.

$$\text{Amount of cationic groups [mmol/g]} = (\text{amount of nitrogen}) \text{ [g]} / 14 \times 1000 / (\text{amount of tested cationic group-introduced ultrafine cellulose fibers}) \text{ [g]}$$

The content of the cellulose fibers is preferably 5% by mass or more, more preferably 10% by mass or more, further preferably 30% by mass or more, still further preferably 50% by mass or more, and particularly preferably 70% by mass or more, with respect to the total mass of the fiber layer. Moreover, the content of the cellulose fibers may also be 100% by mass, with respect to the total mass of the fiber layer. That is to say, the fiber layer may be a layer consisting of the cellulose fibers.

The thickness of a single fiber layer is preferably 20 μm or more, more preferably 40 μm or more, and further preferably 60 μm or more. On the other hand, the thickness of a single fiber layer is preferably 1000 μm or less, more preferably 500 μm or less, and further preferably 250 μm or less. Besides, even in a case where two or more of the fiber layers are established in the laminate, the thickness of each layer is preferably within the above-described range. By setting the thickness of the fiber layer to be within the above-described range, strength necessary for reinforcing the laminate is easily obtained. In addition, the production efficiency of the fiber layer can be enhanced. Herein, the thickness of a single fiber layer is a value measured by cutting out a cross-section of the laminate using a band saw, a slide saw, or a laser processing machine, and then observing the cross-section under an optical or an electron microscope.

The density of the fiber layer is preferably 0.5 g/cm$^3$ or more, more preferably 1.0 g/cm$^3$ or more, further preferably 1.2 g/cm$^3$ or more, and particularly preferably 1.4 g/cm$^3$ or more. The upper limit value of the density of the fiber layer is not particularly limited, and for example, it may be 3.0 g/cm$^3$. By setting the density of the fiber layer to be within the above-described range, strength necessary for reinforcing the laminate is easily obtained. Besides, the density of the fiber layer is a value calculated from the basis weight and thickness of the fiber layer, in accordance with JIS P 8118: 2014.

The basis weight of a single fiber layer is preferably 10 g/m$^2$ or more, more preferably 30 g/m$^2$ or more, further preferably 50 g/m$^2$ or more, and particularly preferably 100 g/m$^2$ or more. On the other hand, the basis weight of a single fiber layer is preferably 1500 g/m$^2$ or less, more preferably 750 g/m$^2$ or less, and further preferably 500 g/m$^2$ or less. When a plurality of the fiber layers are established, the total basis weight of the fiber layers is preferably 50 g/m$^2$ or more, and more preferably 100 g/m$^2$ or more. On the other hand, the total basis weight of the fiber layers is preferably 3000 g/m$^2$ or less, more preferably 1500 g/m$^2$ or less, and further preferably 1000 g/m$^2$ or less. Besides, the basis weight of a single fiber layer may be 150 g/m$^2$ or more, or may also be 200 g/m$^2$ or more. Moreover, the total basis weight of the fiber layers may be 300 g/m$^2$ or more, or may also be 400 g/m$^2$ or more. By increasing the basis weight of the fiber layer, the bending elastic modulus of the laminate can be more effectively enhanced, and the linear thermal expansion coefficient of the laminate can be further decreased. Herein, the basis weight of the fiber layer is a value obtained by cutting the laminate with Ultramicrotome UC-7 (manufactured by JEOL Ltd.) such that only the fiber layer is left, and then calculating according to the following method. The weight of a fiber layer that is cut into a size of 2 cm square or larger is measured, and the obtained weight is divided by the area of the cut fiber layer to calculate the basis weight of the fiber layer.

The haze of the fiber layer is preferably, 2% or less, more preferably 1.5% or less, and further preferably 1% or less. The lower limit value of the haze of the fiber layer is not particularly limited, and for example, it may be 0%. Herein, the haze of the fiber layer is a value obtained by cutting the laminate, for example, using Ultramicrotome UC-7 (manufactured by JEOL Ltd.) such that only the fiber layer is left, and then measuring it using a haze meter (manufactured by MURAKAMI COLOR RESEARCH LABORATORY Co., Ltd.; HM-150).

The total light transmittance of the fiber layer is preferably 85% or more, more preferably 90% or more, and further preferably 91% or more. The upper limit value of the total light transmittance of the fiber layer is not particularly limited, and for example, it may be 100%. Herein, the total light transmittance of the fiber layer is a value obtained by cutting the laminate, for example, using Ultramicrotome UC-7 (manufactured by JEOL Ltd.) such that only the fiber layer is left, and then measuring it in accordance with JIS K 7361-1: 1997, using a haze meter (manufactured by MURAKAMI COLOR RESEARCH LABORATORY Co., Ltd.; HM-150).

In addition to the ultrafine cellulose fibers, the fiber layer may comprise optional components. Examples of such optional components may include a hydrophilic polymer, a hydrophilic low-molecular-weight substance, and an organic ion. Moreover, the fiber layer may comprise, as such optional component(s), one or two or more types selected from a surfactant, a coupling agent, an inorganic layered compound, an inorganic compound, a leveling agent, an antiseptic, an antifoaming agent, an organic particle, a lubricant, an antistatic agent, an ultraviolet protector, a dye, a pigment, a stabilizer, magnetic powders, an orientation promoter, a plasticizer, a dispersing agent, and a crosslinker.

The fiber layer may comprise a hydrophilic polymer. Hydrophilic polymer is a polymer compound that is generally easily dissolved in, swelled by, or gets wet in water. Examples of the hydrophilic polymer may include: polymer compounds having ionic groups such as carboxy groups, sulfone groups or amino groups in the molecular structure thereof; and polymer compounds having hydroxyl groups, amide groups, ether groups, or nonionic hydrophilic groups such as polyoxyethylene groups or polyoxypropylene groups. However, in the present description, the hydrophilic polymers do not include the above-mentioned cellulose fibers.

Examples of the hydrophilic polymer may include: a carboxyvinyl polymer; polyvinyl alcohol; polyvinyl butyral; an alkyl methacrylate/acrylic acid copolymer; polyvinyl pyrrolidone; polyvinyl methyl ether; polyacrylates such as sodium polyacrylate; an alkyl acrylate ester copolymer; a urethane copolymer; modified polyester; modified polyimide; polyethylene oxide; (poly)alkylene glycols such as polyethylene glycol, diethylene glycol, triethylene glycol, propylene glycol, dipropylene glycol, polypropylene glycol, isoprene glycol, hexylene glycol, and 1,3-butylene glycol; polycations such as polyacrylamide and polyethyleneimine; polyanions; amphoteric polymers; polysaccharide thickeners such as xanthan gum, guar gum, tamarind gum, carrageenan, locust bean gum, quince seed, alginic acid, and metal salts of alginic acid,

pullulan, and pectin; cellulose derivatives such as carboxymethyl cellulose, methyl cellulose, hydroxyethyl methyl cellulose, and hydroxyethyl cellulose; starches such as cationized starch, raw starch, oxidized starch, etherified starch, esterified starch, dextrin, and amylose; glycerins such as polyglycerin; hyaluronic acid and metal salts of hyaluronic acid; and proteins such as casein. The hydrophilic polymer may also be a copolymer of these hydrophilic polymers.

The hydrophilic low-molecular-weight substance is preferably a hydrophilic oxygen-containing organic compound, and is more preferably polyhydric alcohol. Examples of the polyhydric alcohol may include glycerin, sorbitol, and ethylene glycol.

Examples of the organic ion may include tetraalkylammonium ions and tetraalkylphosphonium ions. Examples of the tetraalkylammonium ions include a tetramethylammonium ion, a tetraethylammonium ion, a tetrapropylammonium ion, a tetrabutylammonium ion, a tetrapentylammonium ion, a tetrahexylammonium ion, a tetraheptylammonium ion, a tributylmethylammonium ion, a lauryltrimethylammonium ion, a cetyltrimethylammonium ion, a stearyltrimethylammonium ion, an octyldimethylethylammonium ion, a lauryldimethylethylammonium ion, a didecyldimethylammonium ion, a lauryldimethylbenzylammonium ion, and a tributylbenzylammonium ion. Examples of the tetraalkylphosphonium ions may include a tetramethylphosphonium ion, a tetraethylphosphonium ion, a tetrapropylphosphonium ion, a tetrabutylphosphonium ion, and a lauryltrimethylphosphonium ion. In addition, tetrapropylonium ions and tetrabutylonium ions may include tetra-n-propylonium ions and tetra-n-butylonium ions, respectively.

Besides, the ends of the fiber layer may be covered with a covering resin. The resin species used as a covering resin can be the resin used for the resin layer.

< Step of producing ultrafine cellulose fibers >

< Fiber raw material >

The cellulose fibers are produced from a fiber raw material comprising cellulose. Such a fiber raw material comprising cellulose is not particularly limited, and a pulp is preferably used from the viewpoint of availability and inexpensiveness. Examples of the pulp may include wood pulp, non-wood pulp, and deinked pulp. Examples of the wood pulp may include, but are not particularly limited to, chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP); semichemical pulps such as semi-chemical pulp (SCP) and chemi-ground wood pulp (CGP); and mechanical pulps such as ground pulp (GP) and thermomechanical pulp (TMP, BCTMP). Examples of the non-wood pulp may include, but not particularly limited to, cotton pulps such as cotton linter and cotton lint; and non-wood type pulps such as hemp, wheat straw, and bagasse. An example of a deinked pulp may be, but is not particularly limited to, a deinked pulp using waste paper as a raw material. The pulp of the present embodiment may be used alone as a single type, or in combination of two or more types. Among the above-listed pulps, for example, wood pulp and deinked pulp are preferable from the viewpoint of easy availability. Moreover, among the wood pulps, for example, a chemical pulp is more preferable, and a kraft pulp and a sulfite pulp are further preferable, from the viewpoint that it has a higher cellulose content ratio so as to enhance the yield of cellulose fibers upon the defibration treatment, and that decomposition of cellulose in the pulp is mild, so that cellulose fibers having a long fiber length with a high aspect ratio can be obtained.

As a fiber raw material comprising cellulose, for example, cellulose comprised in Ascidiacea, or bacterial cellulose generated by acetic acid bacteria can also be utilized. In addition fibers formed from straight-chain nitrogen-containing polysaccharide polymers such as chitin and chitosan can also be used, instead of a fiber raw material containing cellulose.

< Phosphorus oxoacid group introduction step >

The step of producing ultrafine cellulose fiber preferably comprises a phosphorus oxoacid group introduction step. The phosphorus oxoacid group introduction step is a step of allowing at least one type of compound (hereinafter also referred to as "Compound A") selected from compounds capable of reacting with hydroxyl groups possessed by a fiber raw material comprising cellulose and thereby introducing phosphorus oxoacid groups into the fiber raw material to act on the fiber raw material comprising cellulose. By this step, phosphorus oxoacid group-introduced fibers can be obtained.

In the phosphorus oxoacid group introduction step according to the present embodiment, the reaction of a fiber raw material comprising cellulose with Compound A is preferably carried out in the presence of at least one type selected from urea and a derivative thereof (hereinafter also referred to as "Compound B"). On the other hand, the reaction of the fiber raw material comprising cellulose with Compound A may also be carried out in the absence of Compound B.

One example of the method of allowing Compound A to act on the fiber raw material in the presence of Compound B may include a method of mixing Compound A and Compound B into the fiber raw material that is in a dry or wet state,

or in a slurry state. Among the fiber raw materials in these states, because of the high uniformity of the reaction, the fiber raw material that is in a dry or wet state is preferably used, and the fiber raw material in a dry state is particularly preferably used. The shape of the fiber raw material is not particularly limited, and for example, a cotton-like or thin sheet-like fiber raw material is preferable. Compound A and Compound B may be added to the fiber raw material by the method of adding Compound A and Compound B that are dissolved in a solvent to form a solution, or are melted by being heated to a melting point or higher. Among these, because of the high uniformity of the reaction, the compounds are preferably added to the fiber raw material, in the form of a solution obtained by dissolution thereof in a solvent, or in particular, in the form of an aqueous solution. Moreover, Compound A and Compound B may be simultaneously added, or may also be added, separately. Alternatively, Compound A and Compound B may be added in the form of a mixture thereof. The method of adding Compound A and Compound B is not particularly limited, and in a case where Compound A and Compound B are in the form of a solution, the fiber raw material may be immersed in the solution for liquid absorption, and may be then removed therefrom, or the solution may also be added dropwise onto the fiber raw material. Otherwise, Compound A and Compound B in necessary amounts may be added to the fiber raw material, or Compound A and Compound B in excessive amounts may be added to the fiber raw material and then, may be squeezed or filtrated to remove redundant Compound A and Compound B.

Compound A used in the present embodiment is a compound having phosphorus atoms and being capable of forming an ester bond with cellulose. Examples of such Compound A may include phosphoric acid or a salt thereof, phosphorous acid or a salt thereof, dehydrated condensed phosphoric acid or a salt thereof, and phosphoric anhydride (diphosphorus pentoxide), but are not particularly limited thereto. As such phosphoric acid, those having various purities can be used, and for example, 100% phosphoric acid (orthophosphoric acid) or 85% phosphoric acid can be used. Phosphorous acid may be 99% phosphorus acid (phosphonic acid). Dehydrated condensed phosphoric acid is phosphoric acid that is condensed by two or more molecules according to a dehydration reaction, and examples of such dehydrated condensed phosphoric acid may include pyrophosphoric acid and polyphosphoric acid. Examples of the phosphate, phosphite, and dehydrated condensed phosphate may include lithium salts, sodium salts, potassium salts, and ammonium salts of phosphoric acid, phosphorus acid, or dehydrated condensed phosphoric acid, and these salts may have various neutralization degrees. Among these, from the viewpoints of high efficiency in introduction of the phosphorus oxoacid groups, an improving tendency of the defibration efficiency in a defibration step described below, low costs, and industrial applicability, phosphoric acid, sodium salts of phosphoric acid, potassium salts of phosphoric acid or ammonium salts of phosphoric acid, or phosphorous acid, sodium salts of phosphorous acid, potassium salts of phosphorous acid, or ammonium salts of phosphorous acid are preferable; and phosphoric acid, sodium dihydrogen phosphate, disodium hydrogen phosphate, ammonium dihydrogen phosphate, phosphorous acid, or sodium phosphite is more preferable.

The amount of Compound A added to the fiber raw material is not particularly limited, and for example, if the amount of the Compound A added is converted to a phosphorus atomic weight, the amount of phosphorus atoms added with respect to the fiber raw material (absolute dry mass) is preferably 0.5% by mass or more and 100% by mass or less, more preferably 1% by mass or more and 50% by mass or less, and further preferably 2% by mass or more and 30% by mass or less. By setting the amount of phosphorus atoms added to the fiber raw material within the above-described range, the yield of the ultrafine cellulose fibers can be further improved. On the other hand, by setting the amount of phosphorus atoms added to the fiber raw material to the above-described upper limit value or less, the balance between the effect of improving the yield and costs can be kept.

Compound B used in the present embodiment is at least one type selected from urea and a derivative thereof, as described above. Examples of Compound B may include urea, biuret, 1-phenyl urea, 1-benzyl urea, 1-methyl urea, and 1-ethyl urea. From the viewpoint of the improvement of the uniformity of the reaction, Compound B is preferably used in the form of an aqueous solution. Moreover, from the viewpoint of the further improvement of the uniformity of the reaction, an aqueous solution, in which both Compound A and Compound B are dissolved, is preferably used.

The amount of Compound B added to the fiber raw material (absolute dry mass) is not particularly limited, and for example, it is preferably 1% by mass or more and 500% by mass or less, more preferably 10% by mass or more and 400% by mass or less, and further preferably 100% by mass or more and 350% by mass or less.

In the reaction of the fiber raw material comprising cellulose with Compound A, for example, amides or amines, as well as Compound B, may be comprised in the reaction system. Examples of the amides may include formamide, dimethylformamide, acetamide, and dimethylacetamide. Examples of the amines may include methylamine, ethylamine, trimethylamine, triethylamine, monoethanolamine, diethanolamine, triethanolamine, pyridine, ethylenediamine, and hexamethylenediamine. Among these, particularly, triethylamine is known to work as a favorable reaction catalyst.

In the phosphorus oxoacid group introduction step, it is preferable that a heat treatment is performed on a fiber raw material, after Compound A, etc. is added to or mixed with the fiber raw material. As a temperature for such a heat treatment, it is preferable to select a temperature that enables an efficient introduction of phosphorus oxoacid groups, while suppressing the thermal decomposition or hydrolysis reaction of fibers. For example, the heat treatment temperature is preferably 50°C or higher and 300°C or lower, more preferably 100°C or higher and 250°C or lower, and further preferably 130°C or higher and 200°C or lower. In addition, apparatuses having various heating media can be utilized

in the heat treatment, and examples of such an apparatus that can be used herein may include a stirring drying device, a rotary drying device, a disk drying device, a roll-type heating device, a plate-type heating device, a fluidized bed drying device, a band-type drying device, a filtration drying device, a vibrating fluidized drying device, an airborne drying device, a vacuum drying device, an infrared heating device, a far-infrared heating device, a microwave heating device, and a high frequency drying device.

In the heat treatment according to the present embodiment, a method comprising adding Compound A to a thin sheet-like fiber raw material by impregnation or the like, and then heating the fiber raw material, or a method comprising heating a fiber raw material, while kneading or stirring the fiber raw material and Compound A using a kneader or the like, can be adopted. Thereby, the unevenness in the concentration of the Compound A in the fiber raw material can be suppressed, and phosphorus oxoacid groups can be more uniformly introduced into the surface of cellulose fibers comprised in the fiber raw material. This is considered because, when water molecules move to the surface of the fiber raw material as drying advances, Compound A dissolved therein is attracted to the water molecules due to surface tension and as a result, Compound A also moves to the surface of the fiber raw material (specifically, the unevenness in the concentration of the Compound A occurs), and because such a phenomenon can be suppressed by adopting the aforementioned method.

As a heating device used for the heat treatment, for example, a device capable of always discharging moisture retained by slurry or moisture generated by the dehydration condensation (phosphoric acid esterification) reaction of Compound A with hydroxyl groups, etc. comprised in cellulose or the like in the fiber raw material, to the outside of the device system, is preferable. Such a heating device may be, for example, a ventilation-type oven. By always discharging moisture from the device system, in addition to being able to suppress a hydrolysis reaction of phosphoric acid ester bonds, which is a reverse reaction of the phosphoric acid esterification, the acid hydrolysis of sugar chains in the fibers may also be suppressed. Thus, it becomes possible to obtain ultrafine cellulose fibers with a high axial ratio.

The time for the heat treatment is for example preferably 1 second or more and 300 minutes or less, more preferably 1 second or more and 1000 seconds or less, and further preferably 10 seconds or more and 800 seconds or less, after moisture has been substantially removed from the fiber raw material. In the present embodiment, by setting the heating temperature and the heating time within an appropriate range, the amount of phosphorus oxoacid groups introduced can be set within a preferred range.

The phosphorus oxoacid group introduction step may be performed at least once, but may also be repeated two or more times. By performing the phosphorus oxoacid group introduction step two or more times, many phosphorus oxoacid groups can be introduced into the fiber raw material.

The amount of phosphorus oxoacid groups introduced into the fiber raw material may be, for example, per 1 g (mass) of the ultrafine cellulose fibers, preferably 0.10 mmol/g or more, more preferably 0.20 mmol/g or more, further preferably 0.50 mmol/g or more, and particularly preferably 1.00 mmol/g or more. On the other hand, the amount of phosphorus oxoacid groups introduced into the fiber raw material may be, for example, per 1 g (mass) of the ultrafine cellulose fibers, preferably 5.20 mmol/g or less, more preferably 3.65 mmol/g or less, and further preferably 3.00 mmol/g or less. By setting the amount of phosphorus oxoacid groups introduced to be within the above-described range, it may become easy to perform fibrillation on the fiber raw material, and the stability of the ultrafine cellulose fibers can be enhanced.

< Carboxy group introduction step >

The carboxy group introduction step is carried out by performing ozonation, oxidation according to the Fenton method, or an oxidation treatment such as a TEMPO oxidation treatment on a fiber raw material comprising cellulose, or by treating such a fiber raw material comprising cellulose with a compound having a carboxylic acid-derived group or a derivative thereof, or with an acid anhydride of the compound having a carboxylic acid-derived group or a derivative thereof.

Examples of the compound having a carboxylic acid-derived group may include, but are not particularly limited to, dicarboxylic acid compounds such as maleic acid, succinic acid, phthalic acid, fumaric acid, glutaric acid, adipic acid or itaconic acid, and tricarboxylic acid compounds such as citric acid or aconitic acid. In addition, examples of the derivative of the compound having a carboxylic acid-derived group may include, but are not particularly limited to, an imidized product of the acid anhydride of the compound having a carboxy group and a derivative of the acid anhydride of the compound having a carboxy group. Examples of the imidized product of the acid anhydride of the compound having a carboxy group may include, but are not particularly limited to, imidized products of dicarboxylic acid compounds, such as maleimide, succinimide or phthalimide.

Examples of the acid anhydride of the compound having a carboxylic acid-derived group may include, but are not particularly limited to, acid anhydrides of dicarboxylic acid compounds, such as maleic anhydride, succinic anhydride, phthalic anhydride, glutaric anhydride, adipic anhydride, or itaconic anhydride. In addition, examples of the derivative of the acid anhydride of the compound having a carboxylic acid-derived group may include, but are not particularly limited

to, acid anhydrides of the compounds having a carboxy group, in which at least some hydrogen atoms are substituted with substituents such as alkyl groups or phenyl groups, such as dimethylmaleic anhydride, diethylmaleic anhydride, or diphenylmaleic anhydride.

In the case of performing a TEMPO oxidation treatment in the carboxy group introduction step, the treatment is preferably carried out, for example, under conditions of pH 6 or more and pH 8 or less. Such a treatment is also referred to as a neutral TEMPO oxidation treatment. The neutral TEMPO oxidation treatment can be carried out, for example, by adding pulp used as a fiber raw material, nitroxy radical used as a catalyst, such as TEMPO (2,2,6,6-tetramethylpiperidin-1-oxyl), and sodium hypochlorite used as a sacrifice reagent to a sodium phosphate buffer (pH = 6.8). Moreover, by allowing sodium chlorite to coexist in the reaction system, aldehyde generated in the oxidation process can be efficiently oxidized to a carboxy group. Moreover, the TEMPO oxidation treatment may be carried out under conditions of pH 10 or more and pH 11 or less. Such a treatment is also referred to as an "alkaline TEMPO oxidation treatment." The alkaline TEMPO oxidation treatment can be carried out, for example, by adding nitroxy radicals such as TEMPO used as a catalyst, sodium bromide used as a co-catalyst, and sodium hypochlorite used as an oxidizer, to pulp as a fiber raw material.

The amount of carboxy groups introduced into the fiber raw material is different depending on the types of the substituents. When carboxy groups are introduced into the fiber raw material, for example, according to TEMPO oxidation, the amount of the carboxy groups introduced may be, per 1 g (mass) of the ultrafine cellulose fibers, preferably 0.10 mmol/g or more, more preferably 0.20 mmol/g or more, further preferably 0.50 mmol/g or more, and particularly preferably 0.90 mmol/g or more. On the other hand, the amount of the carboxy groups introduced is, per 1 g (mass) of the ultrafine cellulose fibers, preferably 2.5 mmol/g or less, more preferably 2.20 mmol/g or less, and further preferably 2.00 mmol/g or less. Otherwise, when the substituents are carboxymethyl groups, the amount of the carboxy groups introduced may be, per 1 g (mass) of the ultrafine cellulose fibers, 5.8 mmol/g or less.

< Sulfur oxoacid group introduction step >

The step of producing ultrafine cellulose fibers may comprise a sulfur oxoacid group introduction step as an anionic group introduction step. In the sulfur oxoacid group introduction step, hydroxyl groups possessed by a fiber raw material comprising cellulose react with sulfur oxoacid, so that cellulose fibers having sulfur oxoacid groups (sulfur oxoacid group-introduced fibers) can be obtained.

In the sulfur oxoacid group introduction step, instead of Compound A used in the aforementioned < Phosphorus oxoacid group introduction step >, at least one type of compound selected from among compounds capable of introducing sulfur oxoacid groups by reacting with hydroxyl groups possessed by a fiber raw material comprising cellulose is used (hereinafter also referred to as "Compound C"). Compound C may be a compound having sulfur atoms and being capable of forming an ester bond with cellulose. Examples of such Compound C may include sulfuric acid or a salt thereof, sulfurous acid or a salt thereof, and amide sulfate, but are not particularly limited thereto. As such sulfuric acid, those having various purities can be used, and for example, 96% sulfuric acid (concentrated sulfuric acid) can be used. Sulfurous acid may be 5% sulfurous acid solution. Examples of sulfate or sulfite may include lithium salts, sodium salts, potassium salts, and ammonium salts of sulfate or sulfide, and these salts may have various neutralization degrees. As amide sulfate, sulfamic acid or the like can be used. In the sulfur oxoacid group introduction step, the same Compound B as that used in the aforementioned < phosphorus oxoacid group introduction step > is preferably used.

In the sulfur oxoacid group introduction step, it is preferable that sulfonic acid and an aqueous solution containing urea and/or a urea derivative are mixed into a cellulose raw material, and that a heat treatment is then performed on the cellulose raw material. As a temperature for such a heat treatment, it is preferable to select a temperature that enables an efficient introduction of sulfur oxoacid groups, while suppressing the thermal decomposition or hydrolysis reaction of fibers. The heat treatment temperature is preferably 100°C or higher, more preferably 120°C or higher, and further preferably 150°C or higher. On the other hand, the heat treatment temperature is preferably 300°C or lower, more preferably 250°C or lower, and further preferably 200°C or lower.

In the heat treatment step, heating is preferably performed until a water content is substantially lost. Thus, the time for the heat treatment is fluctuated depending on the water content in the cellulose raw material and the additive amounts of the sulfonic acid and the aqueous solution containing urea and/or a urea derivative. For example, the heat treatment time is preferably set to be 10 seconds or more and 10000 seconds or less. For the heat treatment, apparatuses having various heating media can be utilized, and examples of such an apparatus that can be used herein may include a stirring drying device, a rotary drying device, a disk drying device, a roll-type heating device, a plate-type heating device, a fluidized bed drying device, a band-type drying device, a filtration drying device, a vibrating fluidized drying device, an airborne drying device, a vacuum drying device, an infrared heating device, a far-infrared heating device, a microwave heating device, and a high frequency drying device.

The amount of sulfur oxoacid groups introduced in the sulfur oxoacid group introduction step is, per g (mass) of the fiber raw material, preferably 0.10 mmol/g or more, more preferably 0.20 mmol/g or more, further preferably 0.50

mmol/g or more, and particularly preferably 1.00 mmol/g or more. On the other hand, the amount of sulfur oxoacid groups introduced is, for example, per g (mass) of the fiber raw material, preferably 5.00 mmol/g or less, and more preferably 3.00 mmol/g or less.

< Xanthate group introduction step >

The step of producing the ultrafine cellulose fibers may comprise a xanthate group introduction step as an anionic group introduction step. In the xanthate group introduction step, hydroxyl groups possessed by a fiber raw material comprising cellulose are substituted with xanthate groups represented by the following formula (3), so that cellulose fibers having xanthate groups (xanthate group-introduced fibers) can be obtained.

$-OCSS^{-}M^{+}$...... (3)

In the above formula (3), $M^+$ represents at least one type selected from among a hydrogen ion, a monovalent metal ion, an ammonium ions, and an aliphatic or aromatic ammonium ion.

In the xanthate group introduction step, first, an alkali treatment is performed to treat the above-described fiber raw material comprising cellulose with an alkali solution, so as to obtain alkali cellulose. Examples of the alkaline solution may include an alkali metal hydroxide aqueous solution and an alkaline-earth metal hydroxide aqueous solution. Among others, the alkaline solution is preferably an alkali metal hydroxide aqueous solution such as sodium hydroxide or potassium hydroxide, and is particularly preferably a sodium hydroxide aqueous solution. When the alkaline solution is an alkali metal hydroxide aqueous solution, the concentration of alkali metal hydroxide in the alkali metal hydroxide aqueous solution is preferably 4% by mass or more, and more preferably 5% by mass or more. On the other hand, the concentration of alkali metal hydroxide in the alkali metal hydroxide aqueous solution is preferably 9% by mass or less. By setting the alkali metal hydroxide concentration to be the above-described lower limit value or more, mercerization of cellulose can be sufficiently promoted, and the amount of by-products generated upon the subsequent xanthation can be reduced, and as a result, the yield of xanthate group-introduced fibers can be enhanced. Thereby, the after-mentioned defibration treatment can be more effectively carried out. On the other hand, by setting the alkali metal hydroxide concentration to be the above-described upper limit value or less, permeation of the alkali metal hydroxide aqueous solution into the crystal region of cellulose can be suppressed, while promoting mercerization. As a result, the cellulose type I crystal structure is easily maintained, and the yield of the ultrafine cellulose fibers can be further enhanced.

The time for the above-described alkali treatment is preferably 30 minutes or more, and more preferably 1 hour or more. On the other hand, the alkali treatment time is preferably 6 hours or less, and more preferably 5 hours or less. By setting the alkali treatment time within the above-described range, a final yield can be enhanced, and productivity can be thereby enhanced.

It is preferable that the alkali cellulose obtained in the above-described alkali treatment is then subjected to solid-liquid separation to remove the aqueous solution as much as possible. Thereby, the water content can be reduced upon the subsequent xanthation treatment, so that the reaction can be promoted. As such a solid-liquid separation method, common dehydration methods such as, for example, centrifugation or filtration, can be used. Besides, the concentration of the alkali metal hydroxide contained in the alkali cellulose after completion of the solid-liquid separation is preferably 3% by mass or more and 8% by mass or less, with respect to the total mass of the alkali cellulose after completion of the solid-liquid separation.

In the xanthate group introduction step, a xanthation treatment step is carried out after completion of the alkali treatment. In the xanthation treatment step, carbon disulfide ($CS_2$) is reacted with alkali cellulose to convert the ($-O^{-}Na^{+}$) groups to ($-OCSS^{-}$ $Na^{+}$) groups, thereby obtaining xanthate group-introduced fibers. Besides, in the above description, metal ions introduced into the alkali cellulose are representatively described as $Na^+$, but the same reaction as described above progresses even using other alkali metal ions.

In the xanthation treatment, 10% by mass or more of carbon disulfide is preferably supplied with respect to the absolute dry mass of cellulose in the alkali cellulose. In addition, in the xanthation treatment, the period of time, in which the carbon disulfide is allowed to come into contact with the alkali cellulose, is preferably 30 minutes or more, and more preferably 1 hour or more. By allowing the carbon disulfide to come into contact with the alkali cellulose, xanthation promptly progresses. However, since it takes a considerable period of time for the carbon disulfide to permeate into the alkali cellulose, the reaction time is preferably set within the above-described range. On the other hand, the period of time, in which the carbon disulfide is allowed to come into contact with the alkali cellulose, is 6 hours or less, and thereby, permeation of the carbon disulfide is sufficiently carried out even into a mass of alkali cellulose after completion of the dehydration, and reactive xanthation can be almost completed.

The reaction temperature in the xanthation treatment is preferably 46°C or lower. By setting the reaction temperature within the above-described range, decomposition of the alkali cellulose is easily suppressed. In addition, by setting the reaction temperature within the above-described range, since a uniform reaction is easily carried out, generation of by-products can be suppressed, and further, the removal of the generated xanthate groups can also be suppressed.

The amount of xanthate groups introduced in the xanthate group introduction step is, per g (mass) of the fiber raw material, preferably 0.10 mmol/g or more, more preferably 0.20 mmol/g or more, further preferably 0.50 mmol/g or more, and particularly preferably 1.00 mmol/g or more. On the other hand, the amount of xanthate groups introduced is, for example, per g (mass) of the fiber raw material, preferably 5.00 mmol/g or less, and more preferably 3.00 mmol/g or less.

< Oxidation step with chlorine-based oxidizer (second carboxy group introduction step) >

The step of producing ultrafine cellulose fibers may comprise, for example, an oxidation step using a chlorine-based oxidizer as an ionic substituent introduction step. In the oxidation step using a chlorine-based oxidizer, the chlorine-based oxidizer is added to a wet- or dry-state fiber raw material having hydroxyl groups, followed by performing a reaction, so that carboxy groups are introduced into the fiber raw material.

Examples of the chlorine-based oxidizer may include hypochlorous acid, hypochlorite, chlorous acid, chlorite, chloric acid, chlorate, perchloric acid, perchlorate, and chlorine dioxide. From the viewpoint of the efficiency of substituent introduction, and further, defibration efficiency, costs, and the ease of handling, sodium hypochlorite, sodium chlorite, and chlorine dioxide are preferable.

The chlorine-based oxidizer may be directly added to the fiber raw material, or may be dissolved in a suitable solvent and may be then added to the fiber raw material.

The temperature applied upon the reaction in the oxidation step using such a chlorine-based oxidizer is, for example, preferably 10°C or higher and 100°C or lower, more preferably 15°C or higher and 80°C or lower, and further preferably 20°C or higher and 60°C or lower.

In the oxidation step using a chlorine-based oxidizer, the concentration of the chlorine-based oxidizer in a solution is preferably 1% by mass or more and 1000% by mass or less, more preferably 5% by mass or more and 500% by mass or less, and further preferably 10% by mass or more and 100% by mass or less, for example, relative to the effective chlorine concentration.

The additive amount of the chlorine-based oxidizer is preferably 1 part by mass or more and 100000 parts by mass or less, more preferably 10 parts by mass or more and 10000 parts by mass or less, and further preferably 100 parts by mass or more and 5000 parts by mass or less, with respect to 100 parts by mass of the fiber raw material.

In the oxidation step using a chlorine-based oxidizer, the reaction time with the chlorine-based oxidizer can be changed depending on the reaction temperature, and it is, for example, preferably 1 minute or more and 1000 minutes or less, more preferably 10 minutes or more and 500 minutes or less, and further preferably 20 minutes or more and 400 minutes or less.

The pH applied upon the reaction is preferably pH 5 or more and 15 or less, more preferably pH 7 or more and 14 or less, and further preferably pH 9 or more and 13 or less. In addition, upon initiation of the reaction, it is preferable to maintain the pH value in the reaction at a constant value (e.g. pH 11), while appropriately adding hydrochloric acid or sodium hydroxide. Moreover, after completion of the reaction, excessive reaction reagents, by-products and the like may be washed with water and may be removed according to filtration, etc.

< Xanthate group introduction step (xanthogenic acid esterification step) >

The step of producing ultrafine cellulose fibers may comprise, for example, a xanthate group introduction step (hereinafter also referred to as a "xanthetization step") as an ionic substituent introduction step. In the xanthetization step, by adding carbon disulfide and an alkaline compound to a wet- or dry-state fiber raw material having hydroxyl groups, followed by performing a reaction, xanthate groups are introduced into the fiber raw material. Specifically, carbon disulfide is added to an alkali cellulosic fiber raw material by the below-mentioned method, and the reaction is then carried out.

« Alkali cellulosification »

Upon introduction of ionic functional groups into the fiber raw material, it is preferable to allow an alkaline solution to act on cellulose comprised in the fiber raw material, so as to convert the cellulose to alkali cellulose. By this treatment, some hydroxyl groups of the cellulose are ionically dissociated, so that nucleophilicity (reactivity) can be enhanced. The alkaline compound comprised in the alkaline solution is not particularly limited, and it may be either an inorganic alkaline compound or an organic alkaline compound. For example, sodium hydroxide, potassium hydroxide, tetraethylammonium hydroxide, or tetrabutylammonium hydroxide is preferably used because of their high versatility. The alkali cellulosification may be performed at the same time as the introduction of ionic functional groups, or it may

also be performed as a preliminary step of the introduction of ionic functional groups. Otherwise, the alkali cellulosification may be carried out at both times.

The temperature of the solution applied at initiation of the alkali cellulosification is preferably 0°C or higher and 50°C or lower, more preferably 5°C or higher and 40°C or lower, and further preferably 10°C or higher and 30°C or lower.

The concentration of the alkaline solution is, as a morality, preferably 0.01 mol/L or more and 4 mol/L or less, more preferably 0.1 mol/L or more and 3 mol/L or less, and further preferably 1 mol/L or more and 2.5 mol/L or less. In particular, when the treatment temperature is lower than 10°C, the concentration of the alkaline solution is preferably 1 mol/L or more and 2 mol/L or less.

The treatment time in the alkali cellulosification is 1 minute or more, more preferably 10 minutes or more, and further preferably 30 minutes or more. On the other hand, the alkali treatment time is preferably 6 hours or less, more preferably 5 hours or less, and further preferably 4 hours or less.

By adjusting the type of the alkaline solution, the treatment temperature, the concentration and the immersion time, as described above, permeation of the alkaline solution into the crystal region of cellulose can be suppressed, the cellulose type I crystal structure is easily maintained, and the yield of the ultrafine cellulose fibers can be enhanced.

When the introduction of ionic functional groups and alkali cellulosification are not carried out simultaneously, the alkali cellulose obtained by the alkali treatment is subjected to solid-liquid separation according to a common dewatering method such as centrifugation or filtration, so that water content is preferably removed from the alkali cellulose. Thereby, the reaction efficiency in the subsequent ionic functional group introduction step is improved. The cellulose fiber concentration after completion of the solid-liquid separation is preferably 5% or more and 50% or less, more preferably 10% or more and 40% or less, and further preferably 15% or more and 35% or less.

< Phosphone group or phosphine group introduction step (phosphoalkylation step) >

The step of producing ultrafine cellulose fibers may comprise, for example, a phosphone group or phosphine group introduction step (phosphoalkylation step) as an ionic substituent introduction step. In the phosphoalkylation step, a compound having reactive groups and phosphone groups or phosphine groups (Compound $E_A$) serving as an essential component, and an alkaline compound and Compound B selected from the aforementioned urea and a derivative thereof, which serve as optional components, are added to a wet- or dry-state fiber raw material having hydroxyl groups, followed by performing a reaction, so that the phosphone groups or the phosphine groups can be introduced into the fiber raw material.

Examples of the reactive group may include an alkyl halide group, a vinyl group, and an epoxy group (glycidyl group).

Examples of the Compound $E_A$ may include vinylphosphonic acid, phenylvinylphosphonic acid, and phenylvinylphosphinic acid. From the viewpoint of the efficiency of substituent introduction, and further, defibration efficiency, costs and the ease of handling, vinylphosphonic acid is preferable.

Further, it is also preferable to use Compound B in the aforementioned < Phosphorus oxoacid group introduction step > as an optional component, and also, the additive amount of Compound B is preferably set to be that as mentioned above.

Regarding Compound $E_A$, the reagent may be directly added to the fiber raw material, or may be dissolved in a suitable solvent and may be then added. It is preferable that the fiber raw material has been subjected to alkali cellulosification in advance, or that the fiber raw material is subjected to alkali cellulosification at the same time as the reaction. The alkali cellulosification method is as mentioned above.

The temperature upon the reaction is, for example, preferably 50°C or higher and 300°C or lower, more preferably 100°C or higher and 250°C or lower, and further preferably 130°C or higher and 200°C or lower.

The additive amount of the Compound $E_A$ is preferably 1 part by mass or more and 100000 parts by mass or less, more preferably 2 parts by mass or more and 10000 parts by mass or less, and further preferably 5 parts by mass or more and 1000 parts by mass or less, with respect to 100 parts by mass of the fiber raw material.

The reaction time can be changed depending on the reaction temperature, and it is, for example, preferably 1 minute or more and 1000 minutes or less, more preferably 10 minutes or more and 500 minutes or less, and further preferably 20 minutes or more and 400 minutes or less.

Moreover, after completion of the reaction, excessive reaction reagents, by-products and the like may be washed with water and may be removed according to filtration, etc.

< Sulfone group introduction step (sulfoalkylation step) >

The step of producing ultrafine cellulose fibers may comprise, for example, a sulfone group introduction step (sulfoalkylation step) as an ionic substituent introduction step. In the sulfoalkylation step, a compound having reactive groups and sulfone groups (Compound $E_B$) serving as an essential component, and an alkaline compound and Compound

B selected from the aforementioned urea and a derivative thereof, which serve as optional components, are added to a wet- or dry-state fiber raw material having hydroxyl groups, followed by performing a reaction, so that the sulfone groups can be introduced into the fiber raw material.

Examples of the reactive group may include an alkyl halide group, a vinyl group, and an epoxy group (glycidyl group).

Examples of the Compound $E_B$ may include sodium 2-chloroethanesulfonate, sodium vinyl sulfonate, sodium p-styrenesulfonate, and 2-acrylamido-2-methylpropanesulfonic acid. Among these, from the viewpoint of the efficiency of substituent introduction, and further, defibration efficiency, costs and the ease of handling, sodium vinyl sulfonate is preferable.

Further, it is also preferable to use Compound B in the aforementioned < Phosphorus oxoacid group introduction step > as an optional component, and also, the additive amount of Compound B is preferably set to be that as mentioned above.

Regarding Compound $E_B$, the reagent may be directly added to the fiber raw material, or may be dissolved in a suitable solvent and may be then added. It is preferable that the fiber raw material has been subjected to alkali cellulosification in advance, or that the fiber raw material is subjected to alkali cellulosification at the same time as the reaction. The alkali cellulosification method is as mentioned above.

The temperature upon the reaction is, for example, preferably 50°C or higher and 300°C or lower, more preferably 100°C or higher and 250°C or lower, and further preferably 130°C or higher and 200°C or lower.

The additive amount of the Compound $E_B$ is preferably 1 part by mass or more and 100000 parts by mass or less, more preferably 2 parts by mass or more and 10000 parts by mass or less, and further preferably 5 parts by mass or more and 1000 parts by mass or less, with respect to 100 parts by mass of the fiber raw material.

The reaction time can be changed depending on the reaction temperature, and it is, for example, preferably 1 minute or more and 1000 minutes or less, more preferably 10 minutes or more and 500 minutes or less, and further preferably 15 minutes or more and 400 minutes or less.

Moreover, after completion of the reaction, excessive reaction reagents, by-products and the like may be washed with water and may be removed according to filtration, etc.

< Carboxyalkylation step (third carboxy group introduction step) >

The step of producing ultrafine cellulose fibers may comprise, for example, a carboxyalkylation step as an ionic substituent introduction step. A compound having reactive groups and carboxy groups (Compound $E_C$) serving as an essential component, and an alkaline compound and Compound B selected from the aforementioned urea and a derivative thereof, which serve as optional components, are added to a wet- or dry-state fiber raw material having hydroxyl groups, followed by performing a reaction, so that the carboxy groups can be introduced into the fiber raw material.

Examples of the reactive group may include an alkyl halide group, a vinyl group, and an epoxy group (glycidyl group).

From the viewpoint of the efficiency of substituent introduction, and further, defibration efficiency, costs and the ease of handling, the Compound $E_C$ is preferably monochloroacetic acid, sodium monochloroacetate, 2-chloropropionic acid, 3-chloropropionic acid, sodium 2-chloropropionate, or sodium 3-chloropropionate.

Further, it is also preferable to use Compound B in the aforementioned < Phosphorus oxoacid group introduction step > as an optional component, and also, the additive amount of Compound B is preferably set to be that as mentioned above.

Regarding Compound $E_C$, the reagent may be directly added to the fiber raw material, or may be dissolved in a suitable solvent and may be then added. It is preferable that the fiber raw material has been subjected to alkali cellulosification in advance, or that the fiber raw material is subjected to alkali cellulosification at the same time as the reaction. The alkali cellulosification method is as mentioned above.

The temperature upon the reaction is, for example, preferably 50°C or higher and 300°C or lower, more preferably 100°C or higher and 250°C or lower, and further preferably 130°C or higher and 200°C or lower.

The additive amount of the Compound $E_C$ is preferably 1 part by mass or more and 100000 parts by mass or less, more preferably 2 parts by mass or more and 10000 parts by mass or less, and further preferably 5 parts by mass or more and 1000 parts by mass or less, with respect to 100 parts by mass of the fiber raw material.

The reaction time can be changed depending on the reaction temperature, and it is, for example, preferably 1 minute or more and 1000 minutes or less, more preferably 3 minutes or more and 500 minutes or less, and further preferably 5 minutes or more and 400 minutes or less.

Moreover, after completion of the reaction, excessive reaction reagents, by-products and the like may be washed with water and may be removed according to filtration, etc.

< Cationic group introduction step (cationization step) >

A compound having reactive groups and cationic groups (Compound $E_D$) serving as an essential component, and an alkaline compound and Compound B selected from the aforementioned urea and a derivative thereof, which serve as optional components, are added to a wet- or dry-state fiber raw material having hydroxyl groups, followed by performing a reaction, so that the cationic groups can be introduced into the fiber raw material.

Examples of the reactive group may include an alkyl halide group, a vinyl group, and an epoxy group (glycidyl group).

From the viewpoint of the efficiency of substituent introduction, and further, defibration efficiency, costs and the ease of handling, the Compound $E_D$ is preferably glycidyltrimethylammonium chloride, 3-chloro-2-hydroxypropyltrimethylammonium chloride, or the like.

Further, it is also preferable to use Compound B in the aforementioned < Phosphorus oxoacid group introduction step > as an optional component, and also, the additive amount of Compound B is preferably set to be that as mentioned above.

Regarding Compound $E_D$, the reagent may be directly added to the fiber raw material, or may be dissolved in a suitable solvent and may be then added. It is preferable that the fiber raw material has been subjected to alkali cellulosification in advance, or that the fiber raw material is subjected to alkali cellulosification at the same time as the reaction. The alkali cellulosification method is as mentioned above.

The temperature upon the reaction is, for example, preferably 50°C or higher and 300°C or lower, more preferably 100°C or higher and 250°C or lower, and further preferably 130°C or higher and 200°C or lower.

The additive amount of the Compound $E_D$ is preferably 1 part by mass or more and 100000 parts by mass or less, more preferably 2 parts by mass or more and 10000 parts by mass or less, and further preferably 5 parts by mass or more and 1000 parts by mass or less, with respect to 100 parts by mass of the fiber raw material.

The reaction time can be changed depending on the reaction temperature, and it is, for example, preferably 1 minute or more and 1000 minutes or less, more preferably 5 minutes or more and 500 minutes or less, further preferably 10 minutes or more and 400 minutes or less.

Moreover, after completion of the reaction, excessive reaction reagents, by-products and the like may be washed with water and may be removed according to filtration, etc.

< Washing step >

In the method for producing ultrafine cellulose fibers according to the present embodiment, a washing step may be performed on the ionic substituent-introduced fibers, as necessary. The washing step is carried out by washing the ionic substituent-introduced fibers, for example, with water or an organic solvent. In addition, the washing step may be performed after each step as described below, and the number of washing operations performed in each washing step is not particularly limited.

< Alkali treatment step >

When the ultrafine cellulose fibers are produced, an alkali treatment may be performed on the fiber raw material between the ionic substituent introduction step and a defibration treatment step as described below. The method of the alkali treatment is not particularly limited. For example, a method of immersing the ionic substituent-introduced fibers in an alkaline solution may be applied.

The alkali compound contained in the alkaline solution is not particularly limited, and it may be an inorganic alkaline compound or an organic alkali compound. In the present embodiment, because of high versatility, for example, sodium hydroxide or potassium hydroxide is preferably used as an alkaline compound. In addition, the solvent contained in the alkaline solution may be either water or an organic solvent. Among others, the solvent contained in the alkaline solution is preferably water, or a polar solvent including a polar organic solvent such as alcohol, and is more preferably an aqueous solvent containing at least water. As an alkaline solution, for example, a sodium hydroxide aqueous solution or a potassium hydroxide aqueous solution is preferable, because of high versatility.

The temperature of the alkali solution in the alkali treatment step is not particularly limited, and for example, it is preferably 5°C or higher and 80°C or lower, and more preferably 10°C or higher and 60°C or lower. The time for immersion of the phosphorus oxoacid group -introduced fibers in the alkali solution in the alkali treatment step is not particularly limited, and for example, it is preferably 5 minutes or more and 30 minutes or less, and more preferably 10 minutes or more and 20 minutes or less. The amount of the alkali solution used in the alkali treatment is not particularly limited, and for example, it is preferably 100% by mass or more and 100000% by mass or less, and more preferably 1000% by mass and 10000% by mass or less, with respect to the absolute dry mass of the phosphorus oxoacid group -introduced fibers.

In order to reduce the amount of the alkaline solution used in the alkali treatment step, the ionic substituent-introduced fibers may be washed with water or an organic solvent after the ionic substituent introduction step and before the alkali treatment step. After the alkali treatment step and before the defibration step, the alkali-treated ionic substituent-introduced fibers are preferably washed with water or an organic solvent, from the viewpoint of the improvement of the handling ability.

< Acid treatment step >

When ultrafine cellulose fibers are produced, an acid treatment may be performed on the fiber raw material between the step of introducing ionic substituents and the after-mentioned defibration treatment step. For example, an ionic substituent introduction step, an acid treatment, an alkali treatment, and a defibration treatment may be performed in this order.

Such an acid treatment method is not particularly limited, and for example, a method of immersing the fiber raw material in an acid solution containing an acid may be applied. The concentration of the used acid solution is not particularly limited, and for example, it is preferably 10% by mass or less, and more preferably 5% by mass or less. In addition, the pH of the used acid solution is not particularly limited, and for example, it is preferably a pH value of 0 or more and 4 or less, and more preferably a pH value of 1 or more and 3 or less. Examples of the acid contained in the acid solution that can be used herein may include inorganic acid, sulfonic acid, and carboxylic acid. Examples of the inorganic acid may include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid may include methanesulfonic acid, ethanesulfonic acid, benzenesulfonic acid, p-toluenesulfonic acid, and trifluoromethanesulfonic acid. Examples of the carboxylic acid may include formic acid, acetic acid, citric acid, gluconic acid, lactic acid, oxalic acid, and tartaric acid. Among these acids, it is particularly preferable to use hydrochloric acid or sulfuric acid.

The temperature of the acid solution used in the acid treatment is not particularly limited, and for example, it is preferably 5°C or higher and 100°C or lower, and more preferably 20°C or higher and 90°C or lower. The time for immersion of the fiber raw material in the acid solution in the acid treatment is not particularly limited, and for example, it is preferably 5 minutes or more and 120 minutes or less, and more preferably 10 minutes or more and 60 minutes or less. The amount of the acid solution used in the acid treatment is not particularly limited, and for example, it is preferably 100% by mass or more and 100000% by mass or less, and more preferably 1000% by mass or more and 10000% by mass or less, with respect to the absolute dry mass of the fiber raw material.

< Defibration treatment >

The ionic substituent-introduced fibers are subjected to a defibration treatment in a defibration treatment step, so as to obtain ultrafine cellulose fibers. In the defibration treatment step, for example, a defibration treatment apparatus can be used. Examples of the defibration treatment apparatus that can be used herein may include, but are not particularly limited to, a high-speed defibrator, a grinder (stone mill-type crusher), a high-pressure homogenizer, an ultrahigh-pressure homogenizer, a high-pressure collision-type crusher, a ball mill, a bead mill, a disc-type refiner, a conical refiner, a twinscrew kneader, an oscillation mill, a homomixer under high-speed rotation, an ultrasonic disperser, and a beater. Among the above-described defibration treatment apparatuses, a high-speed defibrator, a high-pressure homogenizer, and an ultrahigh-pressure homogenizer, which are less affected by milling media and are less likely to be contaminated, are more preferably used.

In the defibration treatment step, for example, the ionic substituent-introduced fibers are preferably diluted with a dispersion medium to form a slurry. As a dispersion medium, water, and one type or two or more types selected from organic solvents such as polar organic solvents can be used. The polar organic solvent is not particularly limited, and for example, alcohols, polyhydric alcohols, ketones, ethers, esters, aprotic polar solvents, etc. are preferable. Examples of the alcohols may include methanol, ethanol, isopropanol, n-butanol, and isobutyl alcohol. Examples of the polyhydric alcohols may include ethylene glycol, propylene glycol, and glycerin. Examples of the ketones may include acetone and methyl ethyl ketone (MEK). Examples of the ethers may include diethyl ether, tetrahydrofuran, ethylene glycol monomethyl ether, ethylene glycol monoethyl ether, ethylene glycol mono n-butyl ether, and propylene glycol monomethyl ether. Examples of the esters may include ethyl acetate and butyl acetate. Examples of the aprotic polar solvents may include dimethyl sulfoxide (DMSO), dimethylformamide (DMF), dimethylacetamide (DMAc), and N-methyl-2-pyrrolidinone (NMP).

The solid concentration of the ultrafine cellulose fibers upon the defibration treatment can be determined, as appropriate. In addition, in a slurry obtained by dispersing the ionic substituent-introduced fibers in a dispersion medium, solids other than the phosphorus oxoacid group-introduced fibers, such as hydrogen-binding urea, may be comprised.

< Nitrogen removal treatment >

The step of producing ultrafine cellulose fibers may further comprise a step of reducing the amount of nitrogen (i.e. a nitrogen removal treatment step). By reducing the nitrogen amount, ultrafine cellulose fibers capable of further suppressing coloration can be obtained. The nitrogen removal treatment step may be established before a defibration treatment step.

In the nitrogen removal treatment step, it is preferable that the pH of a slurry containing substituent-introduced fibers is adjusted to pH 10 or more, and that a heat treatment is then carried out. In the heat treatment, the liquid temperature of the slurry is preferably set to be 50°C or higher and 100°C or lower. The heating time is preferably set to be 15 minutes or more and 180 minutes or less. Upon the adjustment of the pH of the slurry containing substituent-introduced fibers, an alkaline compound that can be used in the aforementioned alkali treatment step is preferably added to the slurry.

After completion of the nitrogen removal treatment step, a washing step can be carried out on the substituent-introduced fibers, as necessary. The washing step is carried out by washing the ionic substituent-introduced fibers, for example, with water or an organic solvent. In addition, the number of washing operations performed in each washing step is not particularly limited.

< Substituent removal treatment >

The method for producing ultrafine cellulose fibers may comprise a step of removing at least a part of substituents from ultrafine cellulose fibers with a fiber width of 1000 nm or less having the substituents. By performing such a step, ultrafine cellulose fibers, in which the amount of substituents introduced is low, but which have a small fiber width, can be obtained. In the present description, the step of removing at least a part of substituents from ultrafine cellulose fibers is also referred to as a substituent removal treatment step.

Examples of the substituent removal treatment step may include a step of performing a heat treatment on ultrafine cellulose fibers with a fiber width of 1000 nm or less having substituents, a step of performing an enzyme treatment on the ultrafine cellulose fibers, a step of performing an acid treatment on the ultrafine cellulose fibers, and a step of performing an alkali treatment on the ultrafine cellulose fibers. These steps may be carried out alone or in combination. Among others, the substituent removal treatment step is preferably a step of performing a heat treatment on the ultrafine cellulose fibers, or a step of performing an enzyme treatment on the ultrafine cellulose fibers. By going through the above-described treatment step(s), at least a part of substituents are removed from the ultrafine cellulose fibers with a fiber width of 1000 nm or less having substituents, and thus, ultrafine cellulose fibers, in which the amount of substituents introduced is less than 0.5 mmol/g, can be obtained.

The substituent removal treatment step is preferably carried out on the ultrafine cellulose fibers that are in a slurry state. That is to say, the substituent removal treatment step is preferably a step of performing a heat treatment on a slurry containing ultrafine cellulose fibers with a fiber width of 1000 nm or less having substituents, a step of performing an enzyme treatment on the slurry, a step of performing an acid treatment on the slurry, and a step of performing an alkali treatment on the slurry. By performing the substituent removal treatment step on the ultrafine cellulose fibers that are in a slurry state, coloring substances generated due to heating or the like during the substituent removal treatment, or added or generated acids, alkalis, salts and the like can be prevented from remaining in the ultrafine cellulose fibers. Thereby, coloring of fiber layer and/or laminate can be suppressed. In addition, when salts derived from the substituents removed after the substituent removal treatment are subjected to a removal treatment, the efficiency of removing the salts can also be enhanced.

When a substituent removal treatment is performed on a slurry containing ultrafine cellulose fibers with a fiber width of 1000 nm or less having substituents, the concentration of the ultrafine cellulose fibers in the slurry is preferably 0.05% by mass or more, more preferably 0.1% by mass or more, and further preferably 0.2% by mass or more. On the other hand, the concentration of the ultrafine cellulose fibers in the slurry is preferably 20% by mass or less, more preferably 15% by mass or less, and further preferably 10% by mass or less. By setting the concentration of the ultrafine cellulose fibers in the slurry within the above-described range, the substituent removal treatment can be more efficiently carried out. Moreover, by setting the concentration of the ultrafine cellulose fibers in the slurry within the above-described range, coloring substances generated due to heating or the like during the substituent removal treatment, or added or generated acids, alkalis, salts and the like can be prevented from remaining in the ultrafine cellulose fibers. Thereby, coloring of fiber layer and/or laminate can be suppressed. In addition, when salts derived from the substituents removed after the substituent removal treatment are subjected to a removal treatment, the efficiency of removing the salts can also be enhanced.

When the substituent removal treatment step is a step of performing a heat treatment on ultrafine cellulose fibers with a fiber width of 1000 nm or less having substituent, the heating temperature applied in the heat treatment step is preferably 40°C or higher, more preferably 50°C or higher, and further preferably 60°C or higher. On the other

hand, the heating temperature applied in the heat treatment step is preferably 250°C or lower, more preferably 230°C or lower, and further preferably 200°C or lower. Among others, when the substituents possessed by the ultrafine cellulose fibers to be subjected to the substituent removal treatment step are phosphorus oxoacid groups, the heating temperature applied in the heat treatment step is preferably 80°C or higher, more preferably 100°C or higher, and further preferably 120°C or higher.

When the substituent removal treatment step is a heat treatment step, the heating apparatuses that can be used in the heat treatment step are not particularly limited. Examples of such heating apparatuses that can be used herein may include a hot-air drying device, a steam heating device, an electric heating device, a hydrothermal heating device, a thermal heating device, an infrared heating device, a far-infrared heating device, a microwave heating device, a high frequency drying device, a stirring drying device, a rotary drying device, a disk drying device, a roll-type heating device, a plate-type heating device, a fluidized bed drying device, a band-type drying device, a filtration drying device, a vibrating fluidized drying device, an airborne drying device, and a vacuum drying device. From the viewpoint of preventing evaporation, the heating is preferably carried out in a hermetically sealed system. Further, from the viewpoint of enhancing the heating temperature, the heating is preferably carried out in a pressure-resistant device or vessel. The heating treatment may be a batch treatment, a batch continuous treatment, or a continuous treatment.

When the substituent removal treatment step is a step of performing an enzyme treatment on ultrafine cellulose fibers with a fiber width of 1000 nm or less having substituents, in the enzyme treatment step, phosphoric acid ester hydrolase, sulfuric acid ester hydrolase, etc. is preferably used depending on the type of the substituents.

In the enzyme treatment step, the enzyme is added, so that the enzyme activity becomes preferably 0.1 nkat or more, more preferably 1.0 nkat or more, and further preferably 10 nkat or more, per g of the ultrafine cellulose fibers. On the other hand, the enzyme is added, so that the enzyme activity becomes preferably 100000 nkat or less, more preferably 50000 nkat or less, and further preferably 10000 nkat or less, per g of the ultrafine cellulose fibers. After addition of the enzyme to the ultrafine cellulose fibers-dispersed solution (slurry), the treatment is preferably carried out under conditions of 0°C or higher and lower than 50°C for 1 minutes or more and 100 hours or less.

After completion of the enzyme reaction, a step of inactivating the enzyme may be established. Examples of the method of inactivating the enzyme may include a method of adding an acid component or an alkali component to the slurry treated with the enzyme to inactivate the enzyme, and a method of increasing the temperature of the slurry treated with the enzyme to 90°C or higher to inactivate the enzyme.

When the substituent removal treatment step is a step of performing an acid treatment on ultrafine cellulose fibers with a fiber width of 1000 nm or less having substituents, in the acid treatment step, an acid compound that can be used in the aforementioned acid treatment step is preferably added to the slurry.

When the substituent removal treatment step is a step of performing an alkali treatment on ultrafine cellulose fibers with a fiber width of 1000 nm or less having substituents, in the alkali treatment step, an alkali compound that can be used in the aforementioned alkali treatment step is preferably added to the slurry.

In the substituent removal treatment step, it is preferable that the substituent-removing reaction uniformly progresses. In order to promote uniform progress of the reaction, for example, a slurry containing the ultrafine cellulose fibers may be stirred, and the specific surface area of the slurry may be enhanced. As a method of stirring the slurry, external mechanical shear may be given to the slurry, or the liquid transfer speed of the slurry is increased during the reaction, so that self-stirring may be promoted.

In the substituent removal treatment step, spacer molecules may be added. Such spacer molecules penetrate into the spaces among adjacent ultrafine cellulose fibers, and thereby act as spacers for establishing very small spaces among the ultrafine cellulose fibers. In the substituent removal treatment step, by adding such spacer molecule, aggregation of the ultrafine cellulose fibers after completion of the substituent removal treatment can be suppressed. Thereby, the transparency of fiber layer and/or laminate can be more effectively enhanced.

The spacer molecule is preferably a water-soluble organic compound. Examples of the water-soluble organic compound may include sugar, a water-soluble polymer, and urea. Specific examples of the water-soluble organic compound may include trehalose, urea, polyethylene glycol (PEG), polyethylene oxide (PEO), carboxymethyl cellulose, and polyvinyl alcohol (PVA). In addition, other examples of the water-soluble organic compound that can be used herein may include an alkyl methacrylate-acrylic acid copolymer, polyvinyl pyrrolidone, sodium polyacrylate, propylene glycol, dipropylene glycol, polypropylene glycol, isoprene glycol, hexylene glycol, 1,3-butylene glycol, polyacrylamide, xanthan gum, guar gum, tamarind gum, carrageenan, locust bean gum, quince seed, alginic acid, pullulan, carrageenan, pectin, starches such as cationized starch, raw starch, oxidized starch, etherified starch, esterified starch and amylose, glycerin, diglycerin, polyglycerin, hyaluronic acid, and a metal salt of hyaluronic acid.

Moreover, a known pigment can be used as such a spacer molecule. Examples of such a known pigment may include kaoline (containing clay), calcium carbonate, titanium oxide, zinc oxide, amorphous silica (containing colloidal silica), aluminum oxide, zeolite, sepiolite, smectite, synthetic smectite, magnesium silicate, magnesium carbonate, magnesium oxide, diatomaceous earth, a styrene-based plastic pigment, hydrotalcite, a urea resin-based plastic pigment, and a benzoguanamine-based plastic pigment.

< pH Adjustment step >

When the aforementioned substituent removal treatment step is carried out on the ultrafine cellulose fibers that are in a slurry state, before the substituent removal treatment step, a step of adjusting the pH of a slurry containing ultrafine cellulose fibers may be established. For example, in a case where ionic substituents are introduced into cellulose fibers and where the counterions of these ionic substituents are $Na^+$, the slurry containing ultrafine cellulose fibers after defibrillation exhibits weak alkalinity. If the slurry is heated in this state, monosaccharide as one of coloring factors may be generated due to decomposition of the cellulose in some cases. Hence, the pH of the slurry is preferably adjusted to pH 8 or less. Moreover, since there may be a case where monosaccharide is generated even under acidic conditions, the pH of the slurry is preferably adjusted to pH 3 or more.

Furthermore, when the ultrafine cellulose fibers having substituents are ultrafine cellulose fibers having phosphoric acid groups, from the viewpoint of improvement of the efficiency of removing substituents, the phosphorus of the phosphoric acid groups is preferably in a state in which it easily receives nucleophilic attack. The phosphorus of the phosphoric acid groups easily receives nucleophilic attack, when the phosphorus is in a state in which it has a neutralization degree of 1, which is represented by cellulose-OP(=O)(-O-$H^+$)(-O-$Na^+$). In order to achieve this state, the pH of the slurry is adjusted to preferably pH 3 or more and 8 or less, and more preferably pH 4 or more and 6 or less.

The means for adjusting pH is not particularly limited, and for example, an acid component or an alkali component may be added to the slurry containing ultrafine cellulose fibers. The acid component may be either inorganic acid or organic acid. Examples of the inorganic acid may include sulfuric acid, hydrochloric acid, nitric acid, and phosphoric acid. Examples of the organic acid may include formic acid, acetic acid, citric acid, malic acid, lactic acid, adipic acid, sebacic acid, stearic acid, maleic acid, succinic acid, tartaric acid, fumaric acid, and gluconic acid. The alkali component may be either an inorganic alkali compound, or an organic alkali compound. Examples of the inorganic alkali compound may include lithium hydroxide, sodium hydroxide, potassium hydroxide, lithium carbonate, lithium hydrogen carbonate, potassium carbonate, potassium hydrogen carbonate, sodium carbonate, and sodium hydrogen carbonate. Examples of the organic alkali compound may include ammonia, hydrazine, methylamine, ethylamine, diethylamine, triethylamine, propylamine, dipropylamine, butylamine, diaminoethane, diaminopropane, diaminobutane, diaminopentane, diaminohexane, cyclohexylamine, aniline, tetramethylammonium hydroxide, tetraethylammonium hydroxide, tetrapropylammonium hydroxide, tetrabutylammonium hydroxide, benzyltrimethylammonium hydroxide, pyridine, and N,N-dimethyl-4-aminopyridine.

Moreover, in the pH adjustment step, an ion exchange treatment may be carried out to adjust pH. Upon the ion exchange treatment, a strongly acidic cation exchange resin or a weakly acidic ion exchange resin can be used. By treating the slurry with an appropriate amount of cation exchange resin for a sufficient period of time, a slurry containing ultrafine cellulose fibers having a pH value of interest can be obtained. Further, in the pH adjustment step, addition of an acid component or an alkali component may be combined with an ion exchange treatment.

< Salt removal treatment >

After completion of the substituent removal treatment step, a treatment of removing salts derived from the removed substituents is preferably carried out. By removing the substituent-derived salts, ultrafine cellulose fibers capable of suppressing coloration are easily obtained. The means for removing the substituent-derived salts is not particularly limited, and examples of the means for removing the substituent-derived salts may include a washing treatment and an ion exchange treatment. The washing treatment is carried out, for example, by washing the ultrafine cellulose fibers aggregated by the substituent removal treatment with water or an organic solvent. In the ion exchange treatment, an ion exchange resin can be used.

< Uniform dispersion treatment >

After completion of the substituent removal treatment step, a step of uniformly dispersing the ultrafine cellulose fibers obtained via the substituent removal treatment may be established. By performing a substituent removal treatment on the ultrafine cellulose fibers, at least a part of the ultrafine cellulose fibers is aggregated. The uniform dispersion treatment step is a step of uniformly dispersing the thus aggregated ultrafine cellulose fibers.

In the uniform dispersion treatment step, for example, a high-speed defibrator, a grinder (stone mill-type crusher), a high-pressure homogenizer, a high-pressure collision-type crusher, a ball mill, a bead mill, a disc-type refiner, a conical refiner, a twin-screw kneader, an oscillation mill, a homomixer under high-speed rotation, an ultrasonic disperser, a beater or the like can be used. Among the above-described uniform dispersion treatment apparatuses, it is more preferable to use a high-speed defibrator or a high-pressure homogenizer.

Treatment conditions applied in the uniform dispersion treatment step are not particularly limited. It is preferable to increase the maximum movement speed of the ultrafine cellulose fibers during the treatment and the pressure applied

during the treatment. In the case of a high-speed defibrator, the circumferential speed is preferably 20 m/sec or more, more preferably 25 m/sec or more, and further preferably 30 m/sec or more. Since the high-pressure homogenizer has the maximum movement speed of the ultrafine cellulose fibers during the treatment and the pressure applied during the treatment, which are higher than those of the high-speed defibrator, the high-pressure homogenizer can be more preferably used. In the treatment with the high-pressure homogenizer, the pressure applied during the treatment is preferably 1 MPa or more and 350 MPa or less, more preferably 10 MPa or more and 300 MPa or less, and further preferably 50 MPa or more and 250 MPa or less.

Besides, in the uniform dispersion treatment step, the aforementioned spacer molecules may be newly added. In the uniform dispersion treatment step, by adding such spacer molecules, uniform dispersion of the ultrafine cellulose fibers can be more smoothly carried out. Thereby, the transparency of a fiber layer or a laminate can be more effectively enhanced.

< Step of producing fiber layer (ultrafine cellulose fiber-containing sheet) >

The method for producing a fiber layer may be, for example, a method comprising papermaking or applying (coating) the ultrafine cellulose fiber-containing slurry (dispersed solution) obtained via the aforementioned steps, and then drying the slurry to form an ultrafine cellulose fiber-containing sheet. The ultrafine cellulose fiber-containing sheet constitutes a fiber layer in a laminate.

The slurry used in the step of producing a fiber layer preferably further comprises a hydrophilic polymer, for example. Thereby, the transparency and mechanical strength of a fiber layer can be further improved. Examples of the hydrophilic polymer may include one or two or more types selected from those exemplified above.

< Coating step >

In the coating step, for example, a slurry (dispersed solution) comprising cellulose fibers is applied onto a base material, and is then dried to form a sheet, which is then detached from the base material, so as to obtain a sheet. In addition, using a coating apparatus and a long base material, the sheets can be continuously produced.

The material of the base material used in the coating step is not particularly limited. A base material having higher wettability to the composition (slurry) is preferable because shrinkage of the sheet or the like upon drying is suppressed. It is preferable to select one from which a sheet formed after drying can be easily detached. Among others, a resin film or plate, or a metal film or plate is preferable, but is not particularly limited thereto. Examples of the base material that can be used herein may include: resin films or plates, such as those made of acryl, polyethylene terephthalate, vinyl chloride, polystyrene, polypropylene, polycarbonate or polyvinylidene chloride; metal films or plates, such as those made of aluminum, zinc, copper, or iron; the aforementioned films or plates, the surfaces of which are subjected to an oxidation treatment; and stainless steel films or plates and brass films or plates.

When the slurry has a low viscosity and spreads on the base material in the coating step, a damming frame may be fixed and used on the base material in order to obtain a sheet having a predetermined thickness and basis weight. The damming frame is not particularly limited, and for example, it is preferable to select ones from which the edges of the sheet adhering thereto can be easily detached after drying. From such a viewpoint, frames molded from resin plates or metal plates are more preferable. In the present embodiment, examples of the frames that can be used herein may include: frames molded from resin plates, such as an acryl plate, a polyethylene terephthalate plate, a vinyl chloride plate, a polystyrene plate, a polypropylene plate, a polycarbonate plate, or a polyvinylidene chloride plate; frames molded from metal plates, such as an aluminum plate, a zinc plate, a copper plate, or an iron plate; the aforementioned frames, the surfaces of which are subjected to an oxidation treatment; and frames molded from stainless steel plates, brass plates, etc.

A coater for applying the slurry onto the base material is not particularly limited, and examples of such a coater that can be used herein may include roll coaters, gravure coaters, die coaters, curtain coaters, and air doctor coaters. Among these, die coaters, curtain coaters, and spray coaters are particularly preferable because these coaters can provide more even thickness to the sheet.

The slurry temperature and the ambient temperature applied upon application of the slurry onto the base material are not particularly limited, and for example, the temperatures are preferably 5°C or higher and 80°C or lower, more preferably 10°C or higher and 60°C or lower, further preferably 15°C or higher and 50°C or lower, and particularly preferably 20°C or higher and 40°C or lower. When the coating temperature is equal to or higher than the above-described lower limit value, it is possible to easily apply the slurry onto the base material. When the coating temperature is equal to or lower than the above-described upper limit value, it is possible to suppress volatilization of the dispersion medium during the coating.

As described above, the coating step comprises a step of drying the slurry applied onto the base material. The step of drying the slurry is not particularly limited, and for example, a contactless drying method or a method of drying

the sheet while locking the sheet, or a combination of these methods may be applied.

The contactless drying method is not particularly limited, and for example, a method for drying by heating with hot air, infrared radiation, far-infrared radiation, or near-infrared radiation (a drying method by heating) or a method for drying in vacuum (a vacuum drying method) can be applied. Although the drying method by heating and the vacuum drying method may be combined with each other, the drying method by heating is usually applied. The drying with infrared radiation, far-infrared radiation, or near-infrared radiation is not particularly limited, and for example, it can be performed using an infrared apparatus, a far-infrared apparatus, or a near-infrared apparatus. The heating temperature applied in the drying method by heating is not particularly limited, and it is preferably 20°C or higher and 150°C or lower, and more preferably 25°C or higher and 105°C or lower. If the heating temperature is set to be equal to or higher than the above-described lower limit value, the dispersion medium can be rapidly volatilized. On the other hand, if the heating temperature is set to be equal to or lower than the above-described upper limit value, reduction in costs required for the heating and suppression of the thermal discoloration of the cellulose fibers can be realized.

< Papermaking step >

The papermaking step is carried out by making a paper from a slurry using a paper machine. The paper machine used in the papermaking step is not particularly limited, and examples thereof may include continuous paper machines such as a Fourdrinier paper machine, a cylinder paper machine, and an inclined paper machine, and a multilayer combination paper machine, which is a combination thereof. A known papermaking method, such as papermaking by hand, may be adopted in the papermaking step.

The papermaking step is carried out by subjecting the slurry to wire-filtration and dehydration to obtain a sheet that is in a wet state, and then pressing and drying this sheet. The filter fabric used in the filtration and dehydration of the slurry is not particularly limited, and for example, a filter fabric, through which cellulose fibers do not pass and the filtration speed is not excessively slow, is more preferable. Such filter fabric is not particularly limited, and for example, a sheet, a woven fabric, or a porous membrane, each consisting of an organic polymer, is preferable. Preferred examples of the organic polymer may include, but are not particularly limited to, non-cellulose organic polymers such as polyethylene terephthalate, polyethylene, polypropylene, and polytetrafluoroethylene (PTFE). In the present embodiment, examples of the filter fabric may include a polytetrafluoroethylene porous membrane having a pore size of 0.1 μm or more and 20 μm or less, and a woven fabric made of polyethylene terephthalate or polyethylene having a pore size of 0.1 μm or more and 20 μm or less.

In the sheet formation step, the method for producing a sheet from a slurry can be carried out, for example, using a production apparatus comprising a dewatering section for ejecting a slurry comprising ultrafine cellulose fibers onto the upper surface of an endless belt and then dewatering a dispersion medium contained in the ejected slurry to form a web, and a drying section for drying the web to produce a sheet. The endless belt is provided across from the dewatering section to the drying section, and the web formed in the dewatering section is transferred to the drying section while being placed on the endless belt.

A method for producing a sheet from an ultrafine cellulose fiber-containing slurry is not particularly limited, and an example thereof is the method disclosed in WO 2011/013567 comprising using a production apparatus. This production apparatus comprises a dewatering section for ejecting an ultrafine cellulose fiber-containing slurry onto the upper surface of an endless belt and then dewatering a dispersion medium contained in the ejected slurry to form a web, and a drying section for drying the web to produce a fiber sheet. The endless belt is provided across from the dewatering section to the drying section, and the web formed in the dewatering section is transferred to the drying section while being placed on the endless belt.

The dehydration method that can be used in the present invention is not particularly limited. An example of the method is a dehydration method conventionally used for paper production. A preferred example is a method comprising performing dehydration using a Fourdrinier, cylinder, tilted wire, or the like and then performing dehydration using a roll press. In addition, a drying method is not particularly limited, and an example thereof is a method used for paper production and for example a method using a cylinder drying device, a Yankee drying device, hot air drying device, a near-infrared heating device, or an infrared heating device is preferable.

Examples of the method of drying a slurry to form a sheet may include heat drying, air drying, and vacuum drying. Pressurization can be applied in parallel with the drying. The heating temperature is preferably about 50°C to 250°C. If the heating temperature is within the above-described temperature range, drying can be completed in a short time, and discoloration and coloration can be suppressed. The applied pressure is preferably 0.01 MPa to 5 MPa. If the pressure is within the above-described pressure range, generation of cracks and wrinkles can be suppressed and the density of the fiber layer can be increased.

When an optional component is added to the fiber layer, it is preferable that the optional component is uniformly mixed into the fiber slurry to form a fiber layer, in which the optional component is dispersed. For example, if an oxygen-containing organic compound is mixed as an optional component into the fiber slurry, in a step of drying a thin layer of

the fiber slurry formed by papermaking or applying the fiber slurry so as to form a sheet, the drying moderately progresses, and generation of cracks and wrinkles on the fiber layer can be suppressed. As a result, a high-density transparent film-state fiber layer can be formed. The dehydration method used in the papermaking step is not particularly limited, and for example, a dehydration method conventionally used for paper production may be applied. Among others, a method comprising performing dehydration using a Fourdrinier, cylinder, tilted wire, or the like and then performing dehydration using a roll press is preferable. In addition, the drying method used in the papermaking step is not particularly limited, and for example, a drying method used for paper production may be applied. Among others, a drying method using a cylinder drying device, a Yankee drying device, hot air drying device, a near-infrared heating device, or an infrared heating device is more preferable.

(Adhesive layer)

The laminate of the present invention has an adhesive layer. The adhesive layer comprises a polymer as a main component, and the glass transition temperature of the polymer is lower than 170°C. Besides, the glass transition temperature of the polymer comprised in the adhesive layer may be obtained by identifying the species of the polymer comprised in the adhesive layer, and then calculating from the literature value. Otherwise, the glass transition temperature of the polymer comprised in the adhesive layer may also be calculated by cutting the adhesive layer out of the present laminate, and then measuring the glass transition temperature, using a dynamic mechanical analyzer.

Examples of the polymer having a glass transition temperature of lower than 170°C may include polyolefin, cyclic polyolefin, polycarbonate, polyethylene terephthalate, polyethylene naphthalate, polystyrene, and an acrylic polymer. Moreover, in order to obtain such a polymer having a glass transition temperature of lower than 170°C, when a monomer constituting the aforementioned polymer is polymerized, any given monomer may be incorporated and copolymerized, so that the glass transition temperature of the polymer may be adjusted.

The polymer having a glass transition temperature of lower than 170°C is preferably polycarbonate. The polymer having a glass transition temperature of lower than 170°C may also be a polycarbonate copolymer. In this case, examples of the monomeric component used in the polymerization of the polycarbonate copolymer may include bisphenol A, bisphenol AP, bisphenol AF, bisphenol B, bisphenol BP, bisphenol C, bisphenol E, bisphenol F, bisphenol G, bisphenol M, bisphenol S, bisphenol P, bisphenol PH, bisphenol TMC, bisphenol Z, bisphenoxyethanol fluorene, isosorbide, 4,4-biphenol, and tricyclodecane dimethanol.

The content of the polymer having a glass transition temperature of lower than 170°C is preferably 50% by mass or more, more preferably 60% by mass or more, further preferably 70% by mass or more, and particularly preferably 80% by mass or more, with respect to the total mass of the adhesive layer. On the other hand, the content of the polymer having a glass transition temperature of lower than 170°C is preferably 95% by mass or less, with respect to the total mass of the adhesive layer. Besides, when the adhesive layer comprises a polymer having a glass transition temperature of 170°C or higher, the content of the polymer is preferably 1% by mass or less.

The thickness of a single adhesive layer is, for example, preferably 0.1 μm or more, more preferably 0.5 μm or more, further preferably 1 μm or more, and particularly preferably 2 μm or more. On the other hand, the thickness of a single adhesive layer is preferably 100 μm or less, more preferably 50 μm or less, further preferably 30 μm or less, still further preferably 20 μm or less, particularly preferably 10 μm or less, and most preferably 7 μm or less. When the thickness of a single adhesive layer is within the above-described lower limit value or more, sufficient adhesiveness is obtained between the fiber layer and the resin layer. Herein, the thickness of the adhesive layer constituting the laminate is a value measured by cutting out a cross-section of the laminate using a band saw, a slide saw, or a laser processing machine, and then observing the cross-section under an optical or an electron microscope.

The adhesive layer may comprise an adhesion aid. Examples of the adhesion aid may include compounds comprising at least one type selected from an isocyanate group, a carbodiimide group, an epoxy group, an oxazoline group, an amino group and a silanol group, and organic silicon compounds. Among them, the adhesion aid is preferably at least one type selected from a compound containing an isocyanate group (an isocyanate compound) and an organic silicon compound. Examples of the organic silicon compound may include silane coupling agent condensates and silane coupling agents.

The content of the adhesion aid is preferably 0.1 part by mass or more, and more preferably 0.5 parts by mass or more, with respect to 100 parts by mass of the polymer comprised in the adhesive layer. On the other hand, the content of the adhesion aid is preferably 40 parts by mass or less, and more preferably 35 parts by mass or less, with respect to 100 parts by mass of the polymer comprised in the adhesive layer.

When the adhesion aid is an isocyanate compound, the content of the isocyanate compound is preferably 10 parts by mass or more, more preferably 15 parts by mass or more, and further preferably 18 parts by mass or more, with respect to 100 parts by mass of the polymer comprised in the adhesive layer. On the other hand, the content of the isocyanate compound is preferably 40 parts by mass or less, more preferably 35 parts by mass or less, and further preferably 30 parts by mass or less, with respect to 100 parts by mass of the polymer comprised in the adhesive layer.

When the adhesion aid is an organic silicon compound, the content of the organic silicon compound is preferably 0.1 part by mass or more, and more preferably 0.5 parts by mass or more, with respect to 100 parts by mass of the polymer comprised in the adhesive layer. On the other hand, the content of the organic silicon compound is preferably 10 parts by mass or less, and more preferably 5 parts by mass or less, with respect to 100 parts by mass of the polymer comprised in the adhesive layer.
When the adhesion aid is an isocyanate compound, the content of the isocyanate groups in the adhesive layer is preferably 0.5 mmol/g or more, more preferably 0.6 mmol/g or more, further preferably 0.8 mmol/g or more, and particularly preferably 0.9 mmol/g or more. On the other hand, the content of the isocyanate groups in the adhesive layer is preferably 3.0 mmol/g or less, more preferably 2.5 mmol/g or less, further preferably 2.0 mmol/g or less, and particularly preferably 1.5 mmol/g or less.
The adhesive layer can be formed, for example, by applying an adhesive layer-forming composition (resin coating solution) onto a fiber layer. Upon application of the adhesive layer-forming composition, a roll coater, a bar coater, a gravure coater, a die coater, a curtain coater, an air doctor coater, etc. can be used. Besides, since such an adhesive layer is a layer that covers the surface of the fiber layer, it may also be referred to as a surface treatment layer, at times. The adhesive layer may be a layer comprising the same type of polymer as the after-mentioned resin layer. Thus, in the present description, a resin layer that is directly laminated on the fiber layer is referred to as an adhesive layer, so that it is distinguished from a resin layer that is further laminated on the adhesive layer.

(Resin layer)

The laminate of the present invention has a resin layer. The resin layer comprises an amorphous resin. The resin layer is a layer comprising an amorphous resin as a main component, and the content of the amorphous resin is preferably 50% by mass or more, more preferably 70% by mass or more, further preferably 80% by mass or more, and particularly preferably 90% by mass or more, with respect to the total mass of the resin layer. Besides, the content of the amorphous resin may also be 100% by mass with respect to the total mass of the resin layer, and the resin layer may be a layer consisting of the amorphous resin.
The thickness of a resin layer is preferably 20 μm or more, more preferably 500 μm or more, further preferably 1.0 mm or more, still further preferably 2.0 mm or more, and particularly preferably 3.0 mm or more. In addition, the upper limit value of the entire thickness of the resin layer is not particularly limited, and for example, it may be 20 mm or less. Besides, when two or more resin layers are established in the laminate, the total thickness of individual layers is preferably within the above-described range. By setting the thickness of the resin layer to be within the above-described range, a laminate having a high elastic modulus is easily obtained. Herein, the thickness of the resin layer constituting the laminate is a value obtained by cutting out a cross-section of the laminate using a band saw, a slide saw, or a laser processing machine, and then observing the cross-section under an optical microscope, an electron microscope, a magnifying glass, or visual inspection.
In the present invention, since the fiber layer functions as a reinforcing layer for the resin layer, the thickness of the resin layer is preferably larger than the thickness of the fiber layer. When the total thickness of the resin layers is set to be P and the total thickness of the fiber layers is set to be Q, the P/Q value is preferably 1.2 or more, more preferably 1.5 or more, and further preferably 2.0 or more. On the other hand, the P/Q value is preferably 80 or less. Moreover, when the total thickness of the resin layers is set to be P and the thickness of the adhesive layer is set to be R, the P/R value is preferably 20 or more, more preferably 50 or more, and further preferably 80 or more. On the other hand, the P/R value is preferably 10000 or less.
Examples of the amorphous resin comprised in the resin layer may include polycarbonate, polyvinyl chloride, polystyrene, polymethyl methacrylate, an acrylonitrile-butadiene-styrene copolymer (ABS resin), polyetherimide, and polyamideimide. Among others, the amorphous resin is preferably polycarbonate, and is more preferably polycarbonate obtained by single polymerization. Moreover, the amorphous resin may be an alloy resin comprising a polycarbonate resin and an acrylic resin. In the case of using such an alloy resin, the bending elastic modulus of the laminate tends to be further increased, and the linear thermal expansion coefficient thereof tends to be decreased.
Examples of the polycarbonate constituting the resin layer may include an aromatic polycarbonate resin and an aliphatic polycarbonate resin. Specific polycarbonate resins are known, and examples thereof may include the polycarbonate resins described in Japanese Patent Publication (Kokai) No. 2010-023275 A.
Optional components other than synthetic resins may be comprised in the resin layer. Examples of such optional components include known components used in the resin film field, such as a filler, a pigment, a dye and an ultraviolet absorbing agent.
The resin layer established as an outermost layer may be a layer formed from a resin film. In this case, also the resin film preferably comprises the aforementioned amorphous resin. Moreover, the resin film may also comprise the aforementioned optional components.
The thickness of the resin film that forms the resin layer is preferably 50 μm or more, more preferably 100 μm

or more, and further preferably 150 μm or more. On the other hand, the thickness of the resin film is preferably 1000 μm or less, more preferably 500 μm or less, and further preferably 300 μm or less.

(Optional layers)

The laminate may further comprise an optional layer(s), as well as the aforementioned layers. Examples of such optional layer(s) may include an inorganic layer, a hard coat layer, an anti-fog layer, and an anti-glare layer.

< Inorganic layer >

The laminate may further have an inorganic layer. The inorganic layer may be established as an outermost layer of the laminate, or may also be established as a layer constituting the inner side of the laminate.

Substances constituting the inorganic layer are not particularly limited, and examples thereof may include aluminum, silicon, magnesium, zinc, tin, nickel, and titanium; oxides, carbides, nitrides, oxycarbides, oxynitrides, and oxycarbonitrides thereof; and mixtures thereof. From the viewpoint that high moisture resistance can be stably maintained, silicon oxide, silicon nitride, silicon oxycarbide, silicon oxynitride, silicon oxycarbonitride, aluminum oxide, aluminum nitride, aluminum oxycarbide, aluminum oxynitride, or mixtures thereof are preferable.

The method of forming an inorganic layer is not particularly limited. In general, methods of forming a thin film are roughly classified into Chemical Vapor Deposition (CVD) and Physical Vapor Deposition (PVD), either of which may be employed. Specific examples of CVD methods may include plasma CVD, which utilizes plasma, and Catalyst Chemical Vapor Deposition (Cat-CVD) including catalytically cracking material gas using a heated catalyzer. Specific examples of PVD methods may include vacuum deposition, ion plating, and sputtering.

As a method of forming an inorganic layer, Atomic Layer Deposition (ALD) can also be employed. The ALD method is a method of forming a thin film in an atomic layer unit by alternately supplying each of source gases of elements constituting the film to be formed to the surface on which a layer is to be formed. Although this method is disadvantageous in terms of a slow deposition rate, it can more smoothly cover even a surface having a complicated shape than the plasma CVD method and has the advantage that a thin film having fewer defects can be formed. The ALD method also has the advantage that this method can control a film thickness at a nano order and can relatively easily cover a wide surface, for example. The ALD method can be further expected to improve a reaction rate, to achieve a low-temperature process, and to decrease unreacted gas, by using plasma.

The thickness of the inorganic layer is not particularly limited, and for example, for the purpose of expressing moisture-proof performance, the thickness of the inorganic layer is preferably 5 nm or more, more preferably 10 nm or more, and further preferably 20 nm or more. From the viewpoint of transparency and flexibility, the thickness of the inorganic layer is preferably 1000 nm or less, more preferably 800 nm or less, and further preferably 600 nm or less.

(Method for producing laminate)

The present invention may relate to a method for producing a laminate, comprising a step of laminating a fiber layer comprising cellulose fibers with a fiber width of 1000 nm or less, an adhesive layer, and a resin layer in this order, and then hot-pressing the laminated layers. Herein, the resin layer comprises an amorphous resin, the adhesive layer comprises a polymer, and the glass transition temperature of the polymer is lower than 170°C.

The method for producing a laminate of the present invention comprises a step of laminating a fiber layer comprising cellulose fibers with a fiber width of 1000 nm or less, an adhesive layer, and a resin layer in this order, and then hot-pressing the laminated layers. Herein, the heating temperature applied in the hot-pressing step is preferably lower than 170°C. Besides, the heating temperature applied in the hot-pressing step is preferably 100°C or higher.

The pressure applied in the hot-pressing step is preferably 0.1 MPa or more, more preferably 0.5 MPa or more, further preferably 1 MPa or more, and particularly preferably 5 MPa or more. On the other hand, the pressure applied in the hot-pressing step is preferably 100 MPa or less, more preferably 50 MPa or less, and further preferably 20 MPa or less.

Before the hot-pressing step, a step of forming an adhesive layer on the fiber layer is preferably established. In the step of forming an adhesive layer on the fiber layer, a resin coating solution for forming an adhesive layer is preferably applied onto the fiber layer (ultrafine cellulose fiber-containing sheet) formed by the aforementioned method, so as to form an adhesive layer. Alternatively, in the step of forming an adhesive layer on the fiber layer, a previously formed adhesive layer may be bonded on the fiber layer (ultrafine cellulose fiber-containing sheet) formed by the aforementioned method.

In the method for producing a laminate of the present invention, a hot-pressing step may be established, for example, after adhesive layers are laminated on both surfaces of the fiber layer, and then, a resin layer is laminated on each adhesive layer to create a configuration of a resin layer/an adhesive layer/a fiber layer/an adhesive layer/a resin

layer. In this case, the area of the resin layers may be equal to the area of the fiber layer, or may also be larger than the area of the fiber layer. For example, by setting the area of the two resin layers disposed on outermost layers to be larger than the area of the fiber layer in the configuration of a resin layer/an adhesive layer/a fiber layer/an adhesive layer/a resin layer, it becomes possible for the two resin layers disposed on the outermost layers to adjoin with each other at the ends thereof. Thereby, in the laminate, the fiber layer is in a state in which it is encapsulated into the amorphous resin. Besides, in the hot-pressing step, a resin film may be used instead of the resin layer. Examples of the resin constituting such a resin film may include the same resins as those constituting the aforementioned resin layer.

As mentioned above, the laminate of the present invention is preferably obtained via a hot-pressing step. In the above-described step, since the thickness of the entire laminate can be increased, it also becomes possible to obtain a laminate with a large thickness, which has not been existed in the past. In addition, in the laminate obtained via a hot-pressing step, a high elastic modulus (bending elastic modulus) and a low linear thermal expansion coefficient can be easily achieved, and further, the laminate can have both excellent design and durability.

(Intended use)

The laminate of the present invention is transparent, is excellent in terms of mechanical strength and dimensional stability, and can exhibit excellent durability even under high humidity conditions. Hence, the laminate of the present invention is preferably used in optical components and substrates in various types of display devices, substrates for electronic devices, components for home appliances, window materials for various types of vehicles and buildings, interior materials, exterior materials, solar cell materials, etc.

## Examples

Hereinafter, the features of the present invention will be more specifically described with reference to Examples and Comparative Examples. The materials, used amounts, proportions, treatment content, treatment procedures, and the like shown in the following Examples can be appropriately changed to the extent that such changes do not depart from the spirit of the present invention. Therefore, the scope of the present invention should not be construed as being limited by the following specific examples.

< Production Example 1 >

[Phosphorylation treatment]

The broad-leaf dissolving pulp (dry sheet) manufactured by Oji Paper Co., Ltd. was used as a raw material pulp. A phosphorylation treatment was performed on this raw material pulp as follows. First, a mixed aqueous solution of ammonium dihydrogen phosphate and urea was added to 100 parts by mass (absolute dry mass) of the above raw material pulp, and the obtained mixture was adjusted to result in 45 parts by mass of the ammonium dihydrogen phosphate, 120 parts by mass of the urea and 150 parts by mass of water, so as to obtain a chemical solution-impregnated pulp. Subsequently, the obtained chemical solution-impregnated pulp was heated with a hot air drying device of 165°C for 250 seconds, so that phosphoric acid groups were introduced into cellulose in the pulp, thereby obtaining a phosphorylated pulp.

[Washing treatment]

Subsequently, a washing treatment was performed on the obtained phosphorylated pulp. The washing treatment was carried out by repeating the operation to pour 10 L of ion exchange water onto 100 g (absolute dry mass) of the phosphorylated pulp to obtain a pulp dispersed solution, which was then uniformly dispersed by stirring, followed by filtration and dehydration. The washing was terminated at a time point at which the electric conductivity of the filtrate became 100 μS/cm or less.

[Neutralization treatment]

Subsequently, a neutralization treatment was performed on the phosphorylated pulp after the washing as follows. First, the phosphorylated pulp after the washing was diluted with 10 L of ion exchange water, and then, while stirring, a 1 N sodium hydroxide aqueous solution was slowly added to the diluted solution to obtain a phosphorylated pulp slurry having a pH value of 12 or more and 13 or less. Thereafter, the phosphorylated pulp slurry was dehydrated, so as to obtain a neutralization-treated phosphorylated pulp. Subsequently, the above-described washing treatment was performed on the phosphorylated pulp after the neutralization treatment.

The infrared absorption spectrum of the thus obtained phosphorus oxoacid pulp was measured by FT-IR. As a result, absorption based on P = O of the phosphoric acid groups was observed around 1230 $cm^{-1}$, and thus, addition of the phosphoric acid groups to the pulp was confirmed. Moreover, the obtained phosphorylated pulp was analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorylated pulp was confirmed to have cellulose type I crystals.

[Defibration treatment]

Ion exchange water was added to the obtained phosphorylated pulp, so as to prepare a slurry having a solid concentration of 2% by mass. This slurry was treated using a wet atomization apparatus (manufactured by Sugino Machine Limited, Star Burst) at a pressure of 200 MPa six times, so as to obtain an ultrafine cellulose fiber-dispersed solution comprising ultrafine cellulose fibers. The fiber width of the ultrafine cellulose fibers was measured using a transmission electron microscope, and as a result, the fiber width was 2 to 5 nm. It was confirmed according to X-ray diffraction that these ultrafine cellulose fibers maintained cellulose type I crystals. It is to be noted that the amount of phosphoric acid groups (the first amount of dissociated acid, the amount of strongly acidic groups) measured by the measurement method described in the after-mentioned [Amount of phosphorus oxoacid groups] was 1.45 mmol/g. Besides, the total amount of dissociated acid was 2.45 mmol/g.

< Production Example 2 >

[TEMPO oxidation treatment]

As a raw material pulp, the needle bleached kraft pulp (undried) manufactured by Oji Paper Co., Ltd. was used. An alkali TEMPO oxidation treatment was performed on this raw material pulp as follows. First, the above-described raw material pulp corresponding to 100 parts by mass (dry mass), 1.6 parts by mass of TEMPO (2,2,6,6-tetramethylpiperidin-1-oxyl), and 10 parts by mass of sodium bromide were dispersed in 10000 parts by mass of water. Subsequently, an aqueous solution containing 13% by mass of sodium hypochlorite was added to the obtained solution, such that the amount of sodium hypochlorite became 3.8 mmol with respect to 1.0 g of the pulp, so as to start the reaction. During the reaction, the pH was kept at pH 10 or more and pH 10.5 or less by the dropwise addition of a 0.5 M sodium hydroxide aqueous solution. The time point at which change in the pH was no longer seen was considered to be termination of the reaction.

Subsequently, a washing treatment was performed on the obtained TEMPO-oxidized pulp. The washing treatment was carried out by repeating the operation of dehydrating the pulp slurry after the TEMPO oxidation to obtain a dehydrated sheet, then pouring 5000 parts by mass of ion exchange water onto the dehydrated sheet, which was then uniformly dispersed by stirring, and was then subjected to filtration and dehydration. The washing was terminated at a time point at which the electric conductivity of the filtrate became 100 μS/cm or less.

The obtained TEMPO-oxidized pulp was tested and analyzed using an X-ray diffractometer. As a result, it was confirmed that there were typical peaks at two positions near $2\theta$ = 14° or more and 17° or less, and near $2\theta$ = 22° or more and 23° or less. Thus, the TEMPO-oxidized pulp was confirmed to have cellulose type I crystals. Moreover, it was confirmed according to X-ray diffraction that these ultrafine cellulose fibers maintained cellulose type I crystals.

An ultrafine cellulose fiber-dispersed solution comprising ultrafine cellulose fibers was obtained in the same manner as that of Production Example 1, with the exception that the aforementioned TEMPO-oxidized pulp was used in [Defibration treatment] of Production Example 1. The fiber width of the ultrafine cellulose fibers in the ultrafine cellulose fiber-dispersed solution was measured using a transmission electron microscope, and as a result, the fiber width was 2 to 5 nm. It was confirmed according to X-ray diffraction that these ultrafine cellulose fibers maintained cellulose type I crystals. It is to be noted that the amount of carboxy groups measured by the method described in the after-mentioned [Amount of carboxy groups] was 1.30 mmol/g.

< Production Example 3 >

[Treatment with phosphorus acid]

A phosphorus acid esterified pulp and an ultrafine cellulose fiber-dispersed solution comprising ultrafine cellulose fibers were obtained by performing the same operations as those of Production Example 1, with the exception that 33 parts by mass of phosphorous acid (phosphonic acid) was used instead of ammonium dihydrogen phosphate in [Phosphorylation treatment] of Production Example 1.

The infrared absorption spectrum of the obtained phosphorus acid esterified pulp was measured by FT-IR. As

a result, absorption based on P = O of the phosphonic acid groups as tautomers of phosphorus acid groups was observed around 1210 $cm^{-1}$, and thus, addition of the phosphorus acid groups (phosphonic acid groups) to the pulp was confirmed. The fiber width of the ultrafine cellulose fibers was measured using a transmission electron microscope, and as a result, the fiber width was 2 to 5 nm. In addition, it was confirmed according to X-ray diffraction that the obtained ultrafine cellulose fibers maintained cellulose type I crystals. It is to be noted that the amount of phosphorus acid groups (the first amount of dissociated acid) measured by the measurement method described in the after-mentioned [Measurement of amount of phosphorus oxoacid groups] was 1.51 mmol/g, and that the total amount of dissociated acid was 1.54 mmol/g.

< Production Example 4 >

After completion of the washing treatment and the neutralization treatment performed on the phosphorylated pulp of Production Example 1, the following treatment was carried out to obtain a substituent-removed ultrafine cellulose fiber-dispersed solution comprising substituent-removed ultrafine cellulose fibers.

[Nitrogen removal treatment]

Ion exchange water was added to the phosphorylated pulp to prepare a slurry having a solid concentration of 4% by mass. To this slurry, 48% by mass of a sodium hydroxide aqueous solution was added, so that the pH thereof was adjusted to pH 13.4, and the slurry was then heated under conditions of a liquid temperature of 85°C for 1 hour. Thereafter, this pulp slurry was dehydrated, and thereafter, a pulp dispersed solution obtained by pouring 10 L of ion exchange water to 100 g (absolute dry mass) of the phosphorylated pulp was stirred so that the pulp was uniformly dispersed, followed by filtration dehydration. This operation was repeatedly carried out to remove redundant sodium hydroxide. The removal was terminated at a time point at which the electric conductivity of the filtrate became 100 μS/cm or less.

The infrared absorption spectrum of the thus obtained phosphorus oxoacid pulp was measured by FT-IR. As a result, absorption based on P = O of the phosphoric acid groups was observed around 1230 $cm^{-1}$, and thus, addition of the phosphoric acid groups to the pulp was confirmed.

[Defibration treatment]

Ion exchange water was added to the obtained phosphorylated pulp, so as to prepare a slurry having a solid concentration of 2% by mass. This slurry was treated using a wet atomization apparatus (manufactured by Sugino Machine Limited, Star Burst) at a pressure of 200 MPa six times, so as to obtain an ultrafine cellulose fiber-dispersed solution comprising ultrafine cellulose fibers. The fiber width of the ultrafine cellulose fibers was measured using a transmission electron microscope, and as a result, the fiber width was 2 to 5 nm. It was confirmed according to X-ray diffraction that the obtained ultrafine cellulose fibers maintained cellulose type I crystals. It is to be noted that the amount of phosphoric acid groups (the first amount of dissociated acid, the amount of strongly acidic groups) measured by the measurement method described in the after-mentioned [Amount of phosphorus oxoacid groups] was 1.35 mmol/g. Besides, the total amount of dissociated acid was 2.30 mmol/g.

[Substituent removal treatment (high-temperature heat treatment)]

An aqueous solution of 20% by mass of citric acid was added to the ultrafine cellulose fiber-dispersed solution, so that the pH of the dispersed solution was adjusted to pH 5.5. The obtained slurry was placed in a pressure-resistant vessel, and was then heated at a liquid temperature of 160°C for 15 minutes. At this time, heating was carried out, until the amount of phosphoric acid groups became 0.08 mmol/g. Generation of an ultrafine cellulose fiber aggregate was confirmed by this operation.

[Washing treatment of substituent-removed slurry]

To the heated slurry, ion exchange water was added in an amount equal to that of the slurry, so as to prepare a slurry having a solid concentration of about 1% by mass. The operation of stirring this slurry and then subjecting the resulting slurry to filtration dehydration was repeatedly carried out to wash the slurry. At a time point at which the electric conductivity of the filtrate became 10 μS/cm or less, ion exchange water was added again to prepare a slurry having a solid concentration of about 1% by mass, which was then left at rest for 24 hours. Thereafter, the filtration dehydration operation was further repeatedly carried out, and the washing was terminated at a time point at which the electric conductivity of the filtrate became 10 μS/cm or less again. Ion exchange water was added to the obtained ultrafine cellulose fiber aggregate, thereby obtaining a substituent-removed slurry. The solid concentration of this slurry was 1.7%

by mass.

[Uniform dispersion of substituent-removed slurry]

Ion exchange water was added to the obtained substituent-removed slurry to prepare a slurry having a solid concentration of 1.0% by mass, and the obtained slurry was then treated with a wet atomization apparatus (manufactured by Sugino Machine Limited, Star Burst) at a pressure of 200 MPa three times, so as to obtain a substituent-removed ultrafine cellulose fiber-dispersed solution comprising substituent-removed ultrafine cellulose fibers. The number average fiber width of the substituent-removed ultrafine cellulose fibers measured by the measurement method described in the after-mentioned [Measurement of fiber width] was 4 nm.

< Production Example 5 >

[Sulfation treatment]

A sulfated pulp and an ultrafine cellulose fibers-dispersed solution comprising ultrafine cellulose fibers were obtained by performing the same operations as those of Production Example 1, with the exceptions that 38 parts by mass of amidosulfuric acid (sulfamic acid) was used instead of ammonium dihydrogen phosphate in the phosphorylation treatment, and that the heating time was extended to 19 minutes.

The infrared absorption spectrum of the thus obtained sulfated pulp was measured by FT-IR. As a result, absorption based on sulfur oxoacid groups was observed around 1220 - 1260 $cm^{-1}$, and thus, addition of the sulfur oxoacid groups to the pulp was confirmed. In addition, it was confirmed according to X-ray diffraction that the obtained ultrafine cellulose fibers maintained cellulose type I crystals. It is to be noted that the amount of sulfur oxoacid groups measured by the measurement method described in the after-mentioned [Measurement of amount of sulfur oxoacid groups] was 1.12 mmol/g.

< Production Example 6 >

[Hypochlorous acid oxidation treatment]

A sheet made from a needle bleached kraft pulp (NBKP) (solid concentration: 90% by mass) was treated using a hand mixer (manufactured by OSAKA CHEMICAL Co., Ltd., Labo Milser PLUS) at a rotation number of 20000 rpm for 15 seconds, to obtain a cotton-state fluffing pulp (solid concentration: 90% by mass). Subsequently, sodium hypochlorite pentahydrate was added to ion exchange water to prepare an aqueous solution comprising 22% by mass (solid concentration) of sodium hypochlorite. Thereafter, 9000 parts by mass of 22% by mass of the sodium hypochlorite aqueous solution was added to 100 parts by mass of the cotton-state fluffing pulp, and the obtained mixture was then reacted in a warm bath for 2 hours, while adjusting the temperature to 30°C, so as to obtain a carboxy group-introduced pulp. During the reaction, a 1 N sodium hydroxide aqueous solution was added to the mixture, as appropriate, so that the pH value was maintained at pH 11.

[Washing treatment]

Subsequently, a washing treatment was performed on the obtained carboxy group-introduced pulp. The washing treatment was carried out by repeating the operation to pour ion exchange water onto the obtained carboxy group-introduced pulp to obtain a pulp dispersed solution, which was then uniformly dispersed by stirring, followed by filtration and dehydration. The washing was terminated at a time point at which the electric conductivity of the filtrate became 100 $\mu$S/cm or less.

Moreover, the obtained carboxy group-introduced pulp was tested and analyzed using an X-ray diffractometer. As a result, it was confirmed that there were typical peaks at two positions near $2\theta$ = 14° or more and 17° or less, and near $2\theta$ = 22° or more and 23° or less. Thus, the carboxy group-introduced pulp was confirmed to have cellulose type I crystals.

[Defibration treatment]

Ion exchange water was added to the obtained carboxy group-introduced pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope. As a result, the fiber width of the ultrafine cellulose fiber was 2 to 5 nm. Besides, the amount of carboxy groups in the obtained ultrafine cellulose fibers, which was measured by the after-mentioned measurement method, was 0.70 mmol/g.

< Production Example 7 >

[Maleic acid esterification treatment]

A sheet made from a needle bleached kraft pulp (NBKP) (solid concentration: 90% by mass) was treated using a hand mixer (manufactured by OSAKA CHEMICAL Co., Ltd., Labo Milser PLUS) at a rotation number of 20000 rpm for 15 seconds, to obtain a cotton-state fluffing pulp (solid concentration: 90% by mass). Subsequently, 100 parts by mass of the cotton-state fluffing pulp and 50 parts by mass of maleic acid anhydride were filled into an autoclave, and were then treated at 150°C for 2 hours to obtain a carboxy group-introduced pulp.

[Washing treatment]

Subsequently, a washing treatment was performed on the obtained carboxy group-introduced pulp. The washing treatment was carried out by repeating the operation to pour ion exchange water onto the obtained carboxy group-introduced pulp to obtain a pulp dispersed solution, which was then uniformly dispersed by stirring, followed by filtration and dehydration. The washing was terminated at a time point at which the electric conductivity of the filtrate became 100 $\mu$S/cm or less.

The obtained carboxy group-introduced pulp was measured by FT-IR, in terms of the infrared absorption spectrum. As a result, absorption based on carboxy groups was observed around 1580 and 1720 $cm^{-1}$, and thus, it was confirmed that the pulp was maleic acid esterified. Moreover, the obtained carboxy group-introduced pulp was tested and analyzed using an X-ray diffractometer. As a result, it was confirmed that there were typical peaks at two positions near $2\theta$ = 14° or more and 17° or less, and near $2\theta$ = 22° or more and 23° or less. Thus, the carboxy group-introduced pulp was confirmed to have cellulose type I crystals.

[Defibration treatment]

Ion exchange water was added to the obtained carboxy group-introduced pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope. As a result, the fiber width of the ultrafine cellulose fiber was 2 to 5 nm. Besides, the amount of carboxy groups in the obtained ultrafine cellulose fibers, which was measured by the after-mentioned measurement method, was 1.22 mmol/g.

< Production Example 8 >

[Carboxymethylation treatment]

The needle bleached kraft pulp manufactured by Oji Paper Co., Ltd. (solid content: 93% by mass; basis weight: 245 $g/m^2$, sheet-shaped; Canadian Standard Freeness (CSF) measured according to JIS P 8121-2: 2012 after defibration: 700 ml) was used as a raw material pulp. To 100 parts by mass (absolute dry mass) of this raw material pulp, a chemical solution consisting of 83 parts by mass of a 12 N NaOH aqueous solution, 175 parts by mass of sodium monochloroacetate and 313 parts by mass of ion exchange water (total: 571 parts by mass) was added, so as to obtain a chemical solution-impregnated pulp. Subsequently, the obtained chemical solution-impregnated pulp was heated in a hot bath at 95°C for 60 minutes, so that carboxymethyl groups (carboxy groups) were introduced into cellulose in the pulp, thereby obtaining a carboxy group-introduced pulp.

[Washing treatment]

Subsequently, a washing treatment was performed on the obtained carboxy group-introduced pulp. The washing treatment was carried out by repeating the operation to pour ion exchange water onto the obtained carboxy group-introduced pulp to obtain a pulp dispersed solution, which was then uniformly dispersed by stirring, followed by filtration

and dehydration. The washing was terminated at a time point at which the electric conductivity of the filtrate became 100 μS/cm or less.

Moreover, the obtained carboxy group-introduced pulp was tested and analyzed using an X-ray diffractometer. As a result, it was confirmed that there were typical peaks at two positions near 2θ = 14° or more and 17° or less, and near 2θ = 22° or more and 23° or less. Thus, the carboxy group-introduced pulp was confirmed to have cellulose type I crystals.

[Defibration treatment]

Ion exchange water was added to the obtained carboxy group-introduced pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope. As a result, the fiber width of the ultrafine cellulose fiber was 2 to 5 nm. Besides, the amount of carboxy groups in the obtained ultrafine cellulose fibers, which was measured by the after-mentioned measurement method, was 1.21 mmol/g.

< Production Example 9 >

[Carboxyethylation treatment]

The needle bleached kraft pulp manufactured by Oji Paper Co., Ltd. (solid content: 93% by mass; basis weight: 245 g/m$^2$, sheet-shaped; Canadian Standard Freeness (CSF) measured according to JIS P 8121-2: 2012 after defibration: 700 ml) was used as a raw material pulp. To 100 parts by mass (absolute dry mass) of this raw material pulp, a chemical solution consisting of 250 parts by mass of a 12 N NaOH aqueous solution, 163 parts by mass of 2-chloropropionic acid and 140 parts by mass of ion exchange water (total: 553 parts by mass) was added, so as to obtain a chemical solution-impregnated pulp. Subsequently, the obtained chemical solution-impregnated pulp was heated with a hot air drying device at 165°C for 10 minutes, so that carboxyethyl groups (carboxy groups) were introduced into cellulose in the pulp, thereby obtaining a carboxy group-introduced pulp.

[Washing treatment]

Subsequently, a washing treatment was performed on the obtained carboxy group-introduced pulp. The washing treatment was carried out by repeating the operation to pour ion exchange water onto the obtained carboxy group-introduced pulp to obtain a pulp dispersed solution, which was then uniformly dispersed by stirring, followed by filtration and dehydration. The washing was terminated at a time point at which the electric conductivity of the filtrate became 100 μS/cm or less.

[Neutralization treatment]

Subsequently, a neutralization treatment was performed on the carboxy group-introduced pulp after the washing, as follows. First, the carboxy group-introduced pulp after the washing was diluted with 10 L of ion exchange water, and then, while stirring, a 1 N sodium hydroxide aqueous solution was slowly added to the diluted solution to obtain a carboxy group-introduced pulp slurry having a pH value of 12 or more and 13 or less. Thereafter, the carboxy group-introduced pulp slurry was dehydrated and washed, so as to obtain a neutralized carboxy group-introduced pulp.

Moreover, the obtained carboxy group-introduced pulp was tested and analyzed using an X-ray diffractometer. As a result, it was confirmed that there were typical peaks at two positions near 2θ = 14° or more and 17° or less, and near 2θ = 22° or more and 23° or less. Thus, the carboxy group-introduced pulp was confirmed to have cellulose type I crystals.

[Defibration treatment]

Ion exchange water was added to the obtained carboxy group-introduced pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution comprising ultrafine cellulose fibers.

It was confirmed according to X-ray diffraction that these ultrafine cellulose fibers maintained cellulose type I

crystals. Moreover, the fiber width of the ultrafine cellulose fibers was measured using a transmission electron microscope. As a result, the fiber width of the ultrafine cellulose fiber was 2 to 5 nm. Besides, the amount of carboxy groups in the obtained ultrafine cellulose fibers, which was measured by the after-mentioned measurement method, was 1.41 mmol/g.

< Production Example 10 >

[Sulfoethylation treatment]

The needle bleached kraft pulp manufactured by Oji Paper Co., Ltd. (solid content: 93% by mass; basis weight: 245 g/$m^2$, sheet-shaped; Canadian Standard Freeness (CSF) measured according to JIS P 8121-2: 2012 after defibration: 700 ml) was used as a raw material pulp. To 100 parts by mass (absolute dry mass) of this raw material pulp, a chemical solution consisting of 180 parts by mass of a 2 N NaOH aqueous solution and 780 parts by mass of a sodium vinyl sulfonate aqueous solution having a concentration of 25% by mass (total: 960 parts by mass) was added, so as to obtain a chemical solution-impregnated pulp. Subsequently, the obtained chemical solution-impregnated pulp was heated with a hot air drying device at 165°C for 16 minutes, so that sulfoethyl groups (sulfone groups) were introduced into cellulose in the pulp, thereby obtaining a sulfoethyl group-introduced pulp (sulfone group-introduced pulp).

[Washing treatment]

Subsequently, a washing treatment was performed on the obtained sulfoethyl group-introduced pulp. The washing treatment was carried out by repeating the operation to pour ion exchange water onto the obtained sulfoethyl group-introduced pulp to obtain a pulp dispersed solution, which was then uniformly dispersed by stirring, followed by filtration and dehydration. The washing was terminated at a time point at which the electric conductivity of the filtrate became 100 $\mu$S/cm or less.

Moreover, the obtained sulfoethyl group-introduced pulp was tested and analyzed using an X-ray diffractometer. As a result, it was confirmed that there were typical peaks at two positions near 2$\theta$ = 14° or more and 17° or less, and near 2$\theta$ = 22° or more and 23° or less. Thus, the sulfoethyl group-introduced pulp was confirmed to have cellulose type I crystals.

[Defibration treatment]

Ion exchange water was added to the obtained sulfoethyl group-introduced pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope. As a result, the fiber width of the ultrafine cellulose fiber was 2 to 5 nm. Besides, the amount of sulfoethyl groups (the amount of sulfone groups) in the obtained ultrafine cellulose fibers, which was measured by the after-mentioned measurement method, was 1.48 mmol/g.

< Production Example 11 >

[Cationization treatment]

The needle bleached kraft pulp manufactured by Oji Paper Co., Ltd. (solid content: 93% by mass; basis weight: 245 g/$m^2$, sheet-shaped; Canadian Standard Freeness (CSF) measured according to JIS P 8121-2: 2012 after defibration: 700 ml) was used as a raw material pulp. To 100 parts by mass (absolute dry mass) of this raw material pulp, a chemical solution consisting of 180 parts by mass of a 1 N NaOH aqueous solution and 325 parts by mass of a cationizing agent (Catiomaster G, manufactured by Yokkaichi Chemical Company Limited, glycidyltrimethylammonium chloride, purity: 73.1% by mass, and water content percentage: 20.2% by mass) (total: 505 parts by mass) was added, so as to obtain a chemical solution-impregnated pulp. Subsequently, the obtained chemical solution-impregnated pulp was heated with a hot air drying device at 165°C for 12 minutes, so that cationic groups were introduced into cellulose in the pulp, thereby obtaining a cationic group-introduced pulp.

[Washing treatment]

Subsequently, a washing treatment was performed on the obtained cationic group-introduced pulp. The washing

treatment was carried out by repeating the operation to pour ion exchange water onto the obtained cationic group-introduced pulp to obtain a pulp dispersed solution, which was then uniformly dispersed by stirring, followed by filtration and dehydration. The washing was terminated at a time point at which the electric conductivity of the filtrate became 100 μS/cm or less.

[Neutralization treatment]

Subsequently, a neutralization treatment was performed on the cationic group-introduced pulp after the washing, as follows. First, the cationic group-introduced pulp after the washing was diluted with 10 L of ion exchange water, and then, while stirring, 1 N hydrochloric acid was slowly added to the diluted solution to obtain a cationic group-introduced pulp slurry having a pH value of 1 or more and 2 or less. Thereafter, the cationic group-introduced pulp slurry was dehydrated and washed, so as to obtain a neutralized cationic group-introduced pulp.

The cationic group-introduced pulp was tested and analyzed using an X-ray diffractometer. As a result, it was confirmed that there were typical peaks at two positions near $2\theta$ = 14° or more and 17° or less, and near $2\theta$ = 22° or more and 23° or less. Thus, the cationic group-introduced pulp was confirmed to have cellulose type I crystals.

[Defibration treatment]

Ion exchange water was added to the obtained cationic group-introduced pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope. As a result, the fiber width of the ultrafine cellulose fiber was 2 to 5 nm. Besides, the amount of cationic groups, which was measured by the after-mentioned method of measuring cationic groups, was 1.45 mmol/g.

< Example 1 >

[Sheet production]

Acetoacetyl group-modified polyvinyl alcohol (manufactured by Mitsubishi Chemical Corporation, Gosenex Z-200) was added to ion exchange water to a concentration of 12% by mass, and the obtained mixture was then stirred at 95°C for 1 hour for dissolution. According to the above procedures, a polyvinyl alcohol aqueous solution was obtained.

The ultrafine cellulose fiber-dispersed solution obtained in Production Example 1 and the above-described polyvinyl alcohol aqueous solution were each diluted with ion exchange water to result in a solid concentration of 1.0% by mass. Subsequently, 30 parts by mass of the diluted polyvinyl alcohol aqueous solution was mixed into 70 parts by mass of the diluted ultrafine cellulose fiber-dispersed solution to obtain a mixed solution. Further, the mixed solution was weighed, so that the finished basis weight of a sheet became 200 g/$m^2$, and was then spread onto a commercially available acrylic plate. Besides, in order to obtain the predetermined basis weight, a damming frame (inside dimension: 250 mm x 250 mm, height: 5 cm) was arranged on the acrylic plate. Thereafter, the solution was dried with a dryer at 70°C for 48 hours, and the resultant was then peeled from the above-described acrylic plate to obtain an ultrafine cellulose fiber-containing sheet. The thickness of the sheet was 130 μm.

[Formation of adhesive layer]

8.5 Parts by mass of a polycarbonate resin as a copolymer of multiple monomers, in which Yupizeta FPC-2136 manufactured by MITSUBISHI GAS CHEMICAL COMPANY, INC. was used as a base and the glass transition temperature was adjusted to be 130°C; 60 parts by mass of toluene; and 30 parts by mass of methyl ethyl ketone; were mixed with one another. Subsequently, 1.5 parts by mass of an isocyanate compound (manufactured by Asahi Kasei Chemicals Corporation; Duranate TPA-100) was added as an adhesion aid to the mixture, so as to obtain a resin coating solution. This resin coating solution was applied onto one surface of an ultrafine cellulose fiber-containing sheet (the surface contacted with the acrylic plate), using a bar coater. Thereafter, the resin coating solution was hardened by heating at 100°C for 1 hour, so as to form an adhesive layer (first adhesive layer). Subsequently, another adhesive layer (second adhesive layer) was also formed on the other surface of the ultrafine cellulose fiber-containing sheet by the same procedures as those described above. The thickness of the adhesive layer was 3 μm on each surface. By the above-described procedures, an adhesive layer-laminated sheet, in which adhesive layers were laminated on both surfaces of the ultrafine cellulose fiber-containing sheet, was obtained.

[Formation of amorphous resin layer]

The adhesive layer-laminated sheet was cut into a 150 mm square, and the square was then sandwiched between two polycarbonate plates each having a size of 170 mm square and a thickness of 2 mm, so that the centers thereof were aligned. Further, these were further sandwiched between two stainless steel plates each having a size of 200 mm square. Thereafter, the thus obtained product was inserted into MINI TEST PRESS (manufactured by TOYO SEIKI KOGYO CO., LTD., MP-WCH) that had been set to be normal temperature, and the temperature was then increased to 160°C over 3 minutes under a pressing pressure of 12 MPa. The product was retained in this state for 0.5 minutes, and the temperature was then decreased to 30°C over 1.5 minutes. By the above-described procedures, a laminate comprising an ultrafine cellulose fiber-containing sheet, adhesive layers, and an amorphous resin was obtained. In this laminate, the ends of the ultrafine cellulose fiber-containing sheet were encapsulated into the amorphous resin.

The layer configuration of the laminate obtained in Example 1 is the same as that shown in Figure 3. Besides, the cross-section is a section that passes through the center point of the laminate and appears when the laminate is cut in the thickness direction. In Figure 3, since the layer configuration is depicted so that it is easily understood, the thickness of each layer and the thickness ratio are not necessarily the same as those of the actual laminate.

< Example 2 >

A laminate comprising an ultrafine cellulose fiber-containing sheet, adhesive layers, and an amorphous resin was obtained in the same manner as that of Example 1, with the exception that the adhesive layer-laminated sheet was cut into a 170 mm square in [Formation of amorphous resin layer] of Example 1. In this laminate, the ultrafine cellulose fiber-containing sheet was exposed at the ends thereof.

The layer configuration of the laminate obtained in Example 2 is the same as that shown in Figure 2. Besides, the cross-section is a section that passes through the center point of the laminate and appears when the laminate is cut in the thickness direction. In Figure 2, since the layer configuration is depicted so that it is easily understood, the thickness of each layer and the thickness ratio are not necessarily the same as those of the actual laminate.

< Example 3 >

The adhesive layer-laminated sheet obtained in Example 1 was cut into a 150 mm square, and the square was then sandwiched between a polycarbonate plate having a size of 170 mm square and a thickness of 4 mm and a polycarbonate film having a size of 170 mm and a thickness of 200 μm, so that the centers thereof were aligned. Further, these were further sandwiched between two stainless steel plates each having a size of 200 mm square. At this time, the polycarbonate film was placed on the upper surface side. Thereafter, the thus obtained product was inserted into MINI TEST PRESS (manufactured by TOYO SEIKI KOGYO CO., LTD., MP-WCH) that had been set to be normal temperature, and the temperature was then increased to 160°C over 3 minutes under a pressing pressure of 12 MPa. The product was retained in this state for 0.5 minutes, and the temperature was then decreased to 30°C over 1.5 minutes. By the above-described procedures, a laminate comprising an ultrafine cellulose fiber-containing sheet, adhesive layers, and an amorphous resin was obtained. In this laminate, the ends of the ultrafine cellulose fiber-containing sheet were encapsulated into the amorphous resin.

The layer configuration of the laminate obtained in Example 3 is the same as that shown in Figure 7. Besides, the cross-section is a section that passes through the center point of the laminate and appears when the laminate is cut in the thickness direction. In Figure 7, since the layer configuration is depicted so that it is easily understood, the thickness of each layer and the thickness ratio are not necessarily the same as those of the actual laminate.

< Example 4 >

An ultrafine cellulose fiber-containing sheet and an adhesive layer-laminated sheet were obtained in the same manner as that of Example 1, with the exception that the mixed solution was weighed, so that the finished basis weight of a sheet became 100 g/m$^2$, and was then spread onto a commercially available acrylic plate in [Sheet production] of Example 1. This adhesive layer-laminated sheet was cut into two 150 mm squares, and then, using one polycarbonate plate having a size of 170 mm square and a thickness of 4 mm and two polycarbonate films each having a size of 170 mm and a thickness of 200 μm, they were laminated in the order of a polycarbonate film/an adhesive layer-laminated sheet/a polycarbonate plate/an adhesive layer-laminated sheet/a polycarbonate film, so that the centers thereof were aligned. Further, these were further sandwiched between two stainless steel plates each having a size of 200 mm square. Thereafter, the thus obtained product was inserted into MINI TEST PRESS (manufactured by TOYO SEIKI KOGYO CO., LTD., MP-WCH) that had been set to be normal temperature, and the temperature was then increased to 160°C over 3 minutes under a pressing pressure of 12 MPa. The product was retained in this state for 0.5 minutes, and the

temperature was then decreased to 30°C over 1.5 minutes. By the above-described procedures, a laminate comprising an ultrafine cellulose fiber-containing sheet, adhesive layers, and an amorphous resin was obtained. In this laminate, the ends of the ultrafine cellulose fiber-containing sheet were encapsulated into the amorphous resin.

The layer configurations of the laminates obtained in Examples 4 to 14 are the same as that shown in Figure 8. Besides, the cross-section is a section that passes through the center point of the laminate and appears when the laminate is cut in the thickness direction. In Figure 8, since the layer configuration is depicted so that it is easily understood, the thickness of each layer and the thickness ratio are not necessarily the same as those of the actual laminate.

< Example 5 >

A laminate comprising an ultrafine cellulose fiber-containing sheet, adhesive layers, and an amorphous resin was obtained in the same manner as that of Example 4, with the exception that a polycarbonate/acryl alloy resin plate having a size of 170 mm square and a thickness of 4 mm was used instead of the polycarbonate plate having a size of 170 mm square and a thickness of 4 mm in Example 4. In this laminate, the ends of the ultrafine cellulose fiber-containing sheet were encapsulated into the amorphous resin.

< Example 6 >

A laminate comprising an ultrafine cellulose fiber-containing sheet, adhesive layers, and an amorphous resin was obtained in the same manner as that of Example 4, with the exception that the mixed solution was weighed, so that the finished basis weight of a sheet became 200 $g/m^2$, and was then spread onto a commercially available acrylic plate in [Sheet production] of Example 4. In this laminate, the ends of the ultrafine cellulose fiber-containing sheet were encapsulated into the amorphous resin.

< Example 7 >

A laminate comprising an ultrafine cellulose fiber-containing sheet, adhesive layers, and an amorphous resin was obtained in the same manner as that of Example 5, with the exception that the mixed solution was weighed, so that the finished basis weight of a sheet became 200 $g/m^2$, and was then spread onto a commercially available acrylic plate in [Sheet production] of Example 5. In this laminate, the ends of the ultrafine cellulose fiber-containing sheet were encapsulated into the amorphous resin.

< Example 8 >

A laminate comprising an ultrafine cellulose fiber-containing sheet, adhesive layers, and an amorphous resin was obtained in the same manner as that of Example 6, with the exception that the ultrafine cellulose fiber-dispersed solution obtained in Production Example 2 was used instead of the ultrafine cellulose fiber-dispersed solution obtained in Production Example 1 in [Sheet production] of Example 6. In this laminate, the ends of the ultrafine cellulose fiber-containing sheet were encapsulated into the amorphous resin.

< Example 9 >

A laminate comprising an ultrafine cellulose fiber-containing sheet, adhesive layers, and an amorphous resin was obtained in the same manner as that of Example 6, with the exception that the ultrafine cellulose fiber-dispersed solution obtained in Production Example 3 was used instead of the ultrafine cellulose fiber-dispersed solution obtained in Production Example 1 in [Sheet production] of Example 6. In this laminate, the ends of the ultrafine cellulose fiber-containing sheet were encapsulated into the amorphous resin.

< Example 10 >

A laminate comprising an ultrafine cellulose fiber-containing sheet, adhesive layers, and an amorphous resin was obtained in the same manner as that of Example 6, with the exception that the substituent-removed ultrafine cellulose fiber-dispersed solution obtained in Production Example 4 was used instead of the ultrafine cellulose fiber-dispersed solution obtained in Production Example 1 in [Sheet production] of Example 6. In this laminate, the ends of the ultrafine cellulose fiber-containing sheet were encapsulated into the amorphous resin.

< Example 11 >

A laminate comprising an ultrafine cellulose fiber-containing sheet, adhesive layers, and an amorphous resin was obtained in the same manner as that of Example 6, with the exception that the method for producing a resin coating solution was modified as follows in [Formation of adhesive layer] of Example 6. In this laminate, the ends of the ultrafine cellulose fiber-containing sheet were encapsulated into the amorphous resin.

< Method for producing resin coating solution >

8.5 Parts by mass of a polycarbonate resin as a copolymer of multiple monomers, in which Yupizeta FPC-2136 manufactured by MITSUBISHI GAS CHEMICAL COMPANY, INC. was used as a base and the glass transition temperature was adjusted to be 155°C; 60 parts by mass of toluene; and 30 parts by mass of methyl ethyl ketone; were mixed with one another. Subsequently, 1.5 parts by mass of an isocyanate compound (manufactured by Asahi Kasei Chemicals Corporation; Duranate TPA-100) was added as an adhesion aid to the mixture, so as to obtain a resin coating solution.

< Example 12 >

A laminate comprising an ultrafine cellulose fiber-containing sheet, adhesive layers, and an amorphous resin was obtained in the same manner as that of Example 6, with the exception that the method for producing a resin coating solution was modified as follows in [Formation of adhesive layer] of Example 6. In this laminate, the ends of the ultrafine cellulose fiber-containing sheet were encapsulated into the amorphous resin.

< Method for producing resin coating solution >

8.5 Parts by mass of a polycarbonate resin as a copolymer of multiple monomers, in which Yupizeta FPC-2136 manufactured by MITSUBISHI GAS CHEMICAL COMPANY, INC. was used as a base and the glass transition temperature was adjusted to be 143°C; 60 parts by mass of toluene; and 30 parts by mass of methyl ethyl ketone; were mixed with one another. Subsequently, 1.5 parts by mass of an isocyanate compound (manufactured by Asahi Kasei Chemicals Corporation; Duranate TPA-100) was added as an adhesion aid to the mixture, so as to obtain a resin coating solution.

< Example 13 >

A laminate comprising an ultrafine cellulose fiber-containing sheet, adhesive layers, and an amorphous resin was obtained in the same manner as that of Example 6, with the exception that the method for producing a resin coating solution was modified as follows in [Formation of adhesive layer] of Example 6. In this laminate, the ends of the ultrafine cellulose fiber-containing sheet were encapsulated into the amorphous resin.

< Method for producing resin coating solution >

40 Parts by mass of an acryl-silica composite resin (manufactured by Arakawa Chemical Industries, Ltd.; Compoceran AC601; glass transition temperature: 120°C; solid concentration: 25%; containing methyl isobutyl ketone and methanol) was mixed with 60 parts by mass of methyl ethyl ketone to obtain a resin coating solution.

< Example 14 >

A laminate comprising an ultrafine cellulose fiber-containing sheet, adhesive layers, and an amorphous resin was obtained in the same manner as that of Example 6, with the exception that the treatment conditions for the hot pressing were modified as follows in [Formation of amorphous resin layer] of Example 6. In this laminate, the ends of the ultrafine cellulose fiber-containing sheet were encapsulated into the amorphous resin.

< Treatment conditions for hot pressing >

Two stainless steel plates each having a size of 200 mm square, which sandwiched between them, a laminate having a configuration of a polycarbonate film/an adhesive layer-laminated sheet/a polycarbonate plate/an adhesive layer-laminated sheet/a polycarbonate film, were inserted into MINI TEST PRESS (manufactured by TOYO SEIKI KOGYO CO., LTD., MP-WCH) that had been set to be normal temperature, and the temperature was then increased to 130°C over 3 minutes under a pressing pressure of 12 MPa. The product was retained in this state for 0.5 minutes, and the temperature was then decreased to 30°C over 1.5 minutes.

< Examples 15 to 21 >

A laminate comprising an ultrafine cellulose fiber-containing sheet, adhesive layers, and an amorphous resin was obtained in the same manner as that of Example 6, with the exception that the ultrafine cellulose fiber-dispersed solution obtained in each of Production Examples 5 to 11 was used instead of the ultrafine cellulose fiber-dispersed solution obtained in Production Example 1 in [Sheet production] of Example 6. In this laminate, the ends of the ultrafine cellulose fiber-containing sheet were encapsulated into the amorphous resin.

< Comparative Example 1 >

A polycarbonate plate having a size of 170 mm square and a thickness of 4 mm was sandwiched between two stainless steel plates each having a size of 200 mm. Thereafter, the thus obtained product was inserted into MINI TEST PRESS (manufactured by TOYO SEIKI KOGYO CO., LTD., MP-WCH) that had been set to be normal temperature, and the temperature was then increased to 170°C over 3 minutes under a pressing pressure of 12 MPa. The product was retained in this state for 0.5 minutes, and the temperature was then decreased to 30°C over 1.5 minutes. Thus, a polycarbonate plate was produced.

< Comparative Example 2 >

[Formation of adhesive layer]

8.5 Parts by mass of a polycarbonate resin as a copolymer of multiple monomers, in which Yupizeta FPC-2136 manufactured by MITSUBISHI GAS CHEMICAL COMPANY, INC. was used as a base and the glass transition temperature was adjusted to be 174°C; 60 parts by mass of toluene; and 30 parts by mass of methyl ethyl ketone; were mixed with one another. Subsequently, 1.5 parts by mass of an isocyanate compound (manufactured by Asahi Kasei Chemicals Corporation; Duranate TPA-100) was added as an adhesion aid to the mixture, so as to obtain a resin coating solution. This resin coating solution was applied onto one surface of the ultrafine cellulose fiber-containing sheet (the surface contacted with the acrylic plate) obtained in Example 1, using a bar coater. Thereafter, the resin coating solution was hardened by heating at 100°C for 1 hour, so as to form an adhesive layer (first adhesive layer). Subsequently, another adhesive layer (second adhesive layer) was also formed on the other surface of the ultrafine cellulose fiber-containing sheet by the same procedures as those described above. The thickness of the adhesive layer was 3 μm on each surface. By the above-described procedures, an adhesive layer-laminated sheet, in which adhesive layers were laminated on both surfaces of the ultrafine cellulose fiber-containing sheet, was obtained.

[Formation of amorphous resin layer]

The adhesive layer-laminated sheet was cut into a 150 mm square, and the square was then sandwiched between two polycarbonate plates each having a size of 170 mm square and a thickness of 2 mm, so that the centers thereof were aligned. Further, these were further sandwiched between two stainless steel plates each having a size of 200 mm square. Thereafter, the thus obtained product was inserted into MINI TEST PRESS (manufactured by TOYO SEIKI KOGYO CO., LTD., MP-WCH) that had been set to be normal temperature, and the temperature was then increased to 170°C over 3 minutes under a pressing pressure of 12 MPa. The product was retained in this state for 0.5 minutes, and the temperature was then decreased to 30°C over 1.5 minutes. By the above-described procedures, a laminate comprising an ultrafine cellulose fiber-containing sheet, adhesive layers, and an amorphous resin was obtained. In this laminate, the ends of the ultrafine cellulose fiber-containing sheet were encapsulated into the amorphous resin.

The layer configurations of the laminates obtained in Comparative Examples 2 and 3 are the same as that shown in Figure 3. Besides, the cross-section is a section that passes through the center point of the laminate and appears when the laminate is cut in the thickness direction. In Figure 3, since the layer configuration is depicted so that it is easily understood, the thickness of each layer and the thickness ratio are not necessarily the same as those of the actual laminate.

< Comparative Example 3 >

A laminate comprising an ultrafine cellulose fiber-containing sheet, adhesive layers, and an amorphous resin was obtained in the same manner as that of Comparative Example 2, with the exception that the treatment conditions for the hot pressing were modified as follows in [Formation of amorphous resin layer] of Comparative Example 2. In this laminate, the ends of the ultrafine cellulose fiber-containing sheet were encapsulated into the amorphous resin.

< Treatment conditions for hot pressing >

Two stainless steel plates each having a size of 200 mm square, which sandwiched between them, a polycarbonate plate, an adhesive layer-laminated sheet and a polycarbonate plate, were inserted into MINI TEST PRESS (manufactured by TOYO SEIKI KOGYO CO., LTD., MP-WCH) that had been set to be normal temperature, and the temperature was then increased to 200°C over 3 minutes under a pressing pressure of 12 MPa. The product was retained in this state for 0.5 minutes, and the temperature was then decreased to 30°C over 1.5 minutes.

< Comparative Example 4 >

[Formation of adhesive layer]

8.5 Parts by mass of a polycarbonate resin as a copolymer of multiple monomers, in which Yupizeta FPC-2136 manufactured by MITSUBISHI GAS CHEMICAL COMPANY, INC. was used as a base and the glass transition temperature was adjusted to be 174°C; 60 parts by mass of toluene; and 30 parts by mass of methyl ethyl ketone; were mixed with one another. Subsequently, 1.5 parts by mass of an isocyanate compound (manufactured by Asahi Kasei Chemicals Corporation; Duranate TPA-100) was added as an adhesion aid to the mixture, so as to obtain a resin coating solution. This resin coating solution was applied onto one surface of the ultrafine cellulose fiber-containing sheet (the surface contacted with the acrylic plate) obtained in Example 6, using a bar coater. Thereafter, the resin coating solution was hardened by heating at 100°C for 1 hour, so as to form an adhesive layer (first adhesive layer). Subsequently, another adhesive layer (second adhesive layer) was also formed on the other surface of the ultrafine cellulose fiber-containing sheet by the same procedures as those described above. The thickness of the adhesive layer was 3 μm on each surface. By the above-described procedures, an adhesive layer-laminated sheet, in which adhesive layers were laminated on both surfaces of the ultrafine cellulose fiber-containing sheet, was obtained.

[Formation of amorphous resin layer]

The adhesive layer-laminated sheet was cut into two 150 mm squares, and then, using one polycarbonate plate having a size of 170 mm square and a thickness of 4 mm and two polycarbonate films each having a size of 170 mm and a thickness of 200 μm, they were laminated in the order of a polycarbonate film/an adhesive layer-laminated sheet/a polycarbonate plate/an adhesive layer-laminated sheet/a polycarbonate film, so that the centers thereof were aligned. Further, these were further sandwiched between two stainless steel plates each having a size of 200 mm square. Thereafter, the thus obtained product was inserted into MINI TEST PRESS (manufactured by TOYO SEIKI KOGYO CO., LTD., MP-WCH) that had been set to be normal temperature, and the temperature was then increased to 170°C over 3 minutes under a pressing pressure of 12 MPa. The product was retained in this state for 0.5 minutes, and the temperature was then decreased to 30°C over 1.5 minutes. By the above-described procedures, a laminate comprising an ultrafine cellulose fiber-containing sheet, adhesive layers, and an amorphous resin was obtained. In this laminate, the ends of the ultrafine cellulose fiber-containing sheet were encapsulated into the amorphous resin.

The layer configurations of the laminates obtained in Comparative Examples 4 and 5 are the same as that shown in Figure 8. Besides, the cross-section is a section that passes through the center point of the laminate and appears when the laminate is cut in the thickness direction. In Figure 8, since the layer configuration is depicted so that it is easily understood, the thickness of each layer and the thickness ratio are not necessarily the same as those of the actual laminate.

< Comparative Example 5 >

A laminate comprising an ultrafine cellulose fiber-containing sheet, adhesive layers, and an amorphous resin was obtained in the same manner as that of Comparative Example 4, with the exception that the treatment conditions for the hot pressing were modified as follows in [Formation of amorphous resin layer] of Comparative Example 4. In this laminate, the ends of the ultrafine cellulose fiber-containing sheet were encapsulated into the amorphous resin.

< Treatment conditions for hot pressing >

Two stainless steel plates each having a size of 200 mm square, which sandwiched between them, a laminate having a configuration of a polycarbonate film/an adhesive layer-laminated sheet/a polycarbonate plate/an adhesive layer-laminated sheet/a polycarbonate film, were inserted into MINI TEST PRESS (manufactured by TOYO SEIKI KOGYO CO., LTD., MP-WCH) that had been set to be normal temperature, and the temperature was then increased to 200°C over 3 minutes under a pressing pressure of 12 MPa. The product was retained in this state for 0.5 minutes, and

the temperature was then decreased to 30°C over 1.5 minutes.

< Measurement >

The ultrafine cellulose fiber-dispersed solutions and the laminates obtained in Examples 1 to 14 and Comparative Examples 2 to 5 and the polycarbonate plate obtained in Comparative Example 1 were measured according to the following methods.

[Measurement of amount of phosphorus oxoacid group]

In the measurement of the amount of phosphorus oxoacid groups (the amount of phosphoric acid groups or phosphorus acid groups), first, ion exchange water was added to the ultrafine cellulose fibers as targets, so as to prepare a slurry having a solid concentration of 0.2% by mass. The amount of phosphorus oxoacid groups was measured by treating the obtained slurry with an ion exchange resin, and then performing titration using alkali.

In the treatment with the ion exchange resin, 1/10 by volume of a strongly acidic ion exchange resin (Amberjet 1024; manufactured by Organo Corporation; conditioned) was added to the aforementioned ultrafine cellulose fiber-containing slurry, and the resultant mixture was then shaken for 1 hour. Then, the mixture was poured onto a mesh having 90-μm apertures to separate the resin from the slurry.

In the titration using alkali, a change in the pH value shown by the ultrafine cellulose fiber-containing slurry after the treatment with the ion exchange resin the slurry was measured, while adding an aqueous solution of 0.1 N sodium hydroxide in each amount of 10 μL for every 5 seconds to the slurry. It is to be noted that the titration was carried out, while nitrogen gas was blown into the slurry from 15 minutes before initiation of the titration. According to this neutralization titration, in a curve formed by plotting pH values measured with respect to the amount of alkali added, two points are confirmed, in which an increment (a derivative of pH with respect to the amount of alkali added dropwise) becomes maximum. Regarding these two points, a maximum point of an increment firstly obtained after addition of alkali is referred to as a first end point, whereas a maximum point of an increment subsequently obtained after addition of alkali is referred to as a second end point (Figure 5). The amount of alkali required from initiation of the titration until the first end point becomes equal to the first amount of dissociated acid in the slurry used in the titration. In addition, the amount of alkali required from initiation of the titration until the second end point becomes equal to the total amount of dissociated acid in the slurry used in the titration. Besides, the value obtained by dividing the amount of alkali required from initiation of the titration until the first end point by a solid content (g) in the slurry to be titrated was defined to be the amount of phosphorus oxoacid groups (mmol/g).

[Measurement of amount of carboxy groups]

The amount of carboxy groups in the ultrafine cellulose fibers (that was equal to the amount of carboxy groups in a TEMPO-oxidized pulp) was measured by adding ion exchange water to an ultrafine cellulose fiber-dispersed solution comprising the ultrafine cellulose fibers as targets so that the content was set to be 0.2% by mass, then treating the obtained slurry with an ion exchange resin, and then performing titration using alkali. In the treatment with the ion exchange resin, 1/10 by volume of a strongly acidic ion exchange resin (Amberjet 1024; manufactured by Organo Corporation; conditioned) was added to the slurry comprising 0.2% by mass of ultrafine cellulose fibers, and the resultant mixture was then shaken for 1 hour. Then, the mixture was poured onto a mesh having 90-μm apertures to separate the resin from the slurry.

In the titration using alkali, a change in the pH value shown by the cellulose fiber-containing slurry after the treatment with the ion exchange resin was measured, while adding an aqueous solution of 0.1 N sodium hydroxide to the slurry. When a change in pH value was observed while adding the sodium hydroxide aqueous solution to the slurry, a titration curve as shown in Figure 6 was obtained. As shown in Figure 6, according to this neutralization titration, in a curve formed by plotting pH values measured with respect to the amount of alkali added, one point is observed, in which an increment (a derivative of pH with respect to the amount of alkali added dropwise) becomes maximum. This maximum point of an increment is referred to as a first end point. Herein, the region ranging from initiation of the titration to the first end point in Figure 6 is referred to as a first region. The amount of alkali required in the first region becomes equal to the amount of carboxy groups in the slurry used in the titration. The amount (mmol/g) of alkali required in the first region in the titration curve was divided by a solid content (g) in the ultrafine cellulose fiber-containing slurry as a titration target, so as to calculate the amount of carboxy groups introduced (mmol/g).

Besides, the aforementioned amount of carboxy groups introduced (mmol/g) indicates the amount of substituents per g (mass) of cellulose fibers when the counterions of carboxy groups are hydrogen ions ($H^+$).

(Measurement of amount of sulfur oxoacid groups/amount of sulfone groups)

The amount of sulfur oxoacid groups or the amount of sulfone groups in the ultrafine cellulose fibers was measured by subjecting the obtained cellulose fibers to wet ashing using perchloric acid and concentrated nitric acid, then appropriately diluting the resultant, and then measuring the amount of sulfur according to ICP-OES. The value obtained by dividing the obtained amount of sulfur by the absolute dry mass of the tested cellulose fibers was defined to be the amount of sulfur oxoacid groups/the amount of sulfone groups (mmol/g).

(Measurement of cationic groups)

With regard to the amount of cationic groups in the ultrafine cellulose fibers, a trace nitrogen analysis was carried out, and the value calculated according to the following equation was defined to be the amount of cationic groups (mmol/g).

$$\text{Amount of cationic groups [mmol/g]} = \text{(amount of nitrogen) [g]} / 14 \times 1000 / \text{(amount of tested cationic group-introduced ultrafine cellulose fibers) [g]}$$

[Measurement of fiber width]

The fiber width of ultrafine cellulose fibers was measured by the following method. Each ultrafine cellulose fiber-dispersed solution was diluted with water to a cellulose concentration of 0.01% by mass or more and 0.1% by mass or less, and was then casted onto a hydrophilized carbon grid film. After drying, it was stained with uranyl acetate, and was then observed under a transmission electron microscope (TEM; manufactured by JEOL; JEOL-2000EX). At that time, in the obtained image, any vertical or horizontal axis with the image width was created, and the magnification was then adjusted, so that 20 or more fibers intersected against the axis. The observation image satisfying this condition was obtained, and with respect to this image, two longitudinal axes and two horizontal axes were arbitrarily drawn per image. The widths of the fibers intersecting the axes were visually read. Three nonoverlapped observation images were photographed for each dispersed solution, and the values of the fiber widths of the fibers intersecting the two axes were thus read in each image (20 fibers or more x 2 x 3 = 120 fibers or more). Besides, from the thus obtained fiber width, the number average fiber width was calculated.

[Thickness]

The thickness of the laminate can be measured using a stylus thickness gauge (manufactured by Mahr; Millitron 1202 D).

< Evaluation >

The laminates obtained in Examples 1 to 14 and Comparative Examples 2 to 5 and the polycarbonate plate obtained in Comparative Example 1 were evaluated according to the following methods.

[Bending elastic modulus]

A test piece of 80 mm long x 10 mm wide was cut out of the laminate and the polycarbonate plate (Comparative Example 1). Besides, regarding the laminate, the test piece was cut out of a portion in which an ultrafine cellulose fiber-containing sheet was present. Using this test piece, a bending test was carried out in accordance with JIS K 7171: 2016 under conditions of a distance between fulcrums of 64 mm and a deflection rate of 2 mm/min, using a universal material testing machine (manufactured by A & D Company, Limited, Tensilon RTC-1250A). The test temperature was set to be 23°C. The bending elastic modulus (GPa) was calculated from the inclination of a stress-strain curve with a strain of between 0.0005 and 0.0025.

[Linear thermal expansion coefficient]

A test piece of 50 mm long x 10 mm wide was cut out of the laminate and the polycarbonate plate (Comparative Example 1). Besides, regarding the laminate, the test piece was cut out of a portion in which an ultrafine cellulose fiber-containing sheet was present. Using this test piece, a change amount in the length of the test piece was measured using

a thermomechanical analyzer (manufactured by Seiko Instruments Inc.; TMA/SS6100) under conditions of a temperature range of 23°C to 90°C and a temperature-increasing rate of 5°C/min, and a change amount in the length in the temperature range of 30°C to 80°C was divided by a change amount in the temperature to calculate a linear thermal expansion coefficient (ppm/K).

[Total light transmittance]

A test piece with a size of 50 mm square was cut out of the laminate and the polycarbonate plate (Comparative Example 1). Besides, regarding the laminate, the test piece was cut out of a portion in which an ultrafine cellulose fiber-containing sheet was present. Using this test piece, a total light transmittance was measured in accordance with JIS K 7361-1: 1997, using a haze meter (manufactured by MURAKAMI COLOR RESEARCH LABORATORY Co., Ltd.; HM-150).

[Haze]

A test piece with a size of 50 mm square was cut out of the laminate and the polycarbonate plate (Comparative Example 1). Besides, regarding the laminate, the test piece was cut out of a portion in which an ultrafine cellulose fiber-containing sheet was present. Using this test piece, a haze was measured in accordance with JIS K 7136: 2000, using a haze meter (manufactured by MURAKAMI COLOR RESEARCH LABORATORY Co., Ltd.; HM-150).

[Yellowness index (YI)]

A test piece with a size of 50 mm square was cut out of the laminate and the polycarbonate plate (Comparative Example 1). Besides, regarding the laminate, the test piece was cut out of a portion in which an ultrafine cellulose fiber-containing sheet was present. Using this test piece, a yellowness index was measured in accordance with JIS K 7373: 2006, using a color meter (manufactured by Suga Test Instruments Co., Ltd.; Colour Cute i).

[Appearance]

The laminate and the polycarbonate plate (Comparative Example 1) were observed, and the appearance thereof was evaluated according to the following criteria.

A: No significant abnormalities are found in the appearance.
B:Significant abnormalities such as coloration, foaming or deformation, are found in the appearance.

[Durability quality (water resistance)]

The laminate and the polycarbonate plate (Comparative Example 1) were immersed in ion exchange water for 24 hours, and thereafter, they were pulled up and were then wiped off the water from the surface thereof. After that, the appearance was observed and was evaluated according to the following criteria.

A: No significant abnormalities are found in the appearance and laminate configuration.
B: Minor abnormalities are found in the appearance, but laminate configuration is maintained.
C: Significant abnormalities are found in the appearance, and the laminate does not maintain laminate configuration.

[Durability quality (heat resistance)]

The laminate and the polycarbonate plate (Comparative Example 1) were left at rest in a constant-temperature machine set at 100°C for 500 hours. Thereafter, the appearance was observed, and was evaluated according to the following criteria.

A: No significant abnormalities are found in the appearance and laminate configuration.
B: Minor abnormalities are found in the appearance, but laminate configuration is maintained.
C: Significant abnormalities are found in the appearance, and the laminate does not maintain laminate configuration.

[Table 1]

| | | Example 1 | Example 2 | Example 3 | Example 4 | Example 5 | Example 6 | Example 7 |
|---|---|---|---|---|---|---|---|---|
| CNF modification method | [-] | Phophorylation | Phophorylation | Phophorylation | Phophorylation | Phophorylation | Phophorylation | Phophorylation |
| Basis weight of sheet comprising CNF (*1) | [g/rri] | 200 | 200 | 200 | 200 | 200 | 400 | 400 |
| Material of resin layer | [-] | Polycarbonate | Polycarbonate | Polycarbonate | Polycarbonate | Polycarbonate /Acrylic alloy | Polycarbonate | Polycarbonate /Acrylic alloy |
| Glass transition temperature of polymer in adhesive layer | [°C] | 130 | 130 | 130 | 130 | 130 | 130 | 130 |
| Hot-pressing temperature | [°C] | 160 | 160 | 160 | 160 | 160 | 160 | 160 |
| Condition of fiber layer end | [-] | Fiber layer end encapsulated in resin | Fiber layer end encapsulated in resin | Fiber layer end encapsulated in resin | Fiber layer end encapsulated in resin | Fiber layer end encapsulated in resin | Fiber layer end encapsulated in resin | Fiber layer end encapsulated in resin |
| Thickness of laminate | [mm] | 4.2 | 4.2 | 4.2 | 4.2 | 4.2 | 4.3 | 4.3 |
| Bendingelastic modulus | [GPa] | 2.4 | 2.4 | 2.9 | 3.2 | 3.4 | 4.5 | 4.5 |
| Linear thermal expansion coefficient | [ppm/K] | 62 | 62 | 65 | 62 | 60 | 38 | 36 |
| Total light transmittance | [%] | 87 | 87 | 87 | 87 | 87 | 86 | 86 |
| Haze | [%] | 1.1 | 1.1 | 1.1 | 1.1 | 1.0 | 1.3 | 1.3 |
| Yellowness index (YI) | [-] | 7.3 | 7.3 | 7.3 | 7.2 | 7.3 | 14.5 | 14.5 |

(continued)

| | | Example 1 | Example 2 | Example 3 | Example 4 | Example 5 | Example 6 | Example 7 |
|---|---|---|---|---|---|---|---|---|
| Appearance of laminate | [-] | A | A | A | A | A | A | A |
| Durability quality (water resistance) | [-] | A | B | A | A | A | A | A |
| Durability quality (heat resistance) | [-] | A | A | A | A | A | A | A |
| *1: The basis weight indicates a total basis weight, when a laminate comprises a plurality of sheets. | | | | | | | | |

[Table 2]

| | | Example 8 | Example 9 | Example 10 | Example 11 | Example 12 | Example 13 | Example 14 | Example 15 |
|---|---|---|---|---|---|---|---|---|---|
| CNF modification method | [-] | TEMPO oxidation | Phophorylation with phosphite | Phophorylation (Substituent removal) | Phophorylation | Phophorylation | Phophorylation | Phophorylation | Sulfation |
| Basis weight of sheet comprising CNF (*1) | [g/m$^2$] | 400 | 400 | 400 | 400 | 400 | 400 | 400 | 400 |
| Material of resin layer | [-] | Polycarbonate | Polycarbonate | Polycarbonate | Polycarbonate | Polycarbonate | Polycarbonate | Polycarbonate | Polycarbonate |
| Glass transition temperature of polymer in adhesive layer | [°C] | 130 | 130 | 130 | 155 | 143 | 120 | 130 | 130 |
| Hot-pressing temperature | [°C] | 160 | 160 | 160 | 160 | 160 | 160 | 130 | 160 |
| Condition of fiber layer end | [-] | Fiber layer end encapsulated in resin | Fiber layer end encapsulated in resin | Fiber layer end encapsulated in resin | Fiber layer end encapsulated in resin | Fiber layer end encapsulated in resin | Fiber layer end encapsulated in resin | Fiber layer end encapsulated in resin | Fiber layer end encapsulated in resin |
| Thickness of laminate | [mm] | 4.3 | 4.3 | 4.3 | 4.3 | 4.3 | 4.3 | 4.4 | 4.3 |
| Bending elastic modulus | [GPa] | 4.5 | 4.5 | 4.8 | 4.5 | 4.6 | 4.4 | 4.6 | 4.5 |
| Linear thermal exp ansion coefficient | [ppm/K] | 38 | 36 | 32 | 37 | 37 | 38 | 36 | 37 |
| Total light transmittance | [%] | 85 | 86 | 88 | 86 | 86 | 86 | 87 | 86 |
| Haze | [%] | 2.8 | 1.3 | 1.0 | 1.3 | 1.3 | 1.3 | 1.1 | 1.3 |
| Yellowness index (YI) | [-] | 26.0 | 14.6 | 2.6 | 14.5 | 14.3 | 14.5 | 7.3 | 15.5 |

(continued)

| | | Example 8 | Example 9 | Example 10 | Example 11 | Example 12 | Example 13 | Example 14 | Example 15 |
|---|---|---|---|---|---|---|---|---|---|
| Appearance of laminate | [-] | A | A | A | A | A | A | A | A |
| Durability quality (water resistance) | [-] | A | A | A | A | A | A | A | A |
| Durability quality (heat resistance) | [-] | A | A | A | A | A | B | B | A |

*1: The basis weight indicates a total basis weight, when a laminate comprises a plurality of sheets.

[Table 3]

| | | Example 16 | Example 17 | Example 18 | Example 19 | Example 20 | Example 21 |
|---|---|---|---|---|---|---|---|
| CNF modification method | [-] | Hypochlorous acid oxidation | Maleic acid esterification | Carboxymethylation | Carboxyethylation | Sulfoethylation | Cationization |
| Basis weight of sheet comprising CNF (*1) | [g/m$^2$] | 400 | 400 | 400 | 400 | 400 | 400 |
| Material of resin layer | [-] | Polycarbonate | Polycarbonate | Polycarbonate | Polycarbonate | Polycarbonate | Polycarbonate |
| Glass transition temperature of polymer in adhesive layer | [°C] | 130 | 130 | 130 | 155 | 143 | 120 |
| Hot-pressing temperature | [°C] | 160 | 160 | 160 | 160 | 160 | 160 |
| Condition of fiber layer end | [-] | Fiber layer end encapsulated in resin | Fiber layer end encapsulated in resin | Fiber layer end encapsulated in resin | Fiber layer end encapsulated in resin | Fiber layer end encapsulated in resin | Fiber layer end encapsulated in resin |
| Thickness of laminate | [mm] | 4.3 | 4.3 | 4.3 | 4.3 | 4.3 | 4.3 |
| Bending elastic modulus | [GPa] | 4.5 | 4.5 | 4.5 | 4.5 | 4.6 | 4.4 |
| Linear thermal expansion coefficient | [ppm/K] | 37 | 38 | 36 | 35 | 37 | 39 |
| Total light transmittance | [%] | 84 | 85 | 85 | 85 | 85 | 84 |
| Haze | [%] | 4.9 | 3.0 | 3.0 | 4.0 | 3.0 | 4.8 |
| Yellowness index (YI) | [-] | 30.0 | 15.0 | 15.0 | 16.0 | 18.0 | 15.0 |
| Appearance of laminate | [-] | A | A | A | A | A | A |
| Durability quality (waterresistance) | [-] | A | A | A | A | A | A |
| Durability quality (heat resistance) | [-] | A | A | A | A | A | A |

*1: The basis weight indicates a total basis weight, when a laminate comprises a plurality of sheets.

[Table 4]

| | | Comparative Example 1 | Comparative Example 2 | Comparative Example 3 | Comparative Example 4 | Comparative Example 5 |
|---|---|---|---|---|---|---|
| CNF modification method | [-] | - | Phophorylation | Phophorylation | Phophorylation | Phophorylation |
| Basis weight of sheet comprising CNF (*1) | [g/m$^2$] | - | 200 | 200 | 400 | 400 |
| Material of resin layer | [-] | - | Polycarbonate | Polycarbonate | Polycarbonate | Polycarbonate |
| Glass transition temperature of polymer in adhesive layer | [°C] | - | 174 | 174 | 174 | 174 |
| Hot-pressing temperature | [°C] | 170 | 170 | 200 | 170 | 200 |
| Condition of fiber layer end | [-] | - | Fiber layer end encapsulated in resin | Fiber layer end encapsulated in resin | Fiber layer end encapsulated in resin | Fiber layer end encapsulated in resin |
| Thickness of laminate | [mm] | 4.0 | 4.2 | 3.8 | 4.3 | 4.3 |
| Bending elastic modulus | [GPa] | 2.2 | 2.4 | 2.4 | 4.5 | 4.4 |
| Linear thermal expansion coefficient | [ppm/K] | 75 | 62 | 62 | 38 | 38 |
| Total light transmittance | [%] | 87 | 87 | 83 | 86 | 83 |
| Haze | [%] | 1.1 | 1.1 | 2.2 | 1.3 | 2.2 |
| Yellowness index (YI) | [-] | 1.7 | 7.3 | 19.3 | 14.4 | 20.3 |
| Appearance of laminate | [-] | A | A | B | A | B |
| Durability quality (water resistance) | [-] | A | A | A | A | A |
| Durability quality (heat resistance) | [-] | A | C | A | C | A |

*1: The basis weight indicates a total basis weight, when a laminate comprises a plurality of sheets.

In the laminates obtained in the Examples, a bending elastic modulus was improved and a linear thermal expansion coefficient was reduced. These laminates had favorable appearance and excellent durability quality. In contrast, in the laminates obtained in Comparative Example 2 and Comparative Example 4, in which the polymer comprised in the adhesive layer had a high glass transition point, durability quality (heat resistance) was deteriorated. In the laminates obtained in Comparative Example 3 and Comparative Example 5, in which the molding temperature was further increased, durability quality (heat resistance) was improved, but their appearance was significantly deteriorated due to coloration or foaming.

10 Fiber layer
20 Adhesive layer
30 Resin layer
40 Resin film layer
100 Laminate

## Claims

1. A laminate having a fiber layer comprising cellulose fibers with a fiber width of 1000 nm or less, an adhesive layer, and a resin layer in this order, wherein

   the resin layer comprises an amorphous resin, and
   the adhesive layer comprises a polymer, and the glass transition temperature of the polymer is lower than 170°C.

2. The laminate according to claim 1, wherein the amorphous resin is a polycarbonate.

3. The laminate according to claim 1 or 2, which has a thickness of 200 μm or more.

4. The laminate according to any one of claims 1 to 3, wherein the polymer is a polycarbonate.

5. The laminate according to any one of claims 1 to 4, which has a total light transmittance of 80% or more.

6. The laminate according to any one of claims 1 to 5, which has a haze of 5% or less.

7. The laminate according to any one of claims 1 to 6, which has a YI value of 15 or less.

8. The laminate according to any one of claims 1 to 7, which has a bending elastic modulus of 2.3 GPa or more.

9. The laminate according to any one of claims 1 to 8, which has a linear thermal expansion coefficient of 70 ppm/K or less.

10. The laminate according to any one of claims 1 to 9, which further has an adhesive layer and a resin layer on the other surface of the fiber layer.

11. The laminate according to claim 10, wherein the cellulose fibers are unevenly distributed in a region near the surface layer in the thickness direction of the laminate.

12. The laminate according to claim 10, wherein the cellulose fibers are unevenly distributed in the central region in the thickness direction of the laminate.

13. The laminate according to any one of claims 10 to 12, wherein the fiber layer is not exposed.

14. A method for producing a laminate, comprising

   laminating a fiber layer comprising cellulose fibers with a fiber width of 1000 nm or less, an adhesive layer, and a resin layer in this order, and then hot-pressing the laminated layers, wherein
   the resin layer comprises an amorphous resin, and
   the adhesive layer comprises a polymer, and the glass transition temperature of the polymer is lower than 170°C.

[Figure 1]

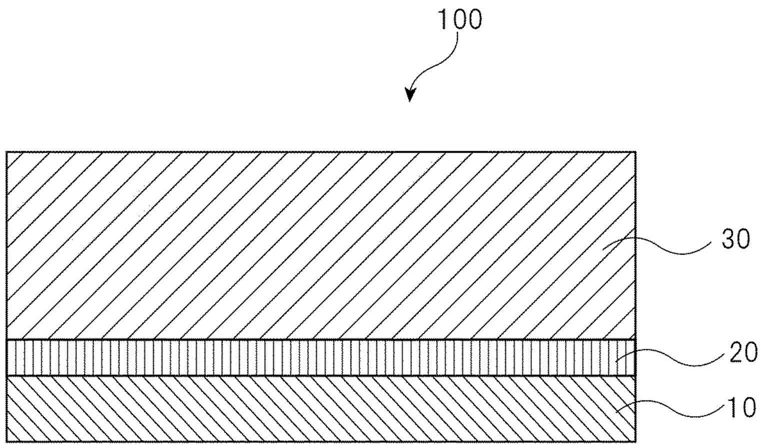


[Figure 2]

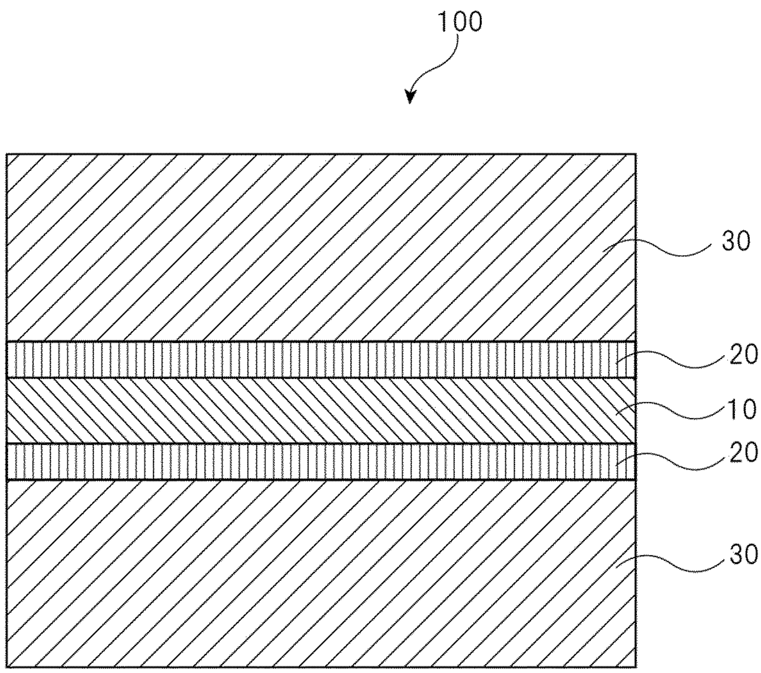

[Figure 3]

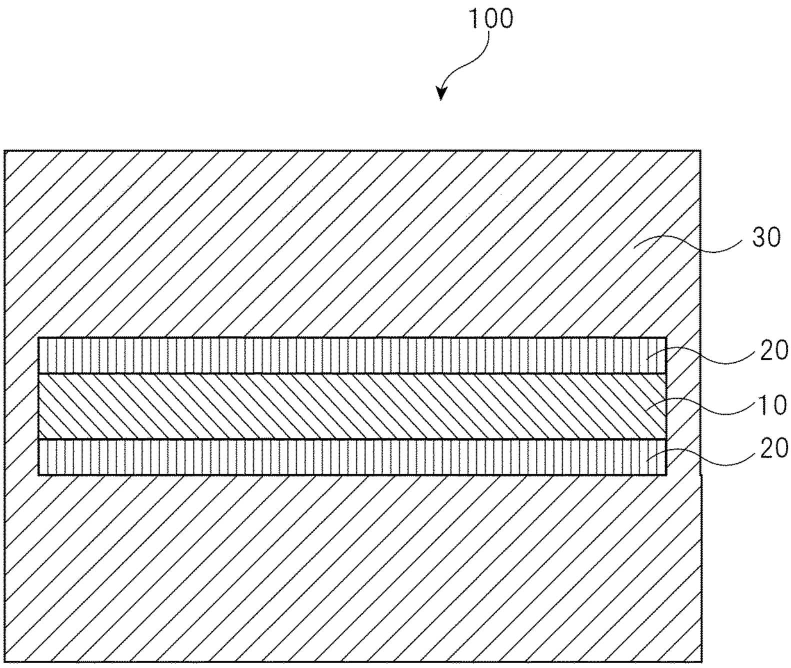

[Figure 4]

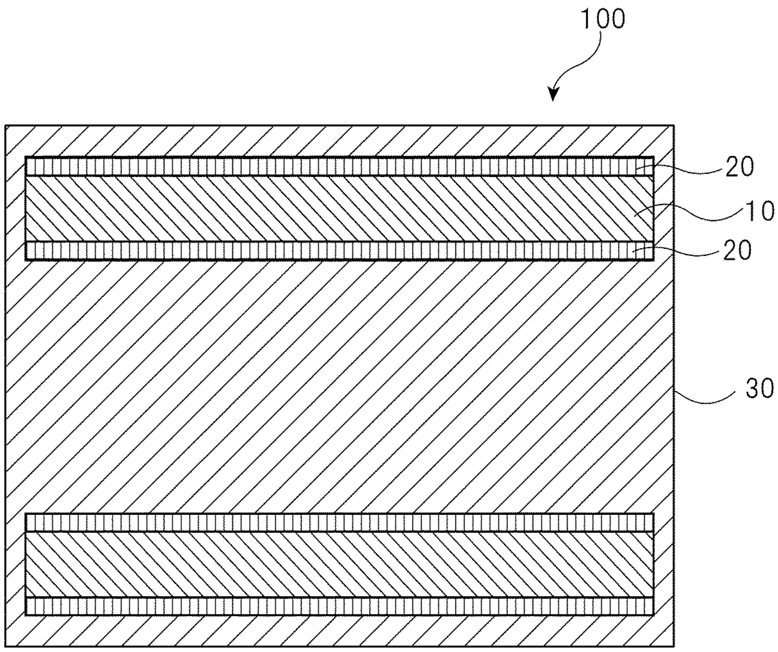

[Figure 5]

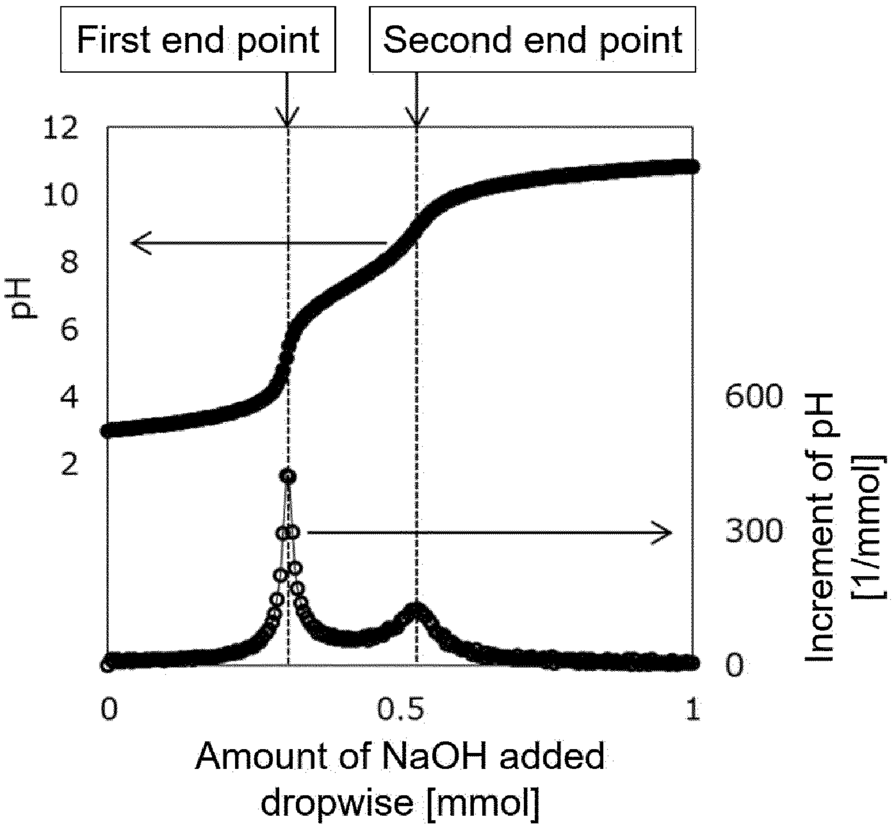
First end point
Second end point
12
10
8
6
4
2
pH
600
300
0
Increment of pH [1/mmol]
0
0.5
1
Amount of NaOH added dropwise [mmol]

[Figure 6]

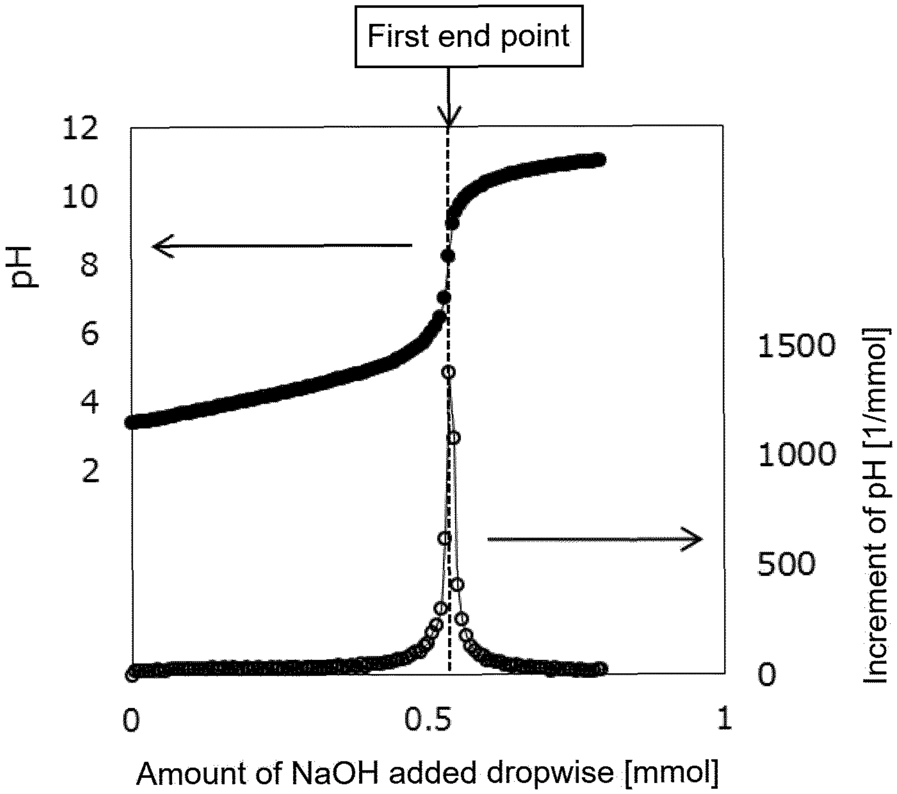
First end point
12
10
8
6
4
2
pH
1500
1000
500
0
Increment of pH [1/mmol]
0
0.5
1
Amount of NaOH added dropwise [mmol]

[Figure 7]

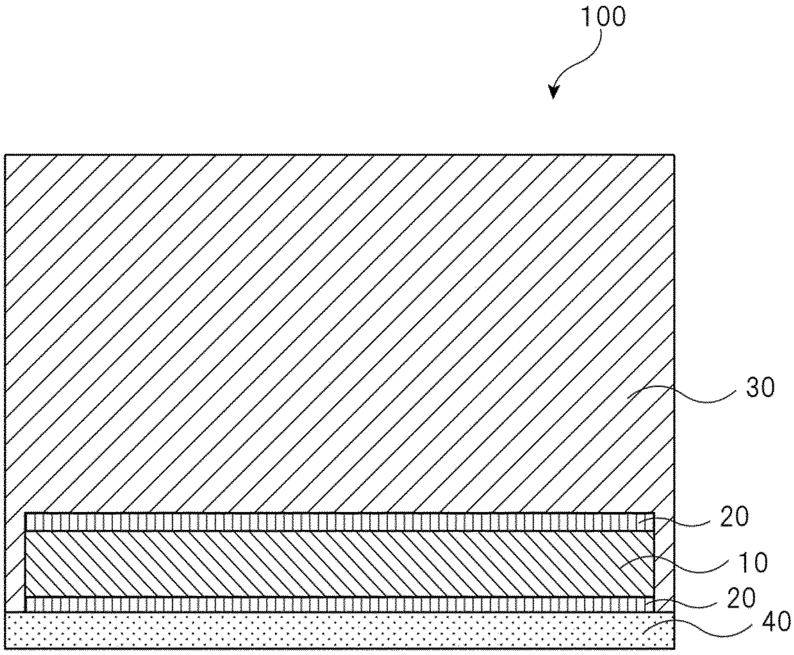

[Figure 8]

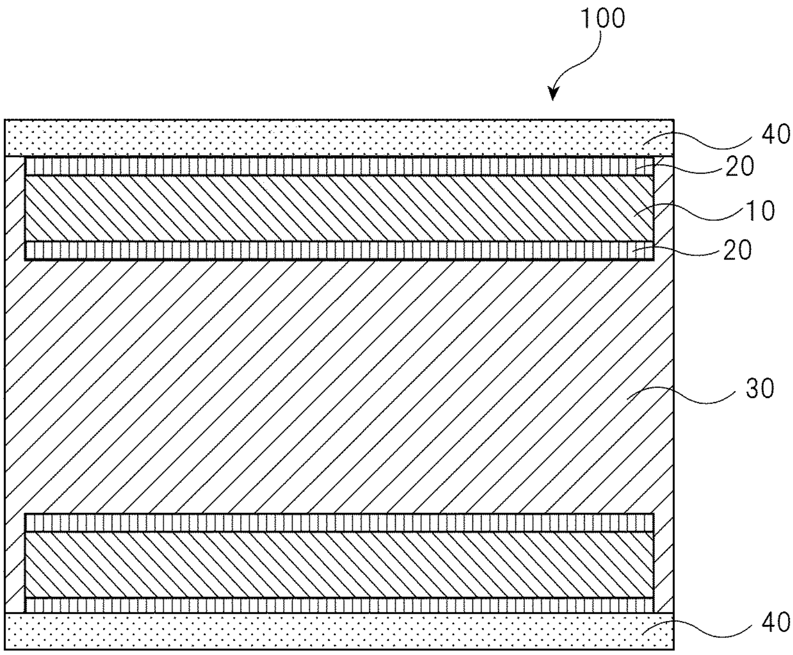

**INTERNATIONAL SEARCH REPORT**

International application No. **PCT/JP2021/048325**

**A. CLASSIFICATION OF SUBJECT MATTER**

***B32B 27/20***(2006.01)i
FI: B32B27/20

According to International Patent Classification (IPC) or to both national classification and IPC

**B. FIELDS SEARCHED**

Minimum documentation searched (classification system followed by classification symbols)

B32B1/00-43/00; D04H1/00-18/04; C09J1/00-5/10; C09J9/00-201/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2017/047632 A1 (OJI HOLDINGS CORP) 23 March 2017 (2017-03-23) claims 1, 9-10, paragraphs [0044]-[0135], [0164]-[0177], [0247]-[0251], [0257], [0268], examples A4, A5, table 2, fig. 1, 2, 5 | 1-14 |
| Y | 黒田　浩次, ポリカーボネートについて, 繊維工学, 1991, vol. 44, no. 5, pp. 28-36 p. 28, left column, lines 1-13, p. 29, left column, line 15 to p. 30, left column, line 17, p. 30, right column, line 44 to p. 31, right column, line 5, table 4, (KURODA, Hirotsugu. On polycarbonate. Journal of the Textile Machinery Society of Japan.) | 1-14 |
| Y | JP 2018-16066 A (TOYOTA CENTRAL RES & DEV) 01 February 2018 (2018-02-01) claim 1, paragraph [0006] | 4 |
| Y | JP 2019-116716 A (OJI HOLDINGS CORP) 18 July 2019 (2019-07-18) claims 1, 8-9, 13, 16-18, paragraphs [0114]-[0121], [0161]-[0173] | 7 |
| Y | JP 2020-168869 A (OJI HOLDINGS CORP) 15 October 2020 (2020-10-15) claim 1, paragraphs [0008], [0010]-[0011], [0028], [0106], fig. 1 | 13 |
| A | JP 2010-23275 A (MITSUBISHI CHEMICALS CORP) 04 February 2010 (2010-02-04) whole document | 1-14 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 February 2022** | **08 March 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2021/048325**

**C. DOCUMENTS CONSIDERED TO BE RELEVANT**

| Category* | Citation of document, with indication, where appropriate, of the relevant passages | Relevant to claim No. |
|---|---|---|
| A | JP 2015-17184 A (OJI HOLDINGS CORP) 29 January 2015 (2015-01-29)<br>whole document | 1-14 |

Form PCT/ISA/210 (second sheet) (January 2015)

**INTERNATIONAL SEARCH REPORT**
**Information on patent family members**

International application No.
**PCT/JP2021/048325**

| Patent document cited in search report | Publication date (day/month/year) | Patent family member(s) | Publication date (day/month/year) |
|---|---|---|---|
| WO 2017/047632 A1 | 23 March 2017 | US 2018/0264788 A1<br>claims 1, 9-10, paragraphs [0125]-[0236], [0268]-[0281], [0364]-[0369], [0378], [0392], examples A4, A5, table 2, fig. 1, 2, 5<br>EP 3351374 A1<br>CN 108136714 A<br>KR 10-2018-0053349 A | |
| JP 2018-16066 A | 01 February 2018 | (Family: none) | |
| JP 2019-116716 A | 18 July 2019 | US 2017/0183820 A1<br>claims, paragraphs [0127]-[0135], [0205]-[0223]<br>WO 2015/182438 A1<br>EP 3150762 A1<br>KR 10-2017-0012306 A<br>CN 106661840 A | |
| JP 2020-168869 A | 15 October 2020 | (Family: none) | |
| JP 2010-23275 A | 04 February 2010 | (Family: none) | |
| JP 2015-17184 A | 29 January 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012116043 A
- JP 2010023275 A
- WO 2017126432 A
- WO 2011013567 A


### Non-patent literature cited in the description


- **SEAGAL et al.** *Textile Research Journal,* 1959, vol. 29, 786